(19)

Europäisches
Patentamt
European
Patent Office
Office européen
des brevets

(11) **EP 1 734 669 B1**

(12) **EUROPEAN PATENT SPECIFICATION**

(45) Date of publication and mention
of the grant of the patent:
**25.07.2012 Bulletin 2012/30**

(51) Int Cl.:
*H04B 17/00* (2006.01)      *H04W 72/08* (2009.01)
*H04W 52/46* (2009.01)

(21) Application number: **06252979.7**

(22) Date of filing: **09.06.2006**

(54) **Resource management in multi-hop communication system**

Verwaltung von Betriebsmitteln im Mehrstreckenkommunikationssystem

Gestion de ressources dans un système de communication à bonds multiples

(84) Designated Contracting States:
**DE FR GB IT SE**

(30) Priority: **17.06.2005 EP 05253783**

(43) Date of publication of application:
**20.12.2006 Bulletin 2006/51**

(60) Divisional application:
**09173072.1 / 2 144 466**
**09173073.9 / 2 144 472**
**09173074.7 / 2 144 473**
**11165594.0 / 2 357 741**
**11165595.7 / 2 357 742**
**11165596.5 / 2 357 743**

(73) Proprietor: **Fujitsu Ltd.**
**Kawasaki-shi, Kanagawa 211-8588 (JP)**

(72) Inventor: **Hart, Michael John**
**London, W12 9LL (GB)**

(74) Representative: **Cooper-Rolfe, Elizabeth Louise et al**
**Haseltine Lake LLP**
**Lincoln House, 5th Floor**
**300 High Holborn**
**London WC1V 7JH (GB)**

(56) References cited:
**WO-A-2004/107693      WO-A1-01/50635**
**WO-A1-2005/064872      US-A1- 2005 063 356**

• ZHANG JINGMEI ET AL: "Adaptive optimal transmit power allocation for two-hop non-regenerative wireless relaying system", VEHICULAR TECHNOLOGY CONFERENCE, 2004. VTC 2004-SPRING. 2004 IEEE 59TH MILAN, ITALY 17-19 MAY 2004, PISCATAWAY, NJ, USA, IEEE, US, vol. 2, 17 May 2004 (2004-05-17), pages 1213-1217, XP010766105, DOI: DOI: 10.1109/VETECS.2004.1389025 ISBN: 978-0-7803-8255-8

**Description**

The present invention relates to a wireless communication system and related methods for transmitting a signal from a source apparatus to a destination apparatus, via at least one intermediate apparatus. In particular, the present invention relates to techniques which seek to improve the throughput of data in multi-hop communication systems.

It is known that the occurrence of propagation loss, or "pathloss", due to the scattering or absorption of a radio communication as it travels through space, causes the strength of a signal to diminish. Factors which influence the pathloss between a transmitter and a receiver include: transmitter antenna height, receiver antenna height, carrier frequency, clutter type (urban, sub-urban, rural), details of morphology such as height, density, separation, terrain type (hilly, flat). The pathloss L (dB) between a transmitter and a receiver can be modelled by:

$$L = b + 10n \log d \qquad\qquad (A)$$

Where d (metres) is the transmitter-receiver separation, b(db) and n are the pathloss parameters and the absolute pathloss is given by $l = 10^{(L/10)}$.

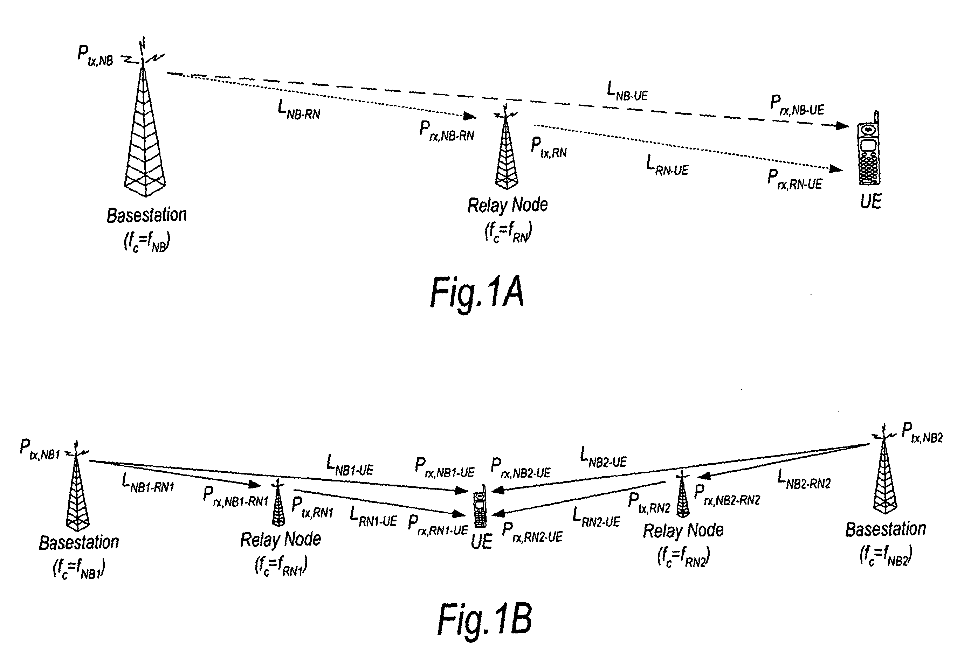

Figure 1A illustrates a single-cell two-hop wireless communication system comprising a base station (known in the context of 3G communication systems as "node-B" (NB)) a relay node (RN) and a user equipment (UE). In the case where signals are being transmitted on the downlink (DL) from a base station to a destination user equipment (UE) via the relay node (RN), the base station comprises the source apparatus (S) and the user equipment comprises the destination apparatus (D). In the case where communication signals are being transmitted on the uplink (UL) from user equipment (UE), via the relay node, to the base station, the user equipment comprises the source apparatus and the base station comprises the destination apparatus. The relay node is an example of an intermediate apparatus (I) and comprises: a receiver, operable to receive a signal from the source apparatus; and a transmitter, operable to transmit this signal, or a derivative thereof, to the destination apparatus.

Table I below gives some examples of the calculated pathloss of a signal being transmitted over the different links: source to destination (SD), source to intermediate (SI) and intermediate to destination (ID), in a multi-hop transmission system where b and n are assumed to remain the same over each of the links.

Table I

| | | Separation (metres) | | | Pathloss in dB | | | Absolute Pathloss | | |
|---|---|---|---|---|---|---|---|---|---|---|
| b(dB) | n | SD | SI | ID | SD | SI | ID | SD | SI | ID |
| 15.3 | 3.76 | 1000 | 500 | 500 | 128.1 | 116.8 | 116.8 | 6.46E12 | 4.77E11 | 4.77E11 |
| 15.3 | 3.76 | 1000 | 600 | 600 | 128.1 | 119.76 | 119.76 | 6.46E12 | 9.46E11 | 9.46E11 |
| 15.3 | 3.76 | 1000 | 700 | 700 | 128.1 | 122.28 | 122.28 | 6.46E12 | 1.69E12 | 1.69E12 |

The examples calculated above demonstrate that the sum of the absolute path losses experienced over the indirect link SI + ID may be less than the pathloss experienced over the direct link SD. In other words it is possible for:

$$L(SI) + L(ID) < L(SD) \qquad\qquad (B)$$

Splitting a single transmission link into two shorter transmission segments therefore exploits the non-linear relationship between pathloss verses distance. From a simple theoretical analysis of the pathloss using equation (A), it can be appreciated that a reduction in the overall pathloss (and therefore an improvement, or gain, in signal strength and thus data throughput) should be achieved if a signal is sent from a source apparatus to a destination apparatus via an intermediate apparatus (eg relay node), rather than being sent directly from the source apparatus to the destination apparatus. If implemented, multi-hop communication systems could potentially allow for a reduction in the transmit power of transmitters which facilitate wireless transmissions, which would lead to a reduction in interference levels as well as decreasing exposure to electromagnetic emissions.

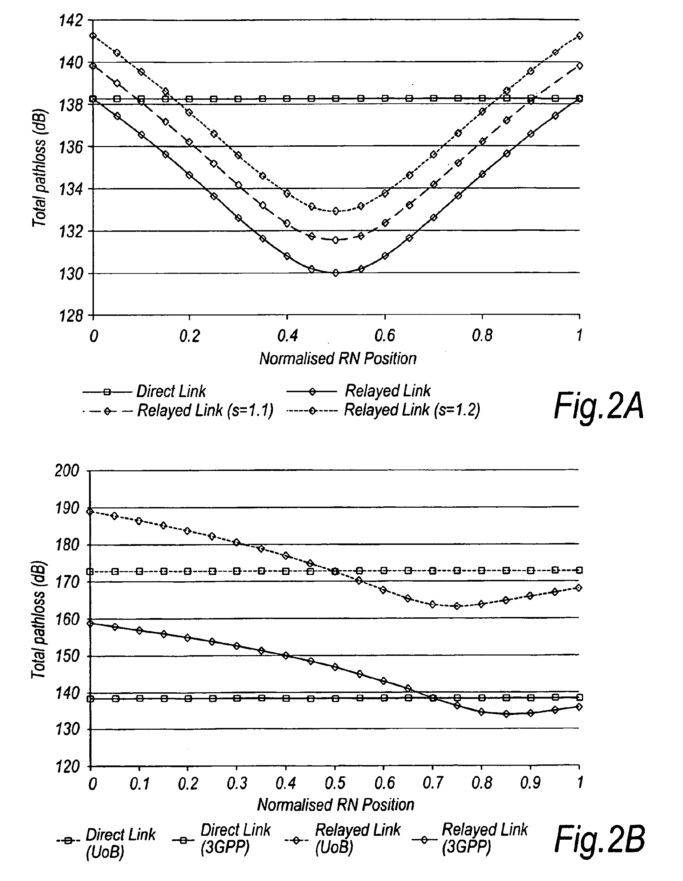

Clearly, due to the non-linear relationship between pathloss and distance, the position of an intermediate apparatus relative to the source and destination, will critically effect the potential gain that a multi-hop transmission may have as compared to a direct, or single-hop, transmission between the source and destination. This is illustrated in Figure 2A which shows a graphical representation of the theoretical gain which may be achieved by multi-hop transmissions, and plots the total power loss (dB) against the relative normalised position of the intermediate apparatus between the source apparatus and the destination apparatus.

Considering firstly the case where the intermediate node is positioned on the line of the direct link between the source and destination (in which case the path extension factor (s) = 1), it can be seen that the potential gain is reduced as the relay node is moved away from a mid-way position towards the source or destination apparatus. Likewise, as the position of the intermediate apparatus is moved away from the line of the direct link, thereby extending the total path length of the sum of the two transmission segments (and increasing the path extension factor to s=1.1, s=1.2 etc), it can be seen that the graphical region of theoretical gain is again reduced.

However, simulations carried out to test the applicability of multi-hop communication systems have revealed unexpectedly low gains in throughput of data. Indeed, the gains experienced are well below the potential gain suggested by a simple analysis based on the pathloss equation A. Consequently, and despite the potential advantages that multi-hop systems may demonstrate in terms of signal range extension, a possible reduction in the overall transmit power required to transmit a signal between a source and destination, and the connectivity of otherwise inaccessible nodes, wireless systems operators have been deterred from implementing multi-hop networks.

One of the reasons that such a discrepancy exists between the predicted gain and the simulated gain is that previous predictions have been based on the assumption that the pathloss parameters b and n are the same on all links. In actual fact, these values vary as a result of the antenna height of the source apparatus and destination apparatus as compared to the height of the relay node. Thus, a more realistic table of values is given below in table II. The values labelled 3GPP are obtained from adapting the model employed by the 3GPP to incorporate the fact that the antenna height of the intermediate apparatus is typically somewhere between the height of the antenna at the source and destination apparatus. The values labelled UoB are derived from modelling conducted by the University of Bristol based on a typical deployment in the city of Bristol.

Table II

| Pathloss Parameter | | Link | | |
|---|---|---|---|---|
| | | S-D | S-I | I-D |
| 3GPP | b (dB) | 15.3 | 15.5 | 28 |
| | n | 3.76 | 3.68 | 4 |
| UoB | b(dB) | 13.07 | 16.29 | 10.04 |
| | n | 4.88 | 4.64 | 5.47 |

The graphical illustration of total pathloss verses normalised relay node position using the pathloss parameters tabulated in table II is shown in Figure 2B. It can be seen that the perfect "bell-shape" of Figure 2A is not achieved when a more realistic set of pathloss parameters are used to calculate the variation in total pathloss as the position of a theoretical relay node is adjusted. Indeed, the region of gain is reduced and it is apparent that relatively small changes in the position of a relay node or a user equipment, leading to a change in the absolute pathloss over the communication link, will have a significant effect on the quality of a communication signal at the receiving apparatus. Thus, the positioning of an intermediate apparatus or relay node is critical if a gain is to be achieved by the occurrence of a multi-hop transmission, as compared to a direct transmission between the source and destination.

However, even when predictions are based on a more accurate reflection of the pathloss parameters likely to be encountered in the real world, simulations of multi-hop systems have revealed unexpectedly poor correspondence between the predicted and simulated gain.

US 2005/0063356 describes a method of operating a communication network, the network comprising a plurality of stations which are able to transmit data to and receive data from one another. The method comprises monitoring, at each station, the transmission path quality between that station and each other station with which that station can communicate. Data corresponding to the monitored path quality is recorded at each station, thereby permitting a transmission power value based on the relevant path quality data to be selected when transmitting data to another station. Thus, the probability of transmitting data to any selected station at an optimum power level is increased.

WO 2004/107693 relates to wireless networks using relaying. In the described method of performing communication in a two-hop wireless communication network, a transmitter, a receiver and at least one relay station are engaged in a communication session. The relay station forwards signals from a first link between the transmitter and the relay station to a second link between the relay station and the receiver. The forwarding performed by the relay station is adapted as a response to estimated radio channel characteristics of at least the first link.

According to a first aspect of the present invention there is provided a communication system comprising a source apparatus, a destination apparatus and at least one intermediate apparatus, wherein the source apparatus and the or each intermediate apparatus each comprise a transmitter, operable to transmit a communication signal or a signal derived therefrom, in a communication direction towards said destination apparatus, and wherein the destination apparatus and the, or each, intermediate apparatus each comprise a receiver, operable to receive said communication signal, or a signal derived therefrom, characterised in that said communication system comprises an indicator derivation means operable to derive an indicator of the quality of service (QoS) experienced by one or more of said receivers, and a determining means operable to determine a measure of, or a change in a measure of, the bandwidth allocated to one or more of said transmitters that will tend to attain or maintain a balance between a measure of the QoS experienced at the destination apparatus and a measure of the QoS experienced at the, at least one of the, intermediate apparatus(es).

Preferably, the communication system further comprises an indicator deviation detection means operable to detect a deviation in an indicator derived for the destination apparatus and/or in an indicator derived for the, or one of the, intermediate apparatus(es) from a desired value, wherein said determining means is operable, following the detection of such a deviation, to determine a measure of, or a change in a measure of, a bandwidth allocated to one or more of the transmitters that will tend to bring the indicator derived for said destination apparatus and/or for the intermediate apparatus, to said desired value.

Preferably, the determining means is operable, following the detection of a change in one said indicator derived for the destination apparatus, to i) determine a measure of, or a change in a measure of, a bandwidth allocated to the transmitter of the intermediate apparatus from which said destination apparatus is operable to receive the communication signal, or ii) determine a measure of, or a change in a measure of, a bandwidth allocated to the transmitter of the, or each, intermediate apparatus and the source apparatus that will tend to bring said indicator to said desired value.

Preferably, the determining means comprises a first calculation means operable, following detection of a deviation from said desired value, to calculate a new bandwidth allocation for the transmitter of the intermediate apparatus or for at least one of the intermediate apparatuses, that will tend to tend to bring the said indicator to said desired value.

According to a particularly preferred embodiment the communication system further comprises an imbalance detection means operable to detect an imbalance between one said indicator derived for each of at least two of: the destination apparatus and the, or each, intermediate apparatus; wherein said determining means is operable, following the detection of such an imbalance, to determine a measure of, or a change in a measure of, a bandwidth allocated to the transmitter of the source apparatus and/or to the transmitter of the, or at least one of the, intermediate apparatus (es) that will tend to reduce said imbalance. In this case, the determining means comprises a second calculation means operable, following the detection of such an imbalance, to calculate a new bandwidth allocation for the source apparatus and/or a new bandwidth allocation for at least one of the intermediate apparatuses that will tend to reduce said imbalance.

The indicator derivation means may comprise a first indicator derivation means operable to derive an indicator of the quality of a communication signal received at the destination apparatus and/or a second indicator derivation means operable to derive an indicator of the quality of a communication signal received at the, or at least one of the, intermediate apparatuses. The first indicator derivation means is preferably provided in one of said destination apparatus, said intermediate apparatus(es) or said source apparatus. The second indicator derivation means is preferably provided in one of said destination apparatus, said intermediate apparatus(es) or said source apparatus.

According to embodiments of the present invention, the source apparatus may be part of a base station, the base station being operable to transmit a communication signal, via the or each intermediate apparatus, to the destination apparatus. Alternatively, the destination apparatus is part of a base station, the source apparatus being operable to transmit a communication signal, via the or each intermediate apparatus, to the base station.

According to a preferred embodiment, the communication system further comprises a control means operable, following the determination of a measure of or a change in the measure of the bandwidth allocated to one or more of the transmitters, to issue a command to said source apparatus and/or to said intermediate apparatus(es), as the case may be, commanding a change in the bandwidth allocated to the transmitter thereof. The control means may be provided in the base station or in the, or at least one of the, intermediate apparatus(es).

According to a second aspect of the present invention there is provided a method of transmitting a communication signal from a source apparatus to a destination apparatus, via one or more intermediate apparatus, wherein the source apparatus and the or each intermediate apparatus each comprise a transmitter, operable to transmit a communication signal in a communication direction towards said destination apparatus, and wherein the destination apparatus and the, or each, intermediate apparatus each comprise a receiver, operable to receive said communication signal, or a signal derived therefrom, the method being characterised by the steps of: i) deriving one or more indicators of the quality of service (QoS) experienced at one or more of said receivers; ii) detecting a deviation in the, or one of the, said indicators from a desired value; iii) determining, following the detection of such a deviation, a measure of, or the change in the measure of, a bandwidth allocated to the source apparatus and/or to the, or at least one of the, intermediate apparatuses, that will tend to bring the said indicator to said desired value.

According to a third aspect of the present invention there is provided a method of transmitting a communication signal from a source apparatus to a destination apparatus, via one or more intermediate apparatus, wherein the source apparatus and the or each intermediate apparatus each comprise a transmitter, operable to transmit a communication signal in a communication direction towards said destination apparatus, and wherein the destination apparatus and the, or each, intermediate apparatus each comprise a receiver, operable to receive said communication signal, or a signal derived therefrom, the method being characterised by the steps of: i) deriving one or more indicators of the quality of service experienced by one or more of said receivers; ii) detecting an imbalance between one said indicator derived for each of at least two of: the destination apparatus and the, or each, intermediate apparatus; and iii) determining means operable, following the detection of such an imbalance, to determine a measure of, or a change in a measure of, a bandwidth allocated to the source apparatus and/or to determine a measure of, or a change in a measure of, a bandwidth allocated to the transmitter of at least one of the intermediate apparatuses, that will tend to reduce said imbalance.

The step of deriving an indicator of the quality of service experienced by said destination apparatus may be carried out in parts associated with the, or one of the, intermediate apparatus(es) or in parts associated with the base station. The step of deriving an indicator of the quality of service experienced by the, or one of the, intermediate apparatus (es) may be carried out in parts associated with the base station or in parts associated with the intermediate apparatus.

According to a fourth aspect of the present invention there is provided a base station comprising a transmitter operable to transmit a communication signal to a destination apparatus, via at least one intermediate apparatus, characterised in that the base station comprises a determining means operable to determine a measure of, or a change in a measure of, the bandwidth allocated to said base station or to the, or one of the, intermediate apparatuses, that will tend to attain or maintain a balance between:

i) a measure of the quality of service (QoS) experienced at the destination apparatus; and
ii) a measure of the quality of service (QoS) experienced at the, or at least one of the, intermediate apparatus(es).

According to a fifth aspect of the present invention there is provided a base station operable to receive, via at least one intermediate apparatus, a communication signal transmitted by a source apparatus, characterised in that the base station comprises a determining means operable to determine a measure of, or a change in a measure of, the bandwidth allocated to said source apparatus or to the, or one of the, intermediate apparatus(es), that will tend to attain or maintain a balance between:

i) a measure of the quality of service (QoS) experienced at the base station; and
ii) a measure of the quality of service (QoS) experienced at the, or at least one of the, intermediate apparatus(es).

The base station embodying the fourth or fifth aspects may further comprise indicator receiving means, operable to receive indicators of the quality of service experienced at said destination apparatus and/or the, or at least one of the, intermediate apparatus(es), and indicator deviation detection means, operable to detect a deviation in one said indicator from a desired value, wherein said determining means is operable, following detection of a deviation in one said indicator from said desired value, to determine a measure of, or a change in a measure of, the bandwidth allocated to said base station or to the, or one of the, intermediate apparatuses that will tend to bring said indicator to said desired value.

The base station embodying the fourth or fifth aspects may further comprise request receiving means, operable to receive a request for a new bandwidth allocation for the, or one of the, intermediate apparatus(es). The base station may alternatively or additionally comprise indicator derivation means, operable to derive an indicator of the quality of service (QoS) experienced at said destination apparatus and/or at the, or at least one of one of the, intermediate apparatus (es).

Indicator deviation detection means may be preferably provided in a base station embodying the fourth or fifth aspects of present invention. The indicator deviation detection means is operable to detect a deviation in one said indicator derived by said indicator derivation means, from a desired value, wherein said determining means is operable, following detection of a deviation in one said indicator from a desired value, to determine a measure of, or a change in a measure of, the bandwidth allocated to said base station or to the, or one of the, intermediate apparatuses that will tend to bring said indicator to said desired value.

Imbalance detection means may also be provided in a bas station embodying the present invention. The imbalance detection means is operable to detect an imbalance between an indicator derived for each of at least two of: the destination apparatus and the, or each, intermediate apparatus; wherein said determining means is operable, following the detection of such an imbalance, to determine a measure of, or a change in a measure of, a bandwidth allocated to the transmitters of the base station and/or at least one of the intermediate apparatuses that will tend to reduce said imbalance.

The determining means preferably comprises a first calculation means operable, following detection of a deviation in one said indicator from a desired value, to calculate the bandwidth to be allocated to said base station or to the, or one of the, intermediate apparatuses that will tend to bring said indicator to said desired value. Furthermore, the determining means preferably comprises a second calculation means operable, following detection of an imbalance by said imbalance detection means, to calculate a measure of, or a change in a measure of, a bandwidth allocated to the transmitters of: the base station and/or at least one of the intermediate apparatuses, that will tend to reduce said imbalance.

According to a sixth aspect of the present invention there is provided an intermediate apparatus for use in a multi-hop communication system, said intermediate apparatus comprising a transmitter an a receiver and being operable to receive a communication signal from a source apparatus or from a previous intermediate apparatus in a communication direction, and to transmit said communication signal or a signal derived therefrom, to a destination apparatus or a subsequent intermediate apparatus in a communication direction, characterised in that said intermediate apparatus further comprises:

a determining means operable to determine a measure of, or a change in a measure of, the bandwidth allocated to: said transmitter of the intermediate apparatus; and/or a transmitter of said source apparatus; and/or a transmitter of said previous intermediate apparatus, and/or a transmitter of a subsequent intermediate apparatus, that will tend to attain or maintain a balance between a measure of the quality of service (QoS) experienced at, at least two of:

a receiver of the destination apparatus;
the receiver of the intermediate apparatus;
a receiver of a previous intermediate apparatus; and
a receiver of a subsequent intermediate apparatus.

It will, of course, be appreciated that the communication signal actually received by the destination apparatus may be the communication signal transmitted by the source apparatus, or it may be a communication signal derived therefrom.

Thus, preferred embodiments of the present invention seek to maintain or achieve a "balance" in the Quality of Service (QoS) of a communication signal being received at each of the receivers in a multi-hop system in order that the throughput of data across each of the links is equal or near equal. The determining means is operable to determine a change in the resource (i.e. bandwidth) allocated to the apparatuses which are operable to transmit a communication signal present communication system embodying the present invention, in order to reduce or prevent substantial imbalance (i.e. achieve or maintain a substantial "balance") between the QoS of a communication signal received at the intermediate apparatus and a measure of the QoS of a communication signal received at the destination apparatus.

The existence of an imbalance arising in a communication system embodying the present invention may be apparent from a direct comparison of the QoS of a communication signal received at the destination apparatus and the QoS of a communication signal received at the, or one of the, intermediate apparatuses. Alternatively, an imbalance may be apparent when a comparison is made via a mapping function. Hence the situation may exist where measures of equal value do not equate to a balanced system, and likewise where measures of differing value may equate to a balanced system.

It is envisaged that embodiments of the present invention may be used, prior to deployment of a multi-hop system, to optimise the system and/or to substantially balance a measure of the quality of a communication signal received at the, or each intermediate apparatus and a measure of the quality of a communication signal received at the destination apparatus. It is also envisaged that embodiments of the present invention may be implemented within an existing multi-hop system in order to seek to achieve and maintain "balance" in a measure of the quality of a communication signal across all links. Thus, the present invention may be employed within a multi-hop communication system to establish a substantial "balance" between an indicator of the QoS (Quality of Service) at the destination apparatus and an indicator of the QoS, at the, or each, intermediate apparatus. The resource (i.e. bandwidth) allocated to the transmitters will advantageously be optimised initially with respect to a target received signal quality for one of the apparatuses operable to receive a communication signal in a multi-hop system. This will usually be the destination apparatus. Thus, an indicator of a measure of the variation of the quality of a communication signal received at the destination from a target received signal quality (= "variation from target" indicator), will advantageously be minimal when a system has been optimised according to embodiments of the present invention. Thereafter, if a change is detected in the variation from target indicator, which may be in a positive or negative sense, e.g. if the quality of the communication signal has deteriorated or improved, or if the target set for the apparatus has changed, the variation from target indicator will increase. In this case, embodiments of the present invention which enable a deviation of the variation from target indicator from a desired value to be detected, will advantageously seek to bring the variation from target indicator to the desired value.

Simulations of multi-hop communication systems embodying the present invention have been found to demonstrate a significant gain over systems in which a signal is transmitted directly to a destination apparatus. Indeed, the results of system level simulations carried out to test a preferred embodiment of the present invention indicate that a communication system which is "balanced" within the context of the present invention, can be expected to fulfil the advantages associated with multi-hop transmissions and to provide an improvement in the throughput of data.

It is believed that one explanation for the improved throughput demonstrated by preferred embodiments of the present invention is that they permit a reduction in the absolute transmit power required in a multi-hop system. This is considered in more detail below.

Starting from the principle already demonstrated above, that by splitting a single direct transmission link into two shorter transmission links, a reduction in the total pathloss experienced by a signal is achieved. Then, the total transmit power required to transmit a communication signal from a source apparatus to a destination apparatus via at least one intermediate apparatus, will be less than is required to transmit the communication signal directly between the source apparatus and the destination apparatus. Thus, less transmit power is needed in order to ensure that the destination apparatus (and possibly also the intermediate apparatus) receives a minimum or "target" signal quality. If no adjustment is made to the transmit power, then significant excess transmit power (i.e. transmit power exceeding that required to achieve a good, or target, signal quality at the destination apparatus and/or the intermediate apparatus) will result. Rather than serving to further increase the gain achieved by a multi-hop communication as compared to a direct communication between a source apparatus and a destination apparatus, this excess transmit power will merely increase interference levels leading to a deterioration in the quality of the communication link. This deterioration will tend to counteract the potential gain of a multi-hop system which accounts for the poor simulation results of previously considered multi-hop communication systems.

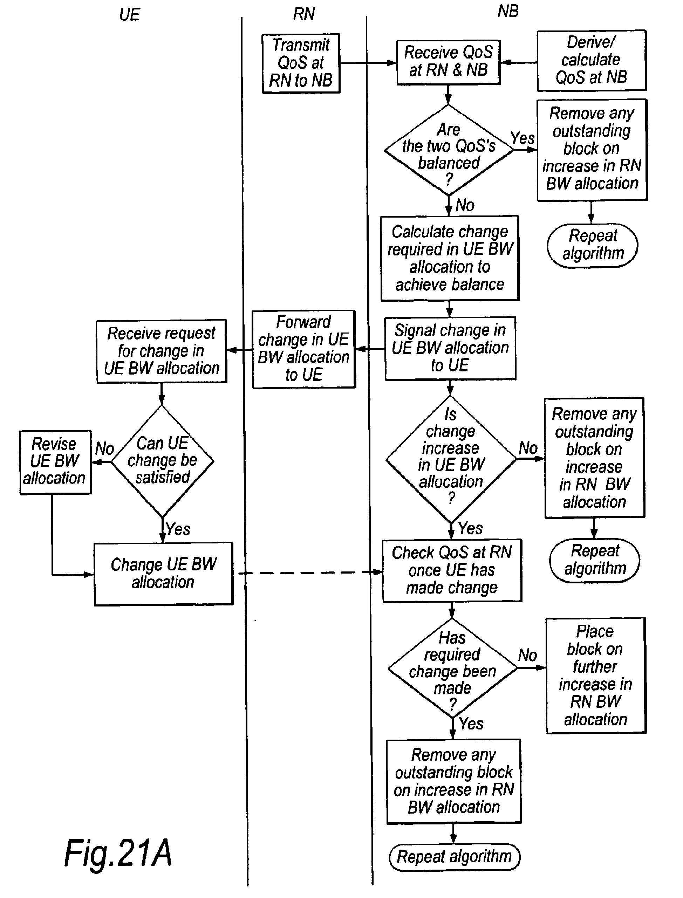

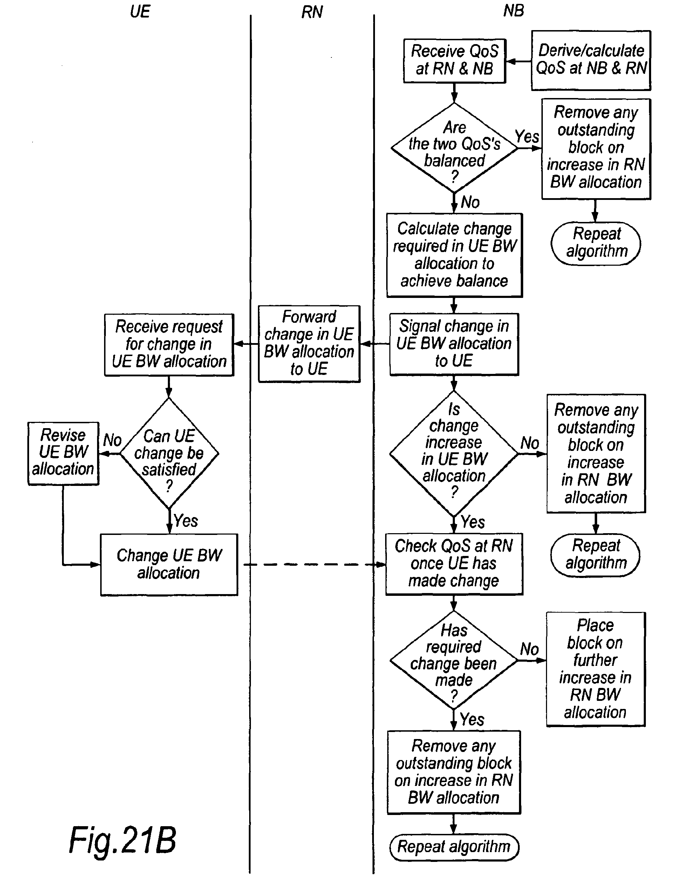

Furthermore, the overall throughput across a two-hop network (for example) is limited by the lower of: the number of data packets received at the intermediate apparatus and the number of data packets received at the destination apparatus. The number of data packets received at a receiver is dependent upon the quality of the communication link that terminates at that receiver. This may be reflected, for example, by a measure of the quality of service (QoS), (e.g. the throughput), a measure of the received signal strength (RSS) or a measure of the signal-to-interference plus noise ratio (SINR) at a receiver of a particular communication link. Thus, in effect, the receiver which receives the lowest quality communication signal within a multi-hop system forms a "bottle neck" for data packet transmission, thereby wasting capacity for data transfer on other links within the multi-hop system. An increase in the resource allocated at a transmitter, which does not serve to improve the lowest quality communication signal, will result in additional resource allocation. Consequently, a further degradation is experienced in the performance of the system. This is illustrated in Figures 21A and 21B which plot the variation of the gain in average packet throughput observed by users of a two-hop system compared to that observed for a single hop system, against the transmit power of the source apparatus (NB). Each graph includes four different plots, each representing a different transmit power of the intermediate apparatus. It can be seen that as the transmit power of the base station is increased beyond an optimal point, then a significant degradation in gain will be experienced despite the emission of more signal energy.

It can therefore be appreciated that the improvements made by preferred embodiments of the present invention can be attributed to the way in which the various aspects of the present invention seek to ensure that any imbalance between a measure of the QoS of a communication signal received at the destination apparatus and a measure of the QoS of a communication signal received at the, or each, intermediate apparatus is substantially reduced or prevented. Thus, excess resource allocation which cannot improve the throughput of data packets and which will only serve to raise interference levels, is minimised.

There are a number of different events which, if they arise, can potentially lead to an "imbalance" (i.e. a difference between at measure of the quality of a communication signal received at the destination apparatus and a measure of the quality of a communication signal received at the or each intermediate apparatus) in an otherwise optimised multi-hop system:

i) The pathloss arising over one of the links changes. This may be due to the position of one or both of the transmitter and receiver for that link changing, or due to a change in the environmental conditions or interference levels arising between the transmitter and the receiver.

ii) It is usual for an apparatus which is operable to receive a communication signal, to have a target RSS, target QoS or target SINR. This is usually set by the network provider and may vary depending on the characteristics of the communication system or receiving apparatus, or depending on the type of data to be transmitted. The target RSS/SINR/QoS of a mobile phone or other user equipment may vary and any change in target can be accommodated for by adjusting the transmission resource allocated to the transmitting apparatus in such a way as to tend to minimise a measure of the variation of the quality of a communication signal received at the destination apparatus from a target received signal quality (i.e. "variation from target"). In the case of a multi-hop system, merely adjusting the transmission resource of one apparatus in order to accommodate a change in target of one of the receiving apparatuses, will lead to an imbalance within the system.

Embodiments of the present invention can be considers as relating to those which seek to bring a quality indicator derived by an apparatus operable to receive a communication signal to a desired value (which may be, for example, a target set by the receiving apparatus) by i) responding to a deviation in the indicator which arises due to a change in pathloss between the intermediate apparatus and the destination apparatus; or ii) responding to a potential imbalance which could result following a change in the target quality set by the apparatus.

There are a number of different types of resource which may be adjusted in order to attain or maintain balance within a multihop communication system. These include the transmit power allocated at the transmitter of the system, the transmission bandwidth, the number of antennas, the coding rate or the modulation scheme. Embodiments of the present invention rely upon the allocation/adjustment of the transmission bandwidth as a means to attain or maintain a balance in the QoS experienced by receivers of the system. The bandwidth is defined as the number of physical transmit bits allocated to a link within a scheduling time interval. In the case of a communication system which comprises means for adjusting the amount of bandwidth in order to attain or maintain "balance" within the communication system, the actual resource allocated depends on the channel access method employed by the communication system. For example in a time division multiple access (TDMA) system, the bandwidth would be adjusted by changing the number of time slots, or a length of time, for which the transmitter is allowed to transmit in order to communicate with the receiver. The longer the time or the greater the number of slots used, the greater the bandwidth is that is allocated to that particular communication link. Similarly, in the case of (an orthogonal) frequency division multiple access (OFDMA/FDMA) system the bandwidth allocation is determined by the allocation of a frequency bandwidth carrier or the number of carriers. Further, the amount of frequency associated with each carrier could be changed. Finally in the case of a CDMA system, the bandwidth can be adjusted by changing the number of available codes, or the spreading factor used for any particular code, that may be used to communicate between the source and destination. Any method of resource allocation effectively controls the rate at which data can be transferred from the source to the destination, in a similar manner to the case of transmit power.

Preferred embodiments of the present invention seek to provide a way of optimising a multi-hop system whereby any target QoS set by receivers is substantially attained and the throughput of data across each link is substantially equal.

The determining means may form part of a control means, where the control means is the part of the system which will eventually be responsible for issuing a command to an apparatus, commanding the allocation of a particular resource to that apparatus. However, the control means may not be required if conditions relating, for example, to the maximum resource allocation of a particular apparatus, are not met. Alternatively, the determining means may be provided as a separate entity within the same apparatus as the control means, or within a different apparatus. Preferably, a control means is provided in a base station (known in the context of 3G communication system as a "Node-B"). This arrangement benefits from facilitating centralised control of the setting of the transmit power to be maintained, with minimal processing required in the relay station. This is beneficial to the operator of the wireless system as it keeps control located within a central entity making management of the network much simpler. Further, should the relay start to malfunction, then due to the fact that control is located in the base station (or Node - B) then corrective measures are possible by the operator. Moreover, the fact that processing in the intermediate apparatus is kept to a minimum is advantageous in terms of reducing power consumption and thus maximising battery life, should the intermediate apparatus be a mobile or remote device.

Embodiment of the present invention may be employed in the case of downlink transmissions wherein the source apparatus is part of a base station, the base station being operable to transmit a communication signal, via the or each intermediate apparatus, to the destination apparatus. In a standard communications system the downlink is the link between the NB and the UE. In the multi-hop case the DL refers to the link in which communication is directed towards the UE (e.g. RN to UE, RN to RN in the direction of UE and NB to RN). Alternatively, embodiments of the present invention may be employed in the case of uplink communications wherein the source apparatus is operable to transmit a communication signal via the or each intermediate apparatus to the base station. In a standard communications system the uplink is the link between the UE and the NB. In the multi-hop case the UL refers to the link in which communication is directed towards the NB (e.g. UE to RN, RN to RN in the direction of NB and RN to NB).

The desired value may be the value of the indicator of the QoS of a communication signal derived for the destination apparatus which is at, or close to, the target value set for the destination apparatus, and when the system is substantially balanced (i.e. a measure of a quality of a communication signal received at the destination apparatus is in balance with a measure of a quality of communication signal received at the, or each, intermediate apparatus). Thus, embodiments of the present invention may be advantageously used to maintain the QoS across the communication link that terminates at the destination apparatus, or the quality of the communication signal received by the destination apparatus at, or near, the target value set for the destination apparatus. Thereafter, it may be necessary for the system to be optimised by ensuring a balance is achieved between the destination apparatus and the or each intermediate apparatus.

Thus, it should be appreciated that the indication deviation detection means may be used in a system which has already been balanced, or optimised. Thus, a deviation from the desired value, which may arise due to an event which results in a change in a measure of a quality of a communication signal at the destination apparatus will be detected, and the required change the resource allocated to the previous intermediate apparatus determined. The required change in resource allocation will be calculated by the first calculation means. If the change in indicator is due to a change in target, the first calculation means will also be operable to calculate the new transmit power for the source apparatus that will tend to prevent an imbalance, due to a new target quality at the destination apparatus being satisfied, from arising. If the target has not changed, but the pathloss has changed such that the quality of the communication signal has altered, the calculation means only need calculate a new transmit power for the intermediate apparatus in order for a balance to be maintained. Changes in pathloss between the source apparatus and the intermediate apparatus, which lead to a change in the QoS across the communication link that terminates at the intermediate apparatus, must be dealt with by systems/methods which employ an imbalance detection means.

Different embodiments of the present invention may tend to reduce or prevent an imbalance which arises or may arise, as the case may be, under different circumstances. The most likely event to occur in a structured multi-hop system (i.e. one in which the or each intermediate apparatus is fixed) is that the path loss between the intermediate apparatus and the destination apparatus changes (which may be due to a change in the position of the destination apparatus or a change in environmental conditions) or that the target of the destination apparatus changes. Both of these events are advantageously dealt with by embodiments of the present invention which are triggered by detection of a change in the indicator derived by the destination apparatus. Preferably, these embodiments will comprise an indicator deviation detection means which monitors the, or one of the, indicators of the destination apparatus at all times. Thus, any change or deviation in the indicator derived by the destination apparatus from a desired value, can be detected quickly. Following the process of optimising a multi-hop system and particularly where the system is a structured multi-hop system, these embodiments alone may be sufficient to maintain a balance across the multi-hop system. However, if the pathloss between the source apparatus and the intermediate apparatus changes (which may be due to a change in the position of the intermediate apparatus in an ad-hoc network, or due to a change in the environmental conditions arising across that link), this must be dealt with by either by embodiments which detect an imbalance between quality indicators of the receiving apparatuses in a multi-hop network. Thus, it is preferable to provide a communication system which allows any of these situations, should they arise, to be dealt with.

The situation may arise where a change in the target of the destination apparatus is accommodated by a substantially simultaneous change in the pathloss between the intermediate apparatus and the destination apparatus. Thus, for example, in the case where an indicator deviation detection means is provided in the destination apparatus such that the destination apparatus is operable to transmit a request to the control means for a change in the transmit power of the intermediate apparatus, no request for a change in transmit power of the intermediate apparatus will be generated by the destination apparatus if this situation does arise. This will lead to an imbalance in the system which will require detection by an imbalance detection means, since the new target of the destination apparatus will have been met (inadvertently) but no corresponding change will have been made to the transmit power of the source apparatus. This, relatively rare, situation can therefore be handled by a communication system which provides both an indicator deviation detection means and an imbalance detection means (operating periodically). The second calculation means is then operable to calculate the change in the transmit power of the base station that is required to in order to tend to balance a measure of the quality of a communication signal received at the intermediate apparatus and a measure of the quality of a communication signal received at the destination apparatus.

According to embodiments of the present invention the allocation of bandwidth across each of the links is utilised in order to maintain or attain a substantial balance between indicators of the quality of service (QoS) across each of the links.

The determining means may be provided in parts associated with the base station. In the case of downlink transmissions, the base station will comprise the source apparatus. In the case of uplink transmissions, the base station will comprise the destination apparatus. Such embodiments can therefore benefit from centralised control of the bandwidth allocated across each of the links of a multi-hop communication system. Alternatively, the determining means may be provided in parts associated with the, or at least one of the, intermediate apparatuses. Such embodiments benefit from decentralised or "distributed" control of the bandwidth allocated to each of the links in a multi-hop system and are readily applicable to ad-hoc networks, where a base station may not exist and connections between any two apparatuses may be formed via any other apparatus capable of relaying (receiving and transmitting) signals. Thus, the position of a relay node in an ad-hoc network may not be fixed and the function of a relay node may, for example, be performed by a mobile user equipment. Embodiments of the present invention may be used in conjunction with either UL or DL transmissions of communication signals.

The quality of the communication signal (QoS) may be derived for a given communication link by a QoS derivation means which may be associated with i) the receiver of the communication link for which the QoS indicator is to be derived; ii) the transmitter of the communication link for which the QoS indicator is to be derived; or iii) an apparatus other than the transmitter or receiver of the communication link for which the QoS indicator is to be derived. In the case of i) or ii), the QoS derivation means determines a direct indicator of the quality of service across the link by means of measurements taken locally at the receiver or the transmitter respectively. In the case of iii) the QoS derivation means determines an indirect indicator of the quality of service across the link by means of measurements made at the receiver/transmitter and then reported to the QoS derivation means. It is also possible for the QoS indicator could be derived from a combination of local and reported measurements.

For example, in the case of a downlink communication signal being transmitted between a relay node (acting as an intermediate apparatus) and a destination user equipment, the QoS indicator may be derived at the user equipment or remotely at the transmitting relay node by direct measurements made at the UE/RN. Alternatively, the QoS indicators can be derived remotely by a QoS derivation means associated with a previous relay node (in the case where the communication system comprises more than two links) or with the base station, by means of measurements made at the receiver/transmitter and then reported to said QoS derivation means.

In the case where QoS indicators are derived directly (either at the relevant receiver or remotely at the relevant transmitter), throughput can be determined directly by noting the number of successfully received bits per second or per scheduling interval. Delay can be determined by monitoring the time between successive packets being successfully received. Jitter can be determined by the variation in the time between packets being received.

In the case where the QoS indicators for a particular receiver may be derived indirectly, this may be achieved by providing the remote apparatus with a means to monitor the effective throughput on the link(s) for which the QoS indicator(s) are being determined. The QoS indicators of a link may be derived in a number of ways. For example:

(a) by knowing the SINR at the receiver, modulation and coding scheme used on the link, channel conditions, the type of coding used at the transmitter, as well as the number of bits transmitted across the link, it is possible to calculate the bit error rate and thus determine the throughput achieved and arrive at the required QoS indicator. For example, assuming the QoS indicator is defined as:

$$QoS_{indicator} = f\left(throughput, delay, jitter\right) \quad\quad\quad (C)$$

where throughput is defined as

$$Throughput = \frac{b \cdot \left(1 - P_e\right)}{t} \quad\quad\quad (D)$$

where $b$ is the number of bits transmitted in a particular transmission interval of length $t$ and $P_e$ is the probability of a bit being received in error (or the bit error rate (BER)),

where $P_e$ is a function of the SINR and modulation and coding scheme:

$$P_e = f\left(MCS, SINR, Channel, CodingType\right) \quad\quad\quad (E)$$

where $MCS$ is the modulation and coding scheme and link level simulations are typically used to determine the mapping between $P_e$ and the variables listed in equation (E).

Therefore, it follows that if $P_e$ can be determined through knowledge of the variables in equation (E) then it is possible to calculate the throughput using equation (D) and hence determine the QoS indicator.

(b) by monitoring the rate at which packet acknowledgements are received (ACKs) at the transmitter or apparatus where the ARQ or HARQ process is managed, it is possible to know the rate at which packets are successfully received. As the number of bits associated with each packet is known, it is possible to determine the throughput by simply accumulating the number of bits successfully ACK'ed within a given time interval, $t$:

$$Throughput = \frac{NumberOfBitsACK'ed}{t} \quad\quad\quad (F)$$

It is also possible to monitor the delay and jitter through reception of the ACKs. For example, by observing the time between entry of a packet into the transmission queue and reception of an ACK from the receiver for the packet the delay can be determined. Further, by monitoring the variation in the delay between entry into the queue and ACK reception for each packet, it is possible to determine the jitter.

If the indicator deviation is due to a change in the pathloss such that the quality of the communication signal received by the destination deviates from target, the first embodiments of any of the above aspects will advantageously restore balance to the system by adjusting the transmit power of the preceding intermediate apparatus. However, if the indicator deviation is due to a change in the target quality set by the destination apparatus, whilst the first embodiments may be advantageously employed to adjust the transmit power at the intermediate apparatus in order that the new target can be attained, the corresponding second embodiments of any of the above aspects are needed in order to restore a balance by determining the corresponding change in transmit power for the other transmitters in the multi-hop system.

The intermediate apparatus preferably comprises a receiver operable to receive the signal transmitted by the source apparatus; and a transmitter operable to transmit the received signal, or a signal derived therefrom, to the destination apparatus. Duplexing of signals to separate communication signals received by the intermediate apparatus from communication signals transmitted by the intermediate apparatus may be Frequency Division Duplex (FDD) or Time Division Duplex (TDD). One or more of the intermediate apparatuses may preferably comprise a so-called relay node (RN) or relay-station (RS). A relay node has the capability of receiving a signal for which it is not the intended final destination and then transmitting the signal on to another node such that it progress towards the intended destination. A relay node may be of the regenerative type, where the received signal is decoded to the bit level, making a hard decision. If the received packet is found to be in error then retransmission is requested, hence the RN incorporates ARQ or H-ARQ. ARQ or H-ARQ is a receiver technique for managing retransmission request and subsequent reception of retransmitted signals. Once the packet is successfully received, it is then scheduled for retransmission towards the destination, based on any radio resource management strategies incorporated into the RN. Alternatively a relay node may be of the non-regenerative type, whereby data is amplified at the relay node and the signal is forwarded to the next station. It is envisaged that the function of an intermediate apparatus or relay node may be provided by a mobile phone, or other user equipment.

Communication methods carried out in a base station embodying any of the aspect of the present invention, an intermediate apparatus embodying any aspect of the present invention or in a destination apparatus embodying any aspect of the present invention are also provided.

The indicator of the quality of the communication signal received at a receiver of a communication apparatus in a multi-hop communication system embodying the present invention is an indicator of the quality of service (QoS) experienced by the receiver. The QoS indicator can be made up of one or a number of metrics which are each indicative of a particular quality in the service experienced over a given communication link. For example, the QoS may comprise a single indicator which may be, for example, a measure of the throughput (i.e. user throughput or packet throughput), a measure of the packet delay, a measure of the jitter (i.e. the variation in packet delay) or a measure of the packet error rate (probability a received packet will be in error). Each of these individual metrics are indicative of the QoS experienced across a communication link between a transmitter and a receiver and may form the QoS indicator in a multi-hop communication system of the present invention.

Alternatively, the QoS indicator may comprise more than one of these metrics. Thus, complex definitions of the QoS may be formed wherein the QoS may be a function of some or all of these input metrics with some differential weighting applied to each. For example, a throughput lower than that required (i.e. lower than target) would give rise to a bad QoS which would be reflected, for example, in the time taken to transfer a file over the internet, in the speed of webpage viewing or the quality of video streaming. A longer delay than required would make interactive services poor giving rise to a long delay on voice or video calls or to a poor experience for online gaming. Jitter would also have an impact on interactive services and would also affect streaming services (i.e. video download or broadcast) as larger buffering would be required to smooth the burstiness. Further, if the QoS is greater than required across a particular communication link, then it may be desirable to reduce the amount of bandwidth associated with the user to thereby free the communication resource for other users.

Embodiments of the present invention therefore seek to utilise the allocation of bandwidth across each of the links in order to maintain or attain a substantial balance between indicators of the quality of service (QoS) across each of the links.

As previously explained, the way in which bandwidth allocated to a given transmitter will depend upon the channel access method employed by the communication system.

The bandwidth may be adjusted simply by allocating more or less transmission resource (bits) to a transmitter within any one scheduling or transmission interval.

Embodiments of the present invention may be implemented within a wireless communication system employing any multiple access technique, including but not limited to: frequency division multiple access (FDMA), time division multiple access (TDMA) code division multiple access (CDMA) and orthogonal frequency division multiple access (OFDMA). In the case of a CDMA system, in which all transmissions occur in the same frequency band and each transmission is assigned a unique channelisation code, the Gp factor represents the spreading factor or length of the code used to spread the transmitted signal otherwise known as the processing gain. In the case of orthogonal spreading codes, up to Gp channels are available for simultaneous transmission.

The actual calculation to be performed by embodiments of the present invention which utilise a calculation may be derived in a number of possible ways. One derivation, which is not directly relevant to embodiments of the present invention but which is nonetheless useful for understanding the present invention, is based on a consideration of the SINR at each of the receiving elements in a multi-hop network, is given below and leads to a number of possible solutions for calculating the optimal transmit power of the transmitting elements comprised in a multi-hop network for various deployment scenarios. The skilled person will appreciate that alternative solutions may be derived from consideration of other types of measures of the quality of a communication signal at the receivers of a multi-hop network and the underlying principal of the present invention that these measures should be balanced.

It will be proved later that different calculations may be performed by the calculation means depending on the duplexing method employed to separate transmissions between two links, and the characteristics of the intermediate apparatus employed in the present communication system. Furthermore, solutions may be based on a single cell model, a two cell model or a multi-cell model.

In the case where the intermediate apparatus comprises a regenerative relay node and an FDD duplexing method is employed to separate signals received by the relay node from those transmitted by the relay node, the transmit power of the base station can be advantageously found using equation (5) and the transmit power of the intermediate apparatus can be advantageously found using equation (6).

In the case where the intermediate apparatus comprises a regenerative relay node and a TDD duplexing method is employed to separate signals received by the relay node from those transmitted by the relay node, the transmit power of the base station can be advantageously found using equation (7) and the transmit power of the intermediate apparatus can be advantageously found using equation (8).

In the case where the intermediate apparatus comprises a non-regenerative relay node and an FDD duplexing method is employed to separate signals received by the relay node from those transmitted by the relay node, the transmit power of the base station can be advantageously found using equation (29) and the transmit power of the intermediate apparatus can be found using equation (31).

In the case where the apparatus comprises a non-regenerative relay node and a TDD duplexing method is employed to separate signals received by the relay node from those transmitted by the relay node, the transmit power of the base station can be advantageously found using equation (44) and the transmit power of the intermediate apparatus can be advantageously found using equation (47).

It should be appreciated that the term "user equipment" encompasses any device which is operable for use in a wireless communication system. Furthermore, although the present invention has been described primarily with reference to terminology employed in presently known technology, it is intended that the embodiments of the present invention may be advantageously applied in any wireless communication systems which facilitates the transmission of a communication signal between a source and destination, via an intermediate apparatus.

In any of the above aspects, the various features may be implemented in hardware, or as software modules running on one or more processors, or as a combination of the two. The invention also provides operating programs (computer programs and computer program products) for carrying out any of the methods described herein, and computer readable media having stored thereon programs for implementing the techniques described herein. A program embodying the invention may be stored on a computer-readable medium, or it could, for example, be in the form of a signal such as a downloadable data signal provided from an Internet web site, or it could be in any other form.

For a better understanding of the present invention and to show how the same may be carried into effect, reference will now be made, by way of example, to the accompanying drawings in which:

Figure 1A illustrates a single cell/relay model of a wireless communication system;

Figure 1B illustrates a two cell/relay model of a wireless communication system;

Figures 2A and 2B each show a graphical representation of the theoretical gain that may be achieved by a multi-hop communication system based on pathloss equation (A);

Figure 3 illustrates a first algorithm according to a first example not directly embodying the present invention;

Figure 4 illustrates a second algorithm according to a first example not directly embodying the present invention;

Figure 5 illustrates parts of a communication system according to the first example;

Figure 6 illustrates a first algorithm according to a second example not directly embodying the present invention;

Figure 7 illustrates a second algorithm according to a second example not directly embodying the present invention;

Figure 8 illustrates a first algorithm according to a third example not directly embodying the present invention;

Figure 9 illustrates a second algorithm according to a third example not directly embodying the present invention;

Figures 10A, 10B and 10C show parts of a communication system according to the third example;

Figure 11 shows parts of a base station according to the third example ;

Figure 12 illustrates a first algorithm according to a fourth example not directly embodying the present invention;

Figure 13 illustrates a second algorithm according to a fourth example not directly embodying the present invention;

Figure 14 shows parts of a base station according to the fourth example;

Figure 15A and 15B illustrate a first algorithm according to a fifth example not directly embodying the present invention;

Figure 16A and 16B illustrates a second algorithm according to a fifth example not directly embodying the present invention;

Figures 17A, 17B and 17C show parts of a communication system according to the fifth example;

Figures 18A, 18B and 18C illustrate algorithms according to a first embodiment of the present invention;

Figures 19A, 19B, 19C and 19D illustrate algorithms according to a second embodiment of the present invention;

Figure 20 illustrate an algorithm according to a third embodiment of the present invention;

Figures 21A and 21B 18C illustrate algorithms according to a fourth embodiment of the present invention;

Figures 22A and 22B illustrate algorithms according to a fifth embodiment of the present invention;

Figures 23A and 23B illustrate algorithms according to a sixth embodiment of present invention;

Figures 24A and 24B illustrate algorithms according to a seventh embodiment of the present invention;

Figures 25A and 25B illustrate algorithms according to an eighth embodiment of the present invention;

Figure 26 illustrates the relationship between source transmit power and intermediate transmit power in the case of a multi-hop communication system having a non-regenerative relay node and using an FDD duplexing technique;

Figure 27 illustrates the relationship between source transmit power and intermediate transmit power in the case of a multi-hop communication system having a non-regenerative relay node and using a TDD duplexing technique;

Figures 28A, 28B and 28C illustrate the optimal NB transmit power as a function of RN transmit power;

Figures 29A and 29B show a graphical illustration of the variation in the average gain in throughput observed by users of a multi-hop system as compared to that observed for a single hop system; .

Figure 30 illustrate the optimal NB transmit power as a function of RN transmit power where it is assumed that the communication link between the source and destination apparatus has a 3dB gain compared with the shorter multi-hop links; and

Figure 31 shows an ad-hoc network according to an embodiment of the present invention.

The reference numerals listed below denote parts shown in the accompanying drawings having the same, or similar, function:

1. indicator derivation means;
2. indicator change detection means;
3. determining means;
4. first calculation means;
5. second calculation means;
6. request receiving means;
7. control/command means;
8a. request relay;
8b. request modifying means;
9. indicator receiving means;
10. imbalance detection means;
11. base station;
12. intermediate apparatus; and
13. source apparatus.

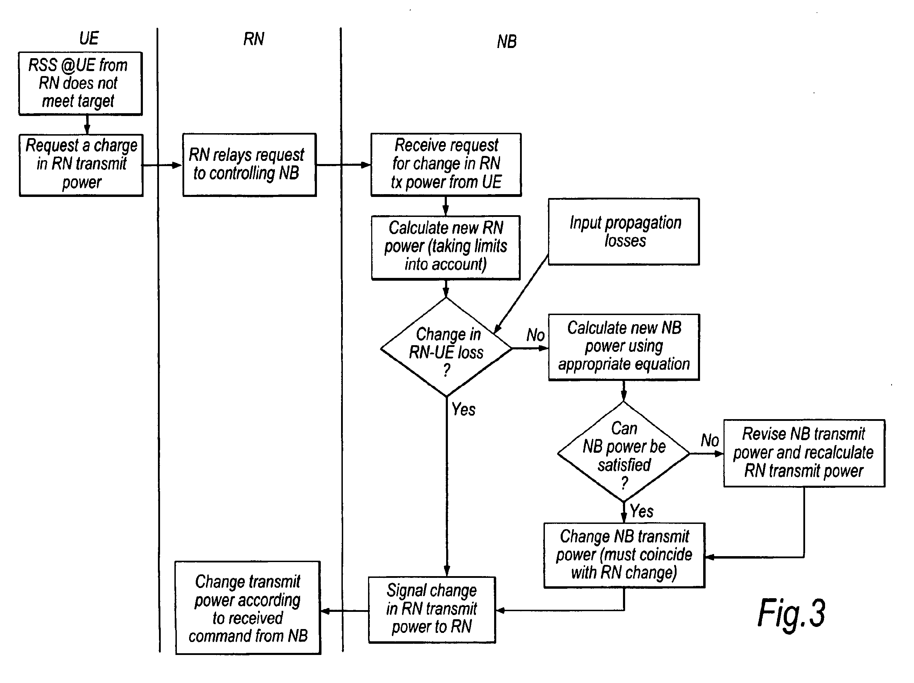

A first algorithm which implements a first example not directly embodying the present invention will now be described with reference to Figure 3 in which the source apparatus comprises a node-B (NB), the intermediate apparatus comprises a relay node (RN) which may be of the regenerative or non-regenerative type, and the destination apparatus comprises a user equipment (UE). The user equipment continually monitors the RSS and derives indicators of the received signal strength and the variation from target received signal strength. The destination apparatus is provided with an indicator deviation detection means for detecting a change in one or both of these indicators. The Node-B is provided with a control means having a first calculation means.

The details of the algorithm are summarised as follows:

**Downlink Algorithm 1: Part 1**

**Trigger: NB receives request for change in RN transmit power from UE**

| Algorithm Input | Required by | Origin |
| --- | --- | --- |
| Request for change in RN Transmit Power | NB | Change derived in UE and signalled to NB via RN |
| RN Transmit Power | NB | Tracked/calculated in the NB |
| RN-UE Propagation Loss | NB | Calculated in the NB (see second part) |

| Algorithm Output | Derivation | Destination & Signalling Requirement |
| --- | --- | --- |
| New NB transmit power | Explicit calculation | Used by NB |
| New RN transmit power | Explicit calculation | Relative change in RN power signalled to RN |

In order to enable calculation of the new RN transmit power, the control means in the NB requires knowledge of the current RN transmit power. Two techniques for obtaining this information are available : 1) The NB has knowledge of the initial transmit power of the RN as well as the maximum; this knowledge is either inherent or signalled when the RN connects to the NB. The NB then tracks the RN transmit power as commands to change it are issued or 2) The RN reports the current transmit power to the NB preventing the need for tracking in the NB. This algorithm assumes the first technique is used since it benefits from lower signalling complexity.

The following sequence takes place following detection of a deviation in an indicator from a desired value (which in this case is the target RSS) in order for a first calculation means provided in the NB to calculate a new transmit power for the intermediate apparatus which will tend to substantially reduce an imbalance between a measure of the quality of a communication signal received at the intermediate apparatus and a measure of the quality of a communication signal received at the destination apparatus; or a new transmit power for the intermediate apparatus and the base station which will substantially prevent said imbalance from arising.

1. The destination apparatus transmits a request for a change in the RN transmit power to the RN;

2. The RN propagates this request to the NB which comprises a first calculation means;

3. Based on a knowledge of the current RN transmit power, the first calculation means calculates the new RN transmit power required to satisfy the change requested by the UE. The NB takes into account the finite limit of the RN transmit power, adjusting the new transmit power as appropriate;

4. Then:

i) if it is detected that no change has occurred in the RN-UE propagation loss (as determined by an input signal derived by a second algorithm according to the first example) then the request has been generated because of a change in the target at the UE, not a change in the RN-UE propagation loss. In this case the first calculation means also calculates a new transmit power for the NB. The NB then checks that the NB transmit power change can be satisfied (i.e. in the case of an increase the maximum transmit power is not exceeded). If the maximum is exceeded then the power change is adjusted so this will not occur. The RN transmit power is then recalculated so that balance will be attained. The NB then signals a command to the RN for the RN to adjust its transmit power in accordance with the new transmit power calculated by the first calculation means and changes its own transmit power so as to coincide with the RN transmit power change; or

ii) If it is detected that a change has occurred in the RN-UE propagation loss, the NB signals a command to the RN for the RN to adjust its transmit power in accordance with the new transmit power calculated by the first calculation means.

The algorithm described above will manage the case of the propagation loss varying between the RN and UE and the case of the UE modifying its target RSS or SINR. In order to handle the case of the propagation loss varying between the NB and RN and the case that both the target in the UE and the propagation loss between the RN and UE varies, such that no request for change in RN transmit power is generated, a second algorithm according to the first example operates periodically as discussed below.

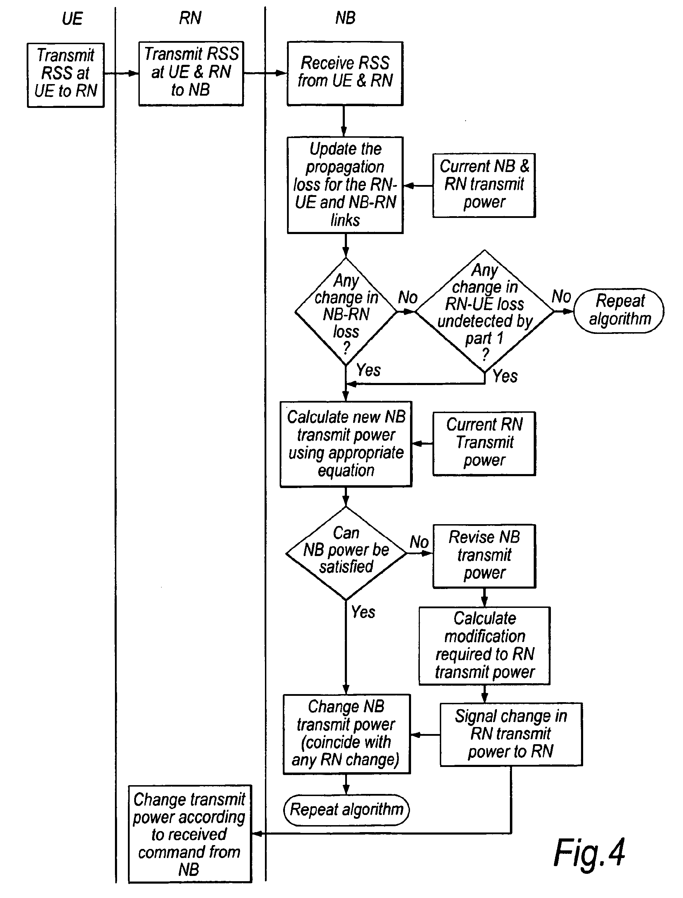

This algorithm is executed periodically in addition to the algorithm discussed above with reference to Figure 4. Alternatively, it is also possible for the algorithm described with reference to Figure 4, or the following algorithm to be implemented separately in a wireless multi-hop communication system.

**Downlink Algorithm 1: Part 2**
**Trigger: Periodically executed in NB**

| Algorithm Input | Required by | Origin |
|---|---|---|
| RSS at UE | NB | Signalled from UE via RN |
| RSS at RN | NB | Signalled from RN |
| NB Transmit Power | NB | Known already |
| RN Transmit Power | NB | Tracked/calculated in the NB |

| Algorithm Output | Derivation | Destination & Signalling Requirement |
|---|---|---|
| New NB transmit power | Explicit calculation | Used by NB |
| New RN transmit power | Explicit calculation | Relative change in RN power signalled to RN |
| Propagation losses | Explicit calculation | Derived from difference between Tx and Rx power. Used in NB. |

The algorithm assumes that indicators of the received signal strength at the UE and RN are reported to the NB in order to facilitate calculation of the propagation loss across the two links by the second calculation means. The NB is provided with a second calculation means.

1. The NB monitors the indicators of the received signal strength from both the UE and RN. Using this in conjunction with the knowledge of the RN and NB transmit power it updates the propagation loss for the NB-RN and RN-UE links;

2. If a change in either the NB-RN or RN-UE propagation loss is detected then the updated propagation loss is used by the second calculation means, in conjunction with the knowledge of the RN transmit power, to calculate the optimal NB transmit power. If no change in propagation loss is detected then the current iteration of the algorithm terminates;

3. If a change in propagation loss is detected, then:

i) if the calculated NB transmit power can be met (i.e. the maximum transmit power of the NB will not be exceeded) then NB signals a command to the RN for the RN to adjust its transmit power in accordance with the new transmit power calculated by the second calculation means; or

ii) if the calculated NB transmit power can not be met then the NB transmit power is modified to one that can. The second calculation means then calculates the new RN transmit power that ensures optimal balance. The NB then signals a command to the RN for the RN to adjust its transmit power in accordance with the new transmit power calculated by the second, calculation means and changes its own transmit power so as to coincide with the RN transmit power change.

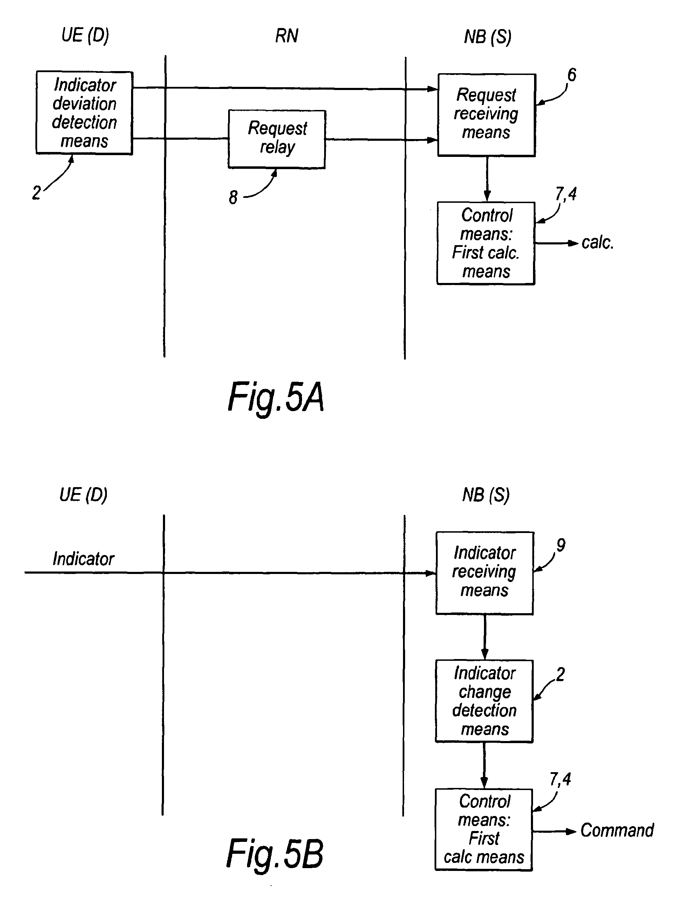

There are a number of ways in which the signalling required to carry out the first example may be implemented and these are illustrated in Figures 5A and B in which the same reference numerals are used to refer to parts which provide the same function.

Figure 5A shows a communication system in which, in addition to an indicator derivation means (not shown), the destination apparatus is provided with an indicator deviation detection means (2) and is operable, following detection of a change in the indicator derived by the destination apparatus, to transmit a request for a determination of a change in the transmit power of the intermediate apparatus. The base station (NB) comprises a request receiving means (6) and a control means (7) which comprises the first calculation means (4). The request transmitted by the destination apparatus may be transmitted via a request relay means (8) provided in the intermediate apparatus.

Figure 5B shows a communication system in which the base station (NB) comprises an indicator receiving means (9), an indicator deviation detection means (2), and a control means (7) which comprises a first calculation means.

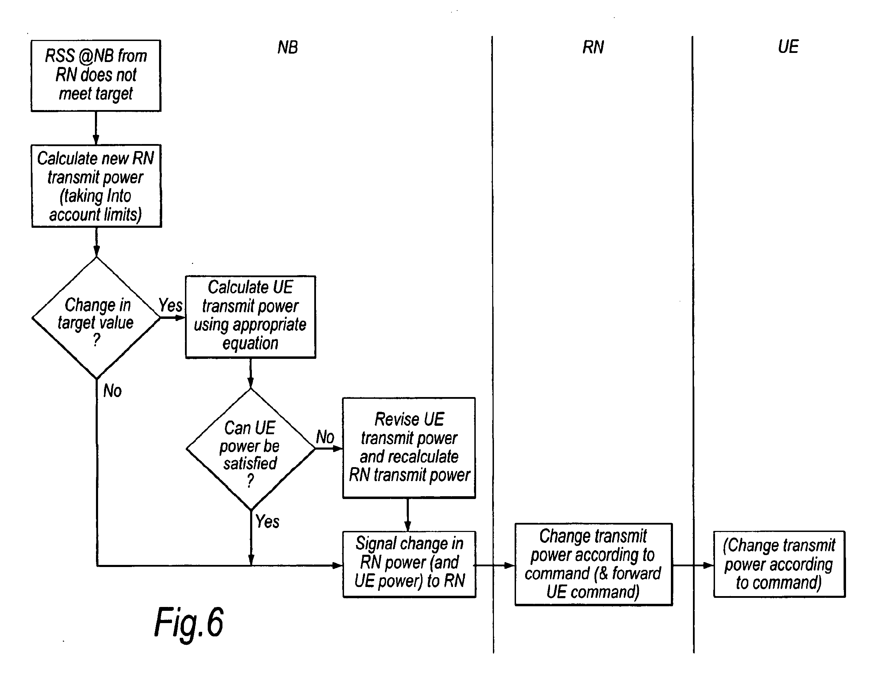

An example of an algorithm will now be described with reference to Figure 6, in which the source apparatus comprises a user equipment (UE), the intermediate apparatus comprises a relay node (RN), wich is of the regenerative type, and the destination apparatus comprises a base station (NB). The base station continually monitors the RSS and derives indicators of the RSS and the variation from target RSS. The base station is provided with indicator deviation detection means for detecting a change in one or both of these indicators. The base station is also provided with a control means having a first calculation means.

In order to enable an explicit calculation of a new RN transmit power following a change in an indicator derived by the NB, the control means in the NB requires knowledge of the current RN transmit power. Two techniques for obtaining this information are available : 1) The NB has knowledge of the initial transmit power of the RN as well as the maximum; this knowledge is either inherent or signalled when the RN connects to the NB. The NB then tracks the RN transmit power as commands to change it are issued or 2) The RN reports the current transmit power to the NB preventing the need for tracking in the NB. This algorithm assumes the first technique is used since it benefits from lower signalling complexity.

The details of the algorithm are summarised as follows:

**Uplink Algorithm 1: Part 1**
**Trigger: Request for change in RN transmit power in NB**

| Algorithm Input | Required by | Origin |
|---|---|---|
| Request for change in RN Transmit Power | NB | Derived in NB |
| RN Transmit Power | NB | Tracked/calculated in the NB |
| UE Transmit Power | NB | Tracked/calculated in the NB |

| Algorithm Output | Derivation | Destination & Signalling Requirement |
|---|---|---|
| New RN transmit power | Explicit calculation | Relative change in RN transmit power signalled to RN |
| New UE transmit power | Explicit calculation | Relative change in UE transmit power signalled to UE via RN |

The following sequence takes place following detection of a change in an indicator derived by the base station in order to i) substantially reduce an imbalance between a measure of the quality of a communication signal received at the intermediate apparatus and a measure of the quality of a communication signal received at the base station; or (NB) ii) to substantially prevent said imbalance from arising.

1. The control means of the NB calculates a new transmit power for the RN taking into account the transmit power limits of the RN;

2a. If the change detected by the indicator deviation detection means of the base station is a result of the pathloss changing between the intermediate apparatus and the base station (such that the indicator of SINR will change), the control means of the base station transmits a command to the RN commanding a change in the transmit power of the RN; or

2b. If the change detected by the indicator deviation detection means of the base station is a result of a change in the target quality indicator set for the base station (such that the indicator of variation from target RSS will change) then:

i) the first calculation means also calculates a new transmit power for the source apparatus (UE) which corresponds to the calculated new transmit power for the RN. In the case of a CDMA system, the first calculation means modifies the calculated value of the new transmit power of the source apparatus so as to minimise the so-called "near-far" effect. Thus, the transmit power of the UE may be increased or decreased from the optimal value. The modification will depend on the requirements of the operator of the system since the effect of improper power balancing reduction in performance gain from multi-hopping must be weighted against a reduction in performance at a receiver in a multi-user scenario due to all the received signal levels not being equal.

ii) the NB checks that the adjustment in the transmit power of the UE needed to meet the calculated new transmit power can be met, taking into account the maximum transmit power of the UE. If it is determined that the calculated new transmit power of the UE cannot be met, the first calculation means calculates a revised new transmit power for both the RN and the UE. In the case of a CDMA system, the first calculation means modifies the calculated value of the new transmit power of the source apparatus so as to minimise the so-called "near-far" effect; and

iii) the control means issues a command to the RN and the UE commanding a change in the transmit power of the RN and the UE in accordance with the new transmit powers calculated by the first calculation means.

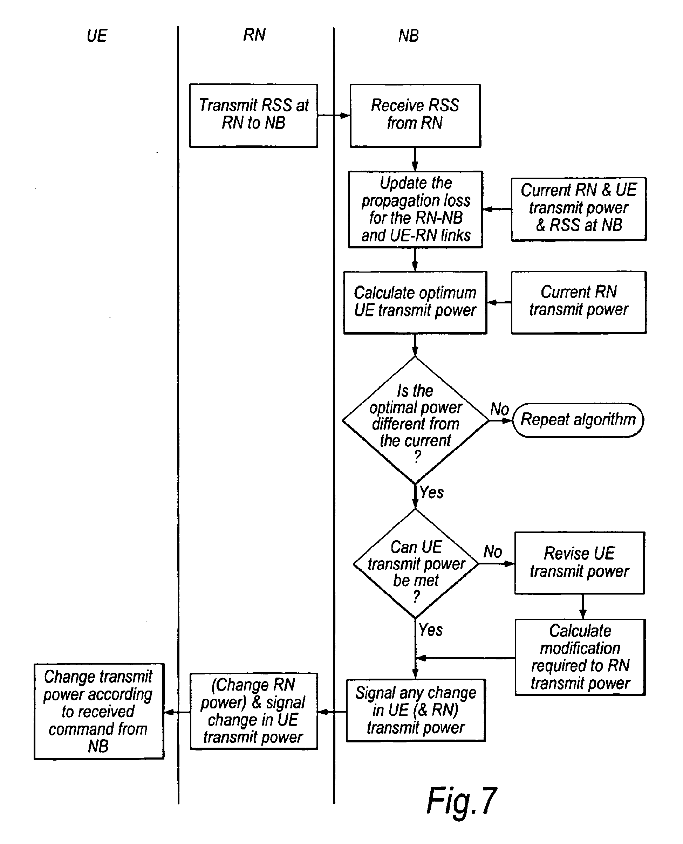

The algorithm described above will manage the case of the propagation loss varying between the RN and the NB and the case of the NB modifying its target RSS. In order to handle the case of the propagation loss varying between the UE and the RN, and the case that both the target in the NB and the propagation loss between the RN and NB varies, such that the above algorithm will not operate to determine the new transmit power for the UE, an algorithm described with reference to Figure 7 operates periodically as discussed below.

The details of the algorithm may be summarised as follows:

**Uplink Algorithm 1: Part 2**

**Trigger: Periodically executed In NB**

| Algorithm Input | Required by | Origin |
| --- | --- | --- |
| RSS at RN | NB | Signalled from RN |
| RSS at NB | NB | Monitored in the NB |
| RN Transmit Power | NB | Tracked/calculated in the NB |
| UE Transmit Power | NB | Tracked/calculated in the NB |

| Algorithm Output | Derivation | Destination & Signalling Requirement |
| --- | --- | --- |
| New UE transmit power | Explicit calculation | Relative change in UE power signalled to UE via RN |
| New RN transmit power | Explicit calculation | Relative change in RN power signalled to RN |
| Propagation losses | Explicit calculation | Derived from difference between Tx and Rx power. Used in NB. |

This algorithm may be advantageously executed in addition to the algorithm discussed above with reference to Figure 6. Alternatively, it is also possible for the following algorithm described with reference to Figure 7 be implemented separately in a wireless multi-hop communication system.

The algorithm assumes that an indicator of the quality of a communication signal (RSS) derived by the RN is reported to the NB. The NB monitors the indicator derived by the RN and by an indicator derivation means of the NB, in order to facilitate calculation of the propagation loss across the two links by the second calculation means. The NB requires knowledge of the RN transmit power and the UE transmit power and this knowledge may be obtained by one of two techniques. : 1) The NB has knowledge of the initial transmit power of the RN/UE as well as the maximum; this knowledge is either inherent or signalled when the RN/UE connects to the NB. The NB then tracks the RN/UE transmit power as commands to change it are issued or 2) The RN/UE reports the current transmit power to the NB preventing the need for tracking in the NB. This algorithm assumes the first technique is used since it benefits from lower signalling complexity.

1. The NB monitors the indicators of the received signal strength derived by both the NB and RN. Using this in conjunction with the knowledge of the RN and UE transmit power it updates the propagation loss for the UE-RN and RN-NB links;

2. If a change in either the UE-RN or RN-NB propagation loss is detected then the updated propagation loss is used by the second calculation means, in conjunction with the knowledge of the RN transmit power, to calculate the optimal UE transmit power. In the case of a CDMA system, the first calculation means modifies the calculated value of the new transmit power of the source apparatus so as to minimise the so-called "near-far" effect. If no change in propagation loss is detected then the current iteration of the algorithm terminates;

3. The NB checks whether the calculated optimal transmit power differs from the current UE transmit power.

3a. If it does not differ, then the current iteration of the algorithm terminates; or
3b. If it does differ, then:

i) if the calculated new UE transmit power can be met (i.e. the maximum transmit power of the UE will not be exceeded) then NB signals a command to the UE for the UE to adjust its transmit power in accordance with the new transmit power calculated by the second calculation means; or
ii) if the calculated UE transmit power cannot be met then the UE transmit power is modified to one that can. The second calculation means then calculates the new RN transmit power that ensures optimal balance. The NB then signals a command to the UE and the RN commanding an adjustment in transmit power in accordance with the new transmit powers calculated by the second calculation means.

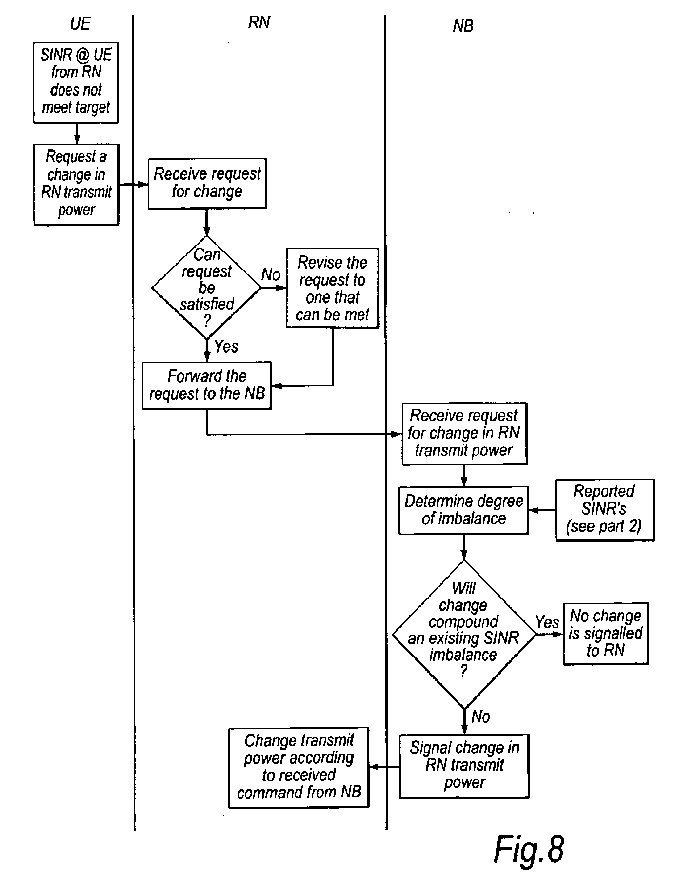

An example of an algorithm will now be described with reference to Figure 8 in which the source apparatus comprises a node-B (NB), the intermediate apparatus comprises a relay node (RN) is of the regenerative type, and the destination apparatus comprises a user equipment (UE). The destination user equipment continually monitors the SINR and derives indicators of the SINR and the variation from target SINR.

The details of the algorithm are summarised as follows:

**Downlink Algorithm 2: Part 1**
**Trigger: RN receives request for change in RN transmit power from UE**

| Algorithm Input | Required by | Origin |
|---|---|---|
| Request for change in RN Transmit Power | NB | Change derived in UE, modified at RN and signalled to NB |
| SINR at UE (see part 2) | NB | |
| SINR at RN (see part 2) | NB | |

| Algorithm Output | Derivation | Destination & Signalling Requirement |
|---|---|---|
| Change in RN transmit power | Relative change | Derived at UE, checked by RN, approved by NB and actioned by RN |

The following sequence takes place following deviation of a change in an indicator derived by the destination from a desired value which in this case is the target SINR of the destination apparatus in order to determine a change in the transmit power of the intermediate apparatus which will tend bring the indicator derived by the destination apparatus back to said desired value.

1. The destination apparatus detects a change in an indicator of SINR or in an indicator of the variation from target SINR such that the SINR at the destination apparatus does not meet its target.

2. The destination apparatus transmits a request for a change in the RN transmit power to the RN;

3. The RN determines if it can satisfy this request.

3a. If the request can be satisfied, it is propagated to the NB; or
3b. If it cannot be satisfied, the RN determines a revised request and propagates this to the NB.

4. A control means provided in the NB receives a request for a change in the RN transmit power.

5. The NB receives an input signal comprising an indication of the SINR at the UE and the SINR at the RN and determines if an imbalance exists between the SINR at the UE and the SINR at the RN.

5a. If an imbalance exists and the requested change in the transmit power of the intermediate apparatus will compound such an imbalance between the SINR at the UE and the SINR at the RN, the control means ignores said request; or
5b. If no imbalance exists, or if an imbalance exists but the requested change in the transmit power of the intermediate apparatus will not compound such an imbalance between the SINR at the UE and the SINR at the RN, the control means issues a command to the RN, commanding a change in the transmit power of the RN;

6. The RN receives a command from the control means of the NB and adjusts its transmit power in accordance with the command.

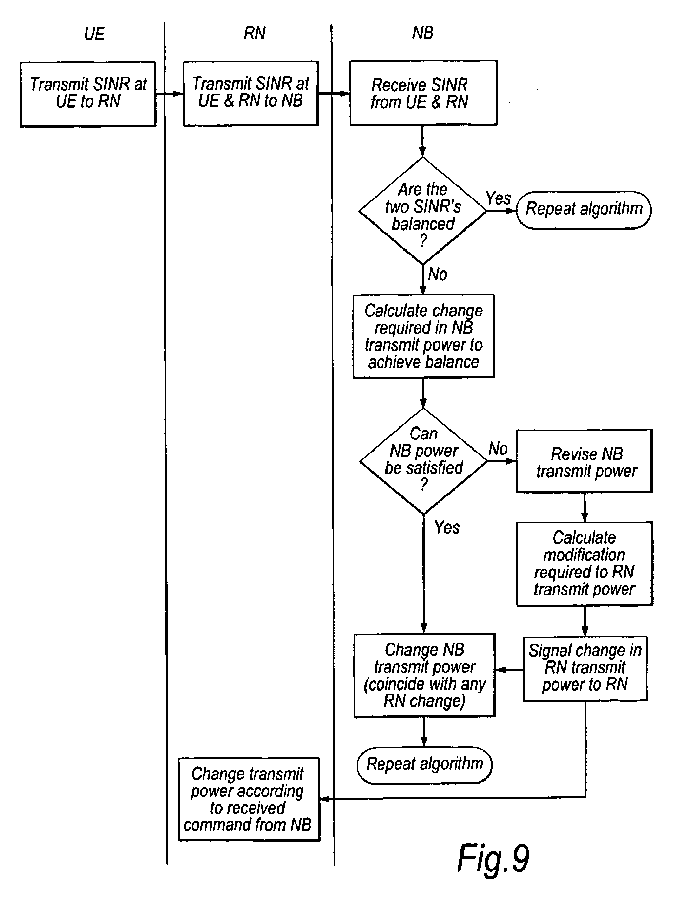

The algorithm described above will manage the case of the propagation loss varying between the RN and UE and the case of the UE modifying its target RSS or SINR. In order to handle the case of the propagation loss varying between the NB and RN and the case that both the target in the UE and the propagation loss between the RN and UE varies, such that no request for change in RN transmit power is generated, an algorithm described with reference to Figure 9 operates periodically as discussed below.
The details of the algorithm are summarised as follows:
**Downlink Algorithm 2: Part 2**
**Trigger: Periodically executed in NB**

| Algorithm Input | Required by | Origin |
| --- | --- | --- |
| SINR at UE | NB | Signalled from UE via RN |
| SINR at RN | NB | Signalled from RN |

| Algorithm Output | Derivation | Destination & Signalling Requirement |
| --- | --- | --- |
| Change in NB transmit power | Relative change | Used by NB |
| Change in RN transmit power | Relative change | Change signalled to RN |

This algorithm is executed periodically in addition to the algorithm discussed above with reference to Figure 8. Alternatively, it is also possible for this algorithm, shown in Figure 9, to be implemented separately in a wireless multi-hop communication system.
The algorithm assumes that indicators of the SINR at the UE and RN are reported to the NB.

1. The NB monitors the indicators of the SINR from both the UE and RN. If these are found to vary such that they are imbalanced, a control means of the NB determines the change in transmit power that is required to restore a balance in SINR.

2. The NB determines if it can carry out the required change in transmit power that will restore balance.

2a. If it is determined that the NB cannot carry out the required change, the NB determines a revised change in transmit power. The control means issues i) a command to the NB commanding a change in transmit power of the NB and ii) a command to the RN commanding a change in transmit power of the RN; or
2b. If it is determined that the NB can carry out the required change, the NB control means issues a command to the NB commanding a change in transmit power of the NB.

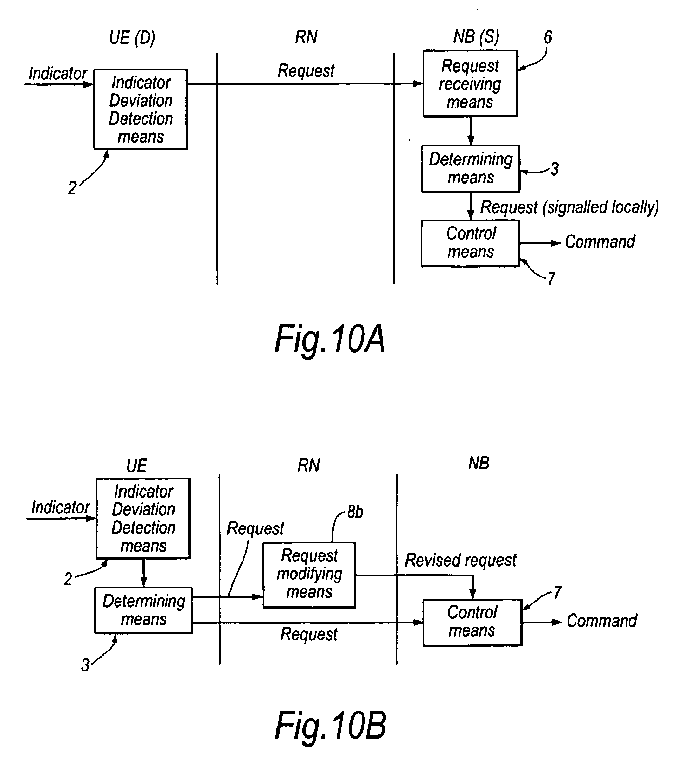

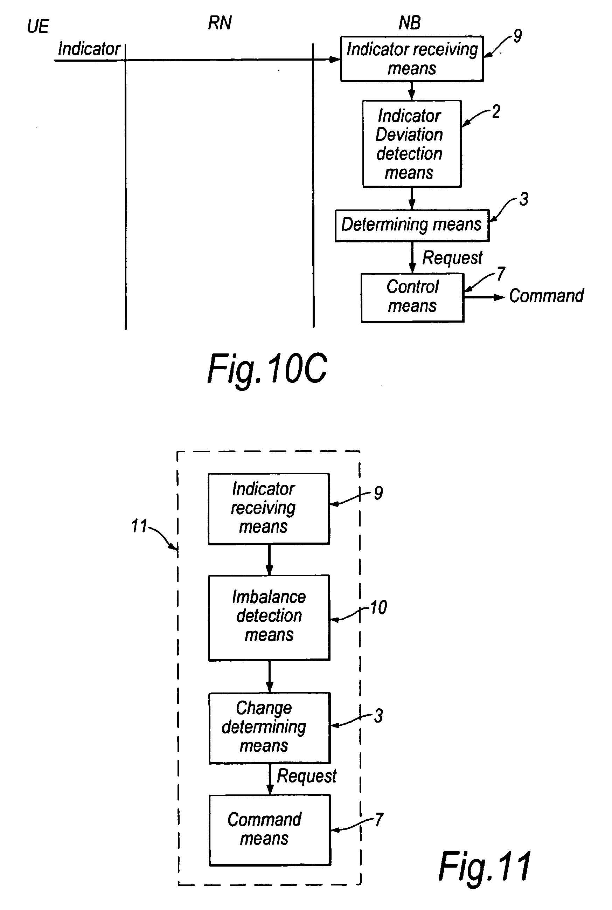

There are a number of ways in which the signalling required to carry out embodiments of the third example may be implemented and these are illustrated in Figures 10A, 10B and 10C which show parts of a communication system according to the third example in which the same reference numerals are used to refer to parts which provide the same function.
Figure 10A shows a communication system in which, in addition to an indicator derivation means (not shown), the destination apparatus is provided with an indicator deviation (2) detection means and is operable, following detection of a change in the indicator derived by the destination apparatus, to transmit a request for a determination of a change in the transmit power of the intermediate apparatus. The base station (NB) comprises a request receiving means (6) and a determining means (3) which is operable to determine a change in the transmit power of the intermediate apparatus that will tend to bring said indicator derived by the destination apparatus towards said desired value. Thus, said request for a change in the transmit power of the intermediate apparatus is transmitted locally from said determining means of the base station to said control means (7) of the base station.

Figure 10B shows a communication system wherein, in addition to an indicator derivation means (not shown), the destination apparatus is provided with an indicator deviation detection means (2) and a determining means (3). Thus, said request is transmitted from the determining means of the destination apparatus to the control means (7) of the base station. As shown in Figure 10B, the request may be transmitted via the intermediate apparatus (RN) which may comprise request modifying means (8b), operable to determine if the request for a change in the transmit power of the intermediate apparatus can be satisfied and, if necessary, to modify the request to one that can be met.

Figure 10C shows a communication system in which the base station (NB) comprises an indicator receiving means (6), an indicator deviation detection means (2), a determining means (3) and a control means (7). Thus, said request for a change in the transmit power of the intermediate apparatus is transmitted locally from said determining means of the base station to said control means (7) of the base station.

It can be seen from Figures 10A, 10B and 10C that a base station provided according to an embodiment of the third example may comprise: i) a control means; ii) a determining means and a control means; or iii) an indicator deviation detection means, a determining means and a control means. Similarly a destination apparatus provided in accordance with an embodiment of the first example may comprise, indicator derivation means; indicator derivation means and indicator deviation detection means; or indicator derivation means, indicator deviation detection means and determining means.

Figure 11 shows parts of a base station, generally designated 11, which comprises an indicator receiving means (9), and imbalance detection means (10) and a change determining means (3) and a command means (7).

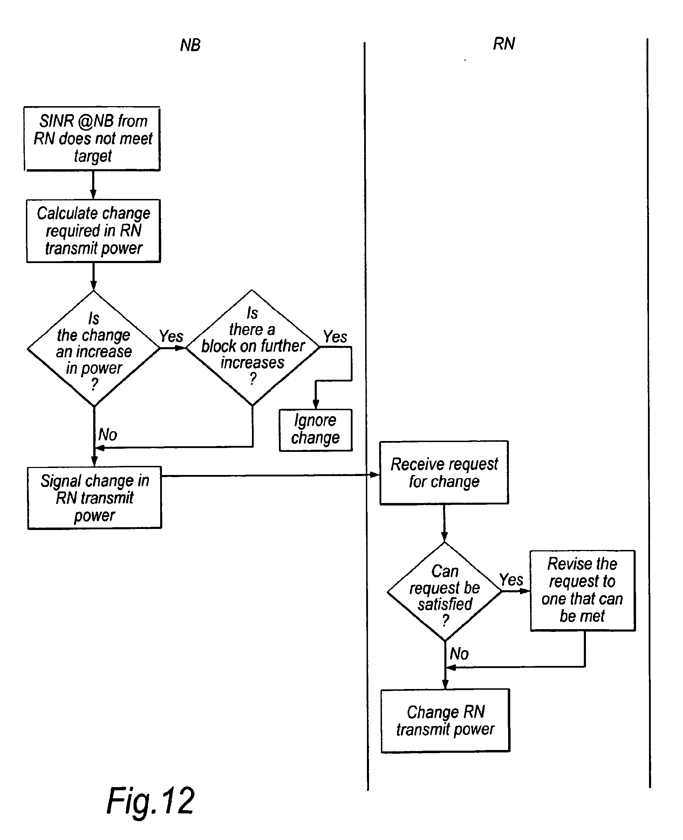

A fourth example of an algorithm will now be described with reference to Figure 12, in which the source apparatus comprises a user equipment (UE), the intermediate apparatus comprises a relay node (RN) which is of the type, and the destination apparatus comprises a base station (NB). The base station continually monitors the SINR and derives indicators of the SINR and the variation from target SINR.

The following sequence takes place following detection of a change in an indicator derived by the base station from a desired value in order to determine a change in the transmit power of the intermediate apparatus which will tend bring the indicator derived by the destination apparatus back to said desired value.

The details of the algorithm are summarised as follows:

**Uplink Algorithm 3: Part 1**

**Trigger: Periodically executed in NB**

| Algorithm Input | Required by | Origin |
|---|---|---|
| Request for change in RN Transmit Power | RN | Change derived in NB and processed by RN |
| Block in increase in RN Transmit Power | RN | Block is set/cleared in part 2 of the algorithm |

| Algorithm Output | Derivation | Destination & Signalling Requirement |
|---|---|---|
| Change in RN transmit power | Relative change | Relative change derived at NB and made by RN |

1. The base station detects a change in an indicator of SINR or in an indicator of the variation from target SINR such that the SINR at the destination apparatus does not meet its target.

2. The determining means of the destination determines the required change in the transmit power of the intermediate apparatus (RN).

3. A request is transmitted locally to a control means of the destination apparatus for a change in the RN transmit power.

4. If the request is for a decrease in the RN transmit power, the control means issues a command to the intermediate apparatus for a decrease in the transmit power of the RN.

5. If the request is for an increase in the RN transmit power, the control means checks whether a prohibition, or block, is currently in place which prohibits increases in the RN transmit power. Then:

5a. If it is determined that a prohibition is in place, the control means ignores the request; or
5b. If it is determined that no prohibition is in place, the control means issues a command to the intermediate apparatus; commanding an increase in the transmit power of the RN.

6. The RN receives a command from the control means of the NB and checks whether it can change its transmit power in accordance with the command. Then:

6a: If the RN determines that it cannot change its transmit power in accordance with the command, it determines a revised change in transmit power and adjusts its transmit power in accordance with the revised transmit power; or
6b: If the RN determines that it can change its transmit power in accordance with the command, the RN changes its transmit power accordingly.

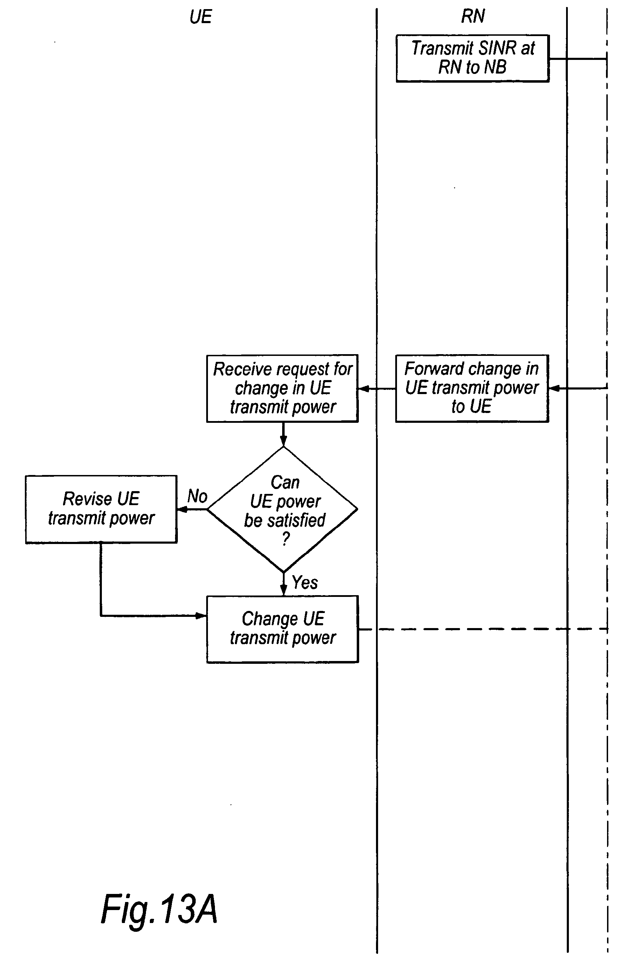

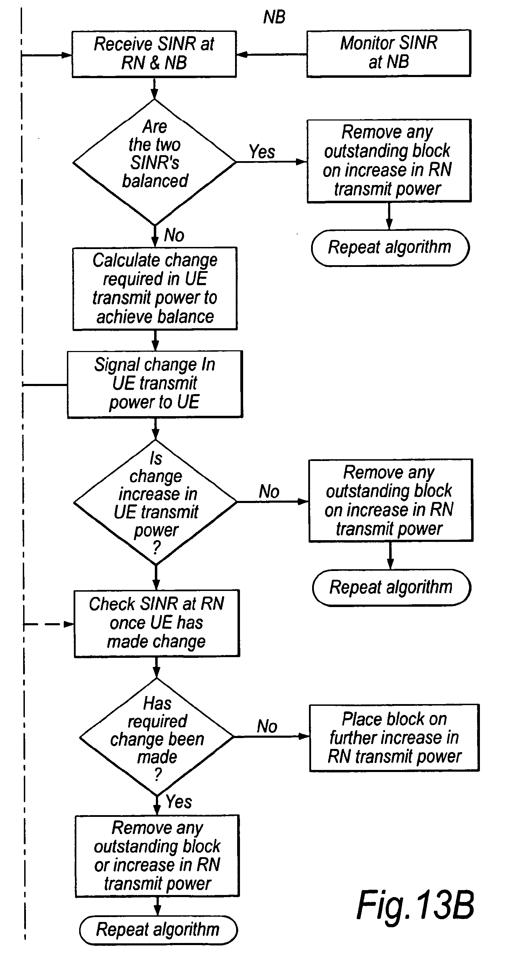

The algorithm described above will manage the case of the propagation loss varying between the RN and NB and the case of the NB modifying its target RSS or SINR. In order to handle the case of the propagation loss varying between the UE and RN and the case that both the target in the NB and the propagation loss between the RN and NB varies, such that no request for change in RN transmit power is generated, an algorithm described with reference to Figure 13 operates periodically as discussed below.

The details of the algorithm are summarised as follows:

**Uplink Algorithm 3: Part 2**
**Trigger: Periodically executed in NB**

| Algorithm Input | Required by | Origin |
| --- | --- | --- |
| SINR at NB | NB | Known at NB |
| SINR at RN | NB | Signalled from RN |

| Algorithm Output | Derivation | Destination & Signalling Requirement |
| --- | --- | --- |
| Change in UE transmit power | Relative change | Signalled to UE via RN |
| Block on RN power increase | True/false test | Part 1 of the algorithm |

This algorithm is executed periodically in addition to the algorithm discussed above with reference to Figure 12. Alternatively, it is also possible for this algorithm to be implemented separately in a wireless multi-hop communication system.

The algorithm assumes that indicators of the SINR at the NB and RN are reported to the NB.

1. The NB monitors the indicators of the SINR from both the NB and RN. Then:

1 a. if these are found to vary such that they are imbalanced, a control means of the NB determines the change in transmit power of the UE that is required to restore a balance in SINR; or
1b. If these are found to be balanced, a control means of the NB lifts any existing prohibition on an increase in the transmit power of the RN.

2. The control means issues a command tp the UE, via the intermediate apparatus, commanding a change in the transmit power of the UE.

3. The UE receives the command from the NB and determines if it can carry out the required change in transmit power. Then:

3a. If it is determined that the UE cannot carry out the required change, the UE determines a revised change in transmit power and changes its transmit power in accordance with this revised change; or
3b. If it is determined that the UE can carry out the required change, the UE changes its transmit power in accordance with the required change.

4. If the command issued by the control means was for a decrease in the transmit power of the source apparatus, the control means lifts any existing prohibition on an increase in the transmit power of the RN.

5. If the command issued by the control means was for an increase in transmit power, the control means monitors the SINR indicator derived at the intermediate apparatus to determine if the commanded change in transmit power of the source apparatus has been effected. Then:

5a. if it is determined that the change was not effected by the UE, the control means places a prohibition on further increases in the transmit power of the RN; or
5b. If it is determined that the change was effected by the UE, the control means lifts any existing prohibition on an increase in the transmit power of the RN.

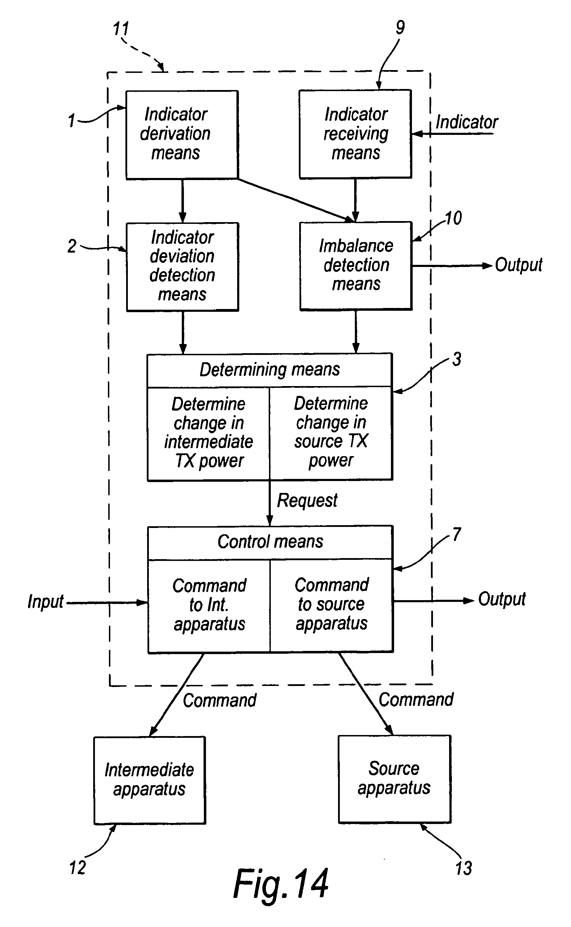

Figure 14 shows parts of a base station, generally designated 11, comprising:

indicator derivation means (1), operable to derive one or more indicators of the quality of a communication signal received at the base station; indicator deviation detection means (2) operable to detect a change in the, or one of the, indicators derived by the base station; indicator receiving means (9), operable to receive an indicator derived by the intermediate apparatus;
imbalance detection means (10) operable to detect an imbalance between an indicator derived by the indicator derivation means and an indicator received by the indicator receiving means;
determining means (3), operable to determine a change in the transmit power of the intermediate apparatus and/or a change in the transmit power of the source apparatus, as the case may be, following detection of an indicator change by the indicator deviation detection means (2) and/or following detection of an imbalance by the imbalance detection means (10); and
control means (7), operable to receive a request from the determining means and, subject to various checks being performed by the control means, to issue a command to the intermediate apparatus and/or the source apparatus, as the case may be, commanding a change in the transmit power of the intermediate apparatus and/or the source apparatus respectively.

Following the detection of an imbalance and the issuance of a command to the source apparatus for an increase in the transmit power of the source apparatus, the control means (8) is operable to prohibit an increase in the transmit power of the intermediate apparatus (output) if it is detected by the control means that the command for an increase in the transmit power of the source apparatus was not met. Then, following the detection of a change in the indicator derived by the base station, and prior to issuing a command to the intermediate apparatus for an increase in the transmit power of the intermediate apparatus, the control means is operable to check (input) if any prohibition has been placed on increases in the transmit power of the intermediate apparatus.

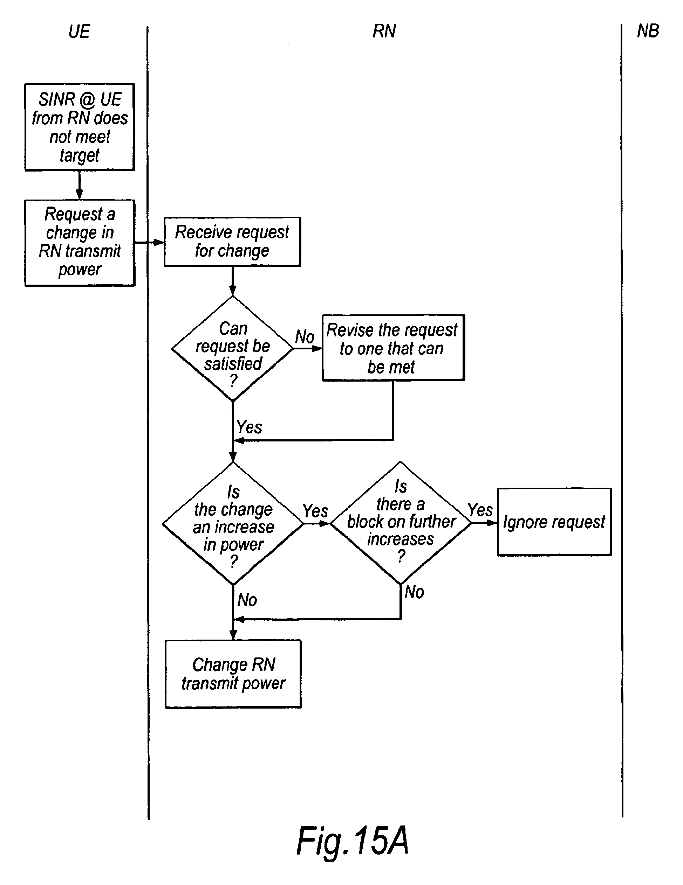

A fifth example of an algorithm will now be described with reference to Figure 15A in the case of downlink transmission in which the source apparatus comprises a node-B (NB), the intermediate apparatus comprises a relay node (RN) which is of the regenerative type, and the destination apparatus comprises a user equipment (UE). The user equipment continually monitors the SINR and derives indicators of the SINR and the variation from target SINR. The destination apparatus is provided with an indicator deviation detection means for detecting a change in one or both of these indicators. The intermediate apparatus is provided with a control means.

The details of the algorithm are summarised as follows:

**Downlink Algorithm 3: Part 1**

**Trigger: RN receives request for change in RN transmit power from UE**

| Algorithm Input | Required by | Origin |
|---|---|---|
| Request for change in RN Transmit Power | RN | Change derived in UE and processed by RN |
| Block in increase in RN Transmit Power | RN | Block is set/cleared in part 2 of the algorithm |

| Algorithm Output | Derivation | Destination & Signalling Requirement |
|---|---|---|
| Change in RN transmit power | Relative change | Relative change derived at UE and made by RN |

The following sequence takes place following detection of a change in an indicator derived by the destination apparatus (UE) from a desired value which in this case is the target SINR. The destination apparatus (UE), following detection of a change, determines the change in the transmit power of the intermediate apparatus which will tend bring the indicator derived by the destination apparatus back to said desired value. Then:

1. The destination apparatus (UE) transmits a request for a change in the RN transmit power to the RN;

2. The RN checks whether the request can be satisfied. If the received request cannot be satisfied by the RN then it is modified to one that can be met.

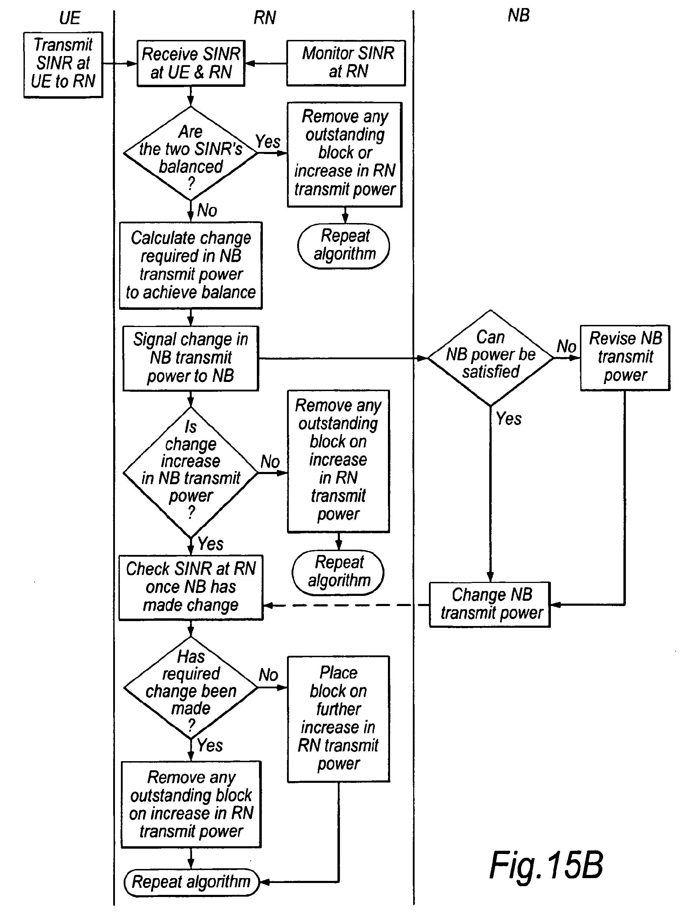

3. If the requested change in transmit power of the RN is an increase, then a check is made to determine whether a block, or prohibition, has been placed on further increases. In this embodiment, the block is placed by the algorithm illustrated by Figure 15B. If a block is in place then the request is ignored, otherwise the RN transmit power is changed accordingly.

The algorithm described above will manage the case of the propagation loss varying between the RN and UE and the case of the UE modifying its target RSS or SINR. In order to handle the case of the propagation loss varying between the NB and RN and the case that both the target in the UE and the propagation loss between the RN and UE varies, such that no request for change in RN transmit power is generated, an algorithm as shown in Figure 15B operates periodically as discussed below.

The following algorithm is executed in addition to the algorithm discussed above with reference to Figure 15A. Thus, the intermediate apparatus comprises indicator derivation means for deriving an indicator of the RN. The intermediate apparatus further comprises imbalance detection means and a second determining means according to an embodiment of the fifth example. Alternatively, it is also possible for the algorithm described with reference to Figure 15A, or the following algorithm shown in Figure 15B, to be implemented separately in a wireless multi-hop communication system.

The details of the algorithm are summarised as follows:

**Downlink Algorithm 3: Part 2**
**Trigger: Periodically executed in RN**

| Algorithm Input | Required by | Origin |
|---|---|---|
| SINR at UE | RN | Signalled from UE |
| SINR at RN | RN | Known at RN |

| Algorithm Output | Derivation | Destination & Signalling Requirement |
|---|---|---|
| Change in NB transmit power | Relative change | Signalled to NB |
| Block on RN power increase | True/false test | Part 1 of the algorithm |

1. The RN monitors the reported SINR from both the UE and the SINR at the RN. If an imbalance exists then the second determining means of the RN calculates the change in NB transmit power that is required to restore a balance in SINR.

2. The RN then signals a command to the NB for a change in the transmit power of the NB according to the change determined in step 1.

3. The NB receives the request and checks that the request can be met. If it can not then it is revised. The NB then changes its transmit power accordingly.

4. If the request from the RN was for an increase in NB transmit power then the RN monitors the received SINR to check that the required change was made. If it is detected that the required change was not made then a block, or prohibition, is placed on further increases in RN transmit power. If this block was not placed then as the NB cannot increase its transmit power, any increase in RN transmit power will cause an imbalance that cannot be rectified, as this would require a further increase in the NB transmit power, compounding any imbalance.

Note that the block on further RN power increase is removed if: it is detected that the SINRs are balanced; a decrease in NB transmit power is requested; or a requested change in NB transmit power is detected to have been made.

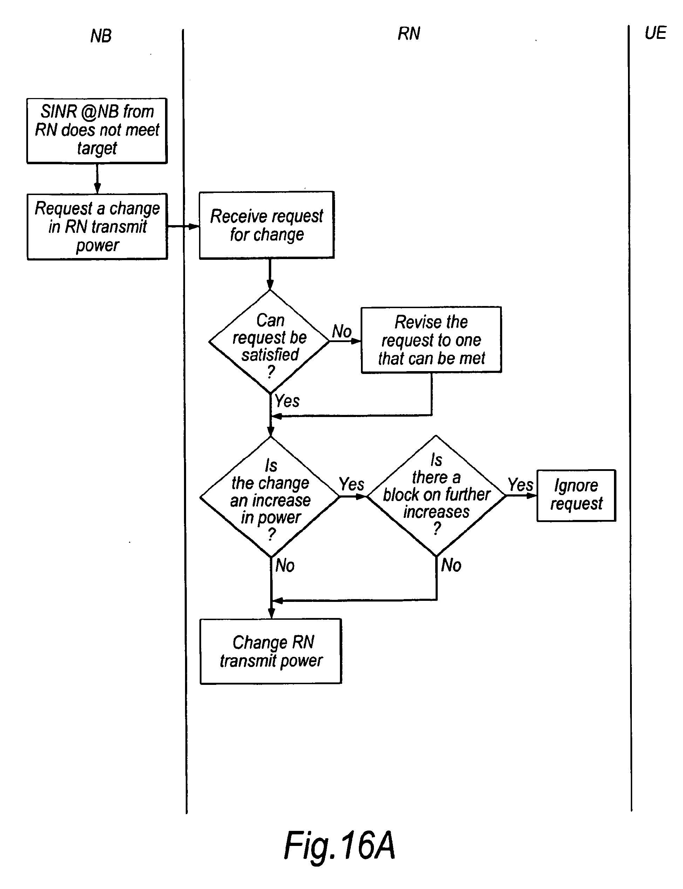

Another example algorithm will now be described with reference to Figure 16A in the case of uplink transmissions in which the source apparatus comprises a user equipment (UE), the intermediate apparatus comprises a relay node (RN) which is of the regenerative type, and the destination apparatus comprises a Node-B (NB). The NB continually monitors the SINR and derives indicators of the SINR and the variation from target SINR. The NB is provided with an indicator deviation detection means for detecting a change in one or both of these indicators. The intermediate apparatus is provided with a control means.

The details of the algorithm are summarised as follows:

**Uplink Algorithm 4: Part 1**

**Trigger: RN receives request for change in RN transmit power from NB**

| Algorithm Input | Required by | Origin |
| --- | --- | --- |
| Request for change in RN Transmit Power | RN | Change derived in NB and processed by RN |
| Block in increase in RN Transmit Power | RN | Block is set/cleared in part 2 of the algorithm |

| Algorithm Output | Derivation | Destination & Signalling Requirement |
| --- | --- | --- |
| Change in RN transmit power | Relative change | Relative change derived at NB and made by RN |

The following sequence takes place following detection of a change in an indicator derived by the destination apparatus (NB) from a desired value. The destination apparatus (NB), following detection of a change, determines the change in the transmit power of the intermediate apparatus which will tend bring the indicator derived by the destination apparatus back to said desired value. Then:

1. The destination apparatus (NB) transmits a request for a change in the RN transmit power to the RN;

2. The RN checks whether the request can be satisfied. If the received request cannot be satisfied by the RN then it is modified to one that can be met.

3. If the requested change in transmit power of the RN is an increase, then a check is made to determine whether a block, or prohibition, has been placed on further increases. In this embodiment, the block is placed by the algorithm illustrated by Figure 15B which embodies the second example. If a block is in place then the request is ignored, otherwise the RN transmit power is changed accordingly.

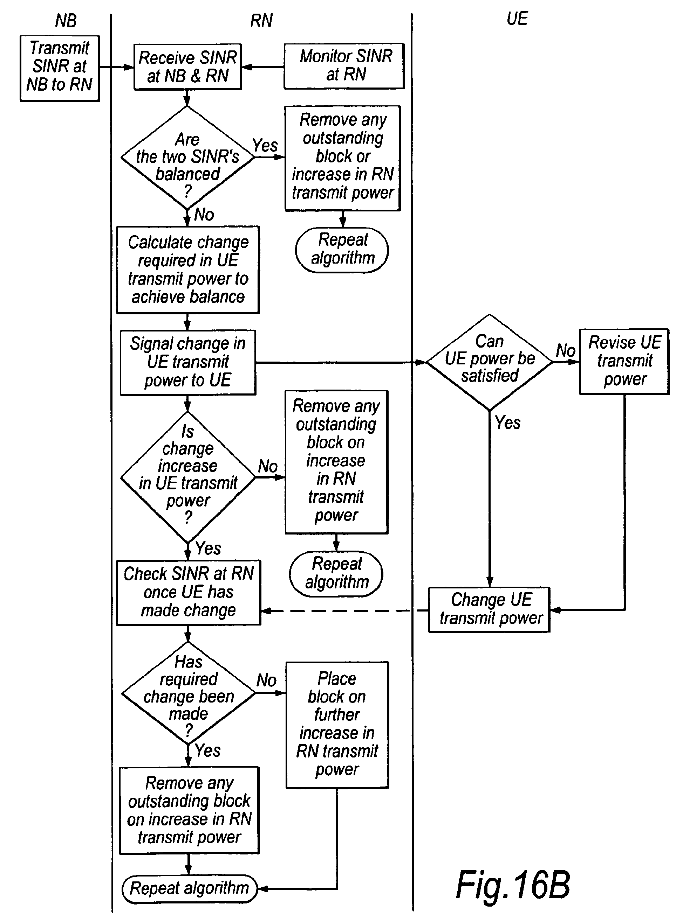

The algorithm described above with reference to Figure 16A will manage the case of the propagation loss varying between the RN and NB and the case of the NB modifying its target RSS or SINR. In order to handle the case of the propagation loss varying between the UE and RN and the case that both the target in the NB and the propagation loss between the RN and NB varies, such that no request for change in RN transmit power is generated, an algorithm as shown in Figure 16B operates periodically as discussed below.

The following algorithm is executed in addition to the algorithm discussed above with reference to Figure 16A. Thus, the intermediate apparatus comprises indicator derivation means for deriving an indicator of the RN. The intermediate apparatus further comprises imbalance detection means and a second determining means according to the second example. Alternatively, it is also possible for the algorithm described with reference to Figure 16A, or the following algorithm shown in Figure 16B to be implemented separately in a wireless multi-hop communication system.

The details of the algorithm are summarised as follows:

**Uplink Algorithm 4: Part 2**

**Trigger: Periodically executed in RN**

| Algorithm Input | Required by | Origin |
| --- | --- | --- |
| SINR at NB | RN | Signalled from NB |
| SINR at RN | RN | Known at RN |

| Algorithm Output | Derivation | Destination & Signalling Requirement |
| --- | --- | --- |
| Change in UE transmit power | Relative change | Signalled to UE |
| Block on RN power increase | True/false test | Part 1 of the algorithm |

1. The RN monitors the reported SINR from both the NB and the SINR at the RN. If an imbalance exists then the second determining means of the RN calculates the change in UE transmit power that is required to restore a balance in SINR.

2. The RN then signals a command to the UE for a change in the transmit power of the UE according to the change determined in step 1.

3. The UE receives the request and checks that the request can be met. If it can not then it is revised. The UE then changes its transmit power accordingly.

4. If the request from the RN was for an increase in UE transmit power then the RN monitors the received SINR to check that the required change was made. If it is detected that the required change was not made then a block, or prohibition, is placed on further increases in RN transmit power.

Note that the block on further RN power increase is removed if: it is detected that the SINRs are balanced; a decrease in UE transmit power is requested; or a commanded change in UE transmit power is detected to have been made.

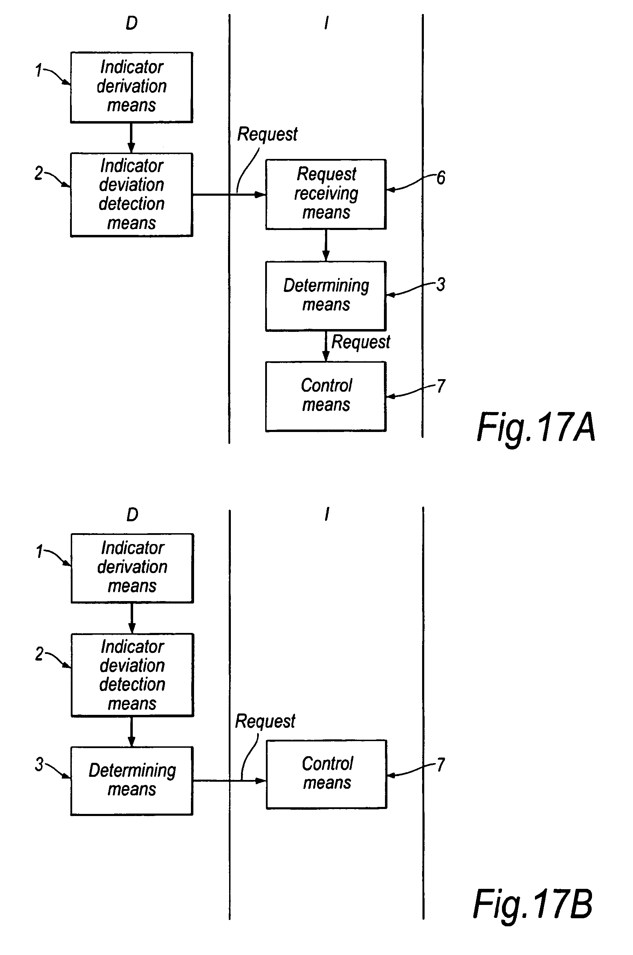

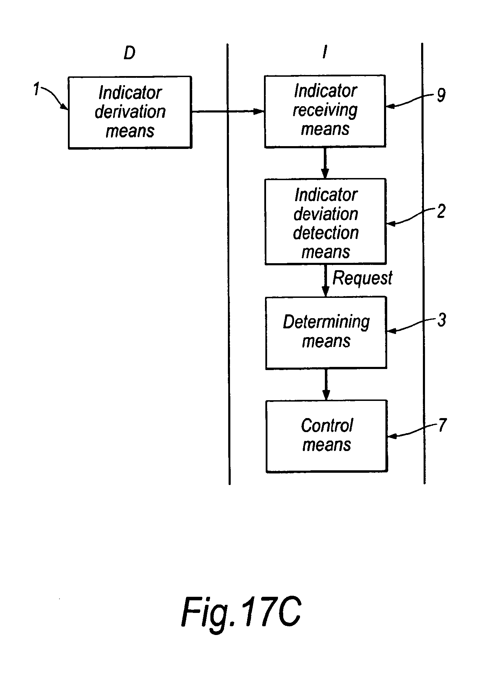

There are a number of ways in which the signalling required to carry out the fifth example may be implemented and these are illustrated in Figures 17A, 17B and 17C in which the same reference numerals are used to refer to parts which provide the same function.

Figure 17A shows a communication system in which the destination apparatus (D) is provided with an indicator derivation means (1), an indicator deviation detection means (2) and is operable, following detection of a change in the indicator derived by the destination apparatus, to transmit a request for a determination of a change in the transmit power of the intermediate apparatus to the intermediate apparatus. The intermediate apparatus (I) comprises a request receiving means (6) and a determining means (3) which is operable to determine a change in the transmit power of the intermediate apparatus that will tend to bring said indicator derived by the destination apparatus towards said desired value. Thus, said request for a change in the transmit power of the intermediate apparatus is transmitted locally from said determining means of the source apparatus to said control means (7) of the intermediate apparatus.

Figure 17B shows a communication system wherein, in addition to an indicator derivation means (1), the destination apparatus is provided with an indicator deviation (2) detection means and a determining means (3). Thus, said request is transmitted from the determining means of the destination apparatus to the control means (7) of the intermediate apparatus.

Figure 17C shows a communication system in which the intermediate apparatus (I) comprises an indicator receiving means (9), an indicator deviation detection means (2), a determining means (5) and a control means (7). Thus, said request for a change in the transmit power of the intermediate apparatus is transmitted locally from said determining means of the source apparatus to said control means (7) of the source apparatus.

It can be seen from Figures 17A, 17B and 17C that the intermediate apparatus may comprise: i) a control means; ii) a determining means and a control means; or iii) an indicator deviation detection means, a determining means and a control means. Similarly, a destination apparatus may comprise: indicator derivation means; indicator derivation means and indicator deviation detection means; or indicator derivation means, indicator deviation detection means and determining means.

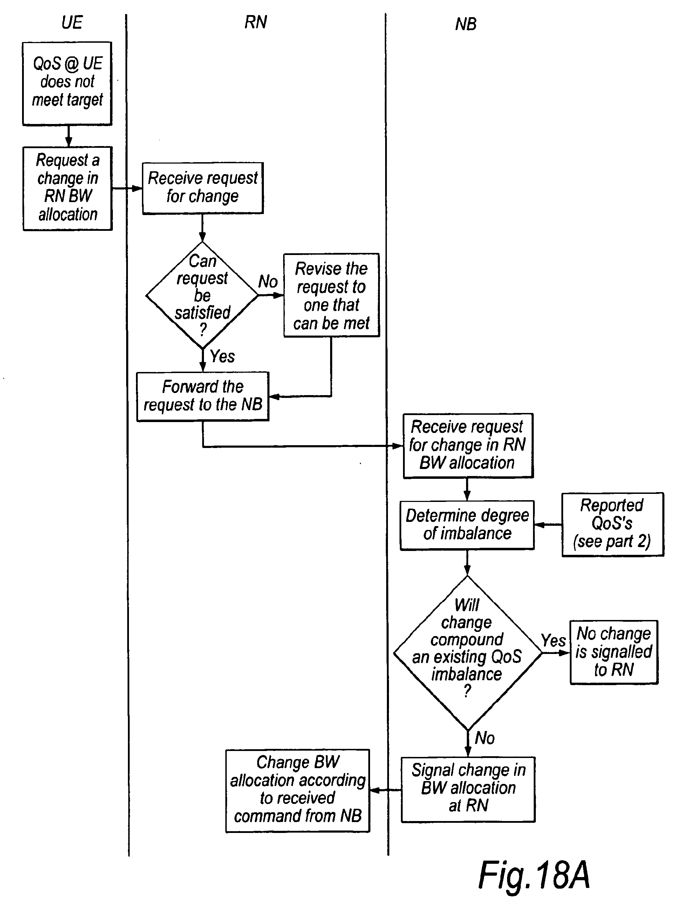

A communication system according to a first embodiment of the present invention will now be described with reference to Figure 18A in which the source apparatus comprises a node-B (NB), the intermediate apparatus comprises a relay node (RN) and the destination apparatus comprises a user equipment (UE). The first embodiment seeks to attain or maintain a balance between the QoS experienced on each of the communication links of a multi-hop communication system by adjusting the bandwidth allocated to one or more of the transmitters. The determination of the required bandwidth allocation or the change in the required bandwidth allocation is carried out in parts associated with the NB.

The present embodiment seeks to attain or maintain a balance between the QoS experienced on the DL communication links (NB - RN and RN - UE) by adjusting the bandwidth allocated to the RN - UE communication link.

The details of the algorithm are summarised as follows:

**Downlink Algorithm 1A: Part 1 (Centralised with UE QoS derived in UE)**
**Trigger: RN receives request for change in BW allocated by RN from UE**

| Algorithm Input | Required by | Origin |
|---|---|---|
| Request for change in BW allocation at RN | NB | Change derived in UE, modified at RN and signalled to NB |
| QoS/SINR at UE (see part 2) | NB | |
| QoS/SINR at RN (see part 2) | NB | |

| Algorithm Output | Derivation | Destination & Signalling Requirement |
|---|---|---|
| Change in RN BW allocation | Relative change | Derived at UE, checked by RN, approved by NB and actioned by RN |

The following sequence takes place following deviation of a change in an indicator of the QoS derived for the destination apparatus from a desired value, which in this case is the target QoS of the destination apparatus, in order to determine a change in the bandwidth allocated to the transmitter of the intermediate apparatus which will tend bring the indicator derived for the destination apparatus back to said desired value.

1. The destination apparatus detects a change in an indicator of QoS or in an indicator of the variation from target QoS such that the QoS at the destination apparatus does not meet its target.

2. The destination apparatus transmits a request for a change in the RN bandwidth allocation to the RN;

3. The RN determines if it can satisfy this request.

3a. If the request can be satisfied, it is propagated to the NB; or
3b. If it cannot be satisfied, the RN determines a revised request and propagates this to the NB.

4. A control means provided in the NB receives a request for a change in the bandwidth allocated to the RN for the RN - UE communication link.

5. The NB receives an input signal comprising an indication of the QoS at the UE and the QoS at the RN and determines if an imbalance exists between the QoS at the UE and the QoS at the RN.

5a. If an imbalance exists and the requested change in the bandwidth allocated to the RN will compound such an imbalance between the QoS at the UE and the QoS at the RN, the control means ignores said request; or
5b. If no imbalance exists, or if an imbalance exists but the requested change in the bandwidth allocated to the RN will not compound such an imbalance between the QoS at the UE and the QoS at the RN, the control means issues a command to the RN, commanding a change in the bandwidth allocation at the RN;

6. The RN receives a command from the control means of the NB and adjusts its bandwidth in accordance with the command.

According to the algorithm shown in Figure 18A, the destination user equipment continually monitors the QoS and derives indicators of the QoS and the variation from target QoS.

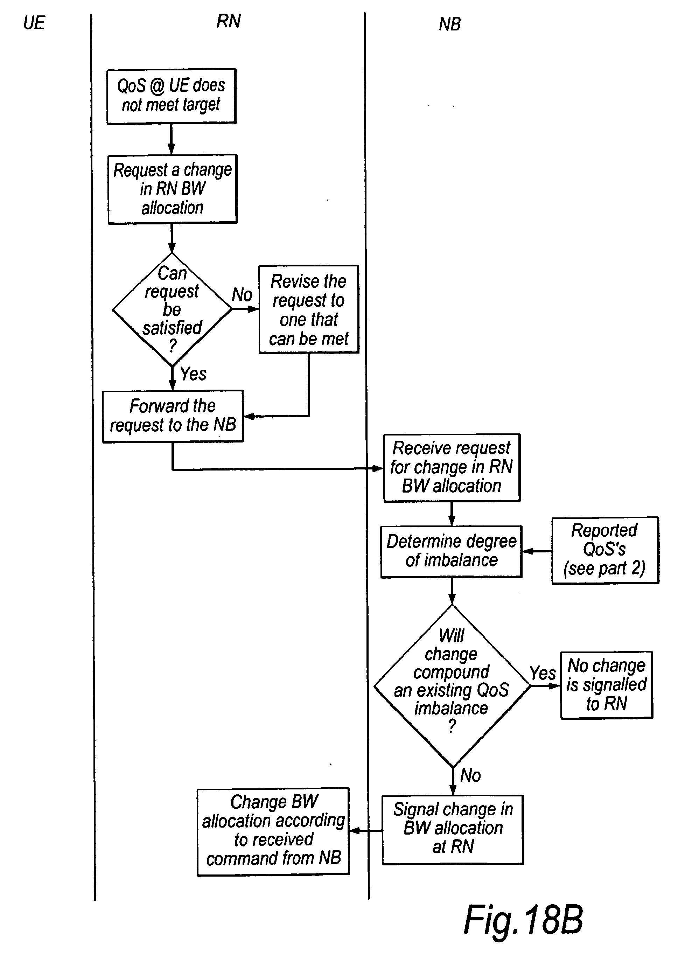

Figure 18B shows an algorithm which is similar to the algorithm described above with reference to Figure 18A and which may be implemented in a multi-hop communication system instead of the algorithm shown in Figure 18A. The details of this algorithm may be summarised as follows:

**Downlink Algorithm 1B: Part 1 (Centralised with UE QoS derived at RN)**
**Trigger: RN generates a request for change in BW allocated by RN to the UE**

| Algorithm Input | Required by | Origin |
|---|---|---|
| Request for change in BW allocation at RN | NB | Change derived in RN, modified at RN and signalled to NB |
| QoS/SINR at UE (see part 2) | NB | |
| QoS/SINR at RN (see part 2) | NB | |

| Algorithm Output | Derivation | Destination & Signalling Requirement |
|---|---|---|
| Change in RN BW allocation | Relative change | Derived at RN, checked by RN, approved by NB and actioned by RN |

The difference between the algorithms shown in Figures 18A and 18B is that instead of the QoS indicator being derived through direct measurements made by the receiving entity UE (as in Figure 18A) the QoS indicator for the RN to UE link is derived remotely at the RN.

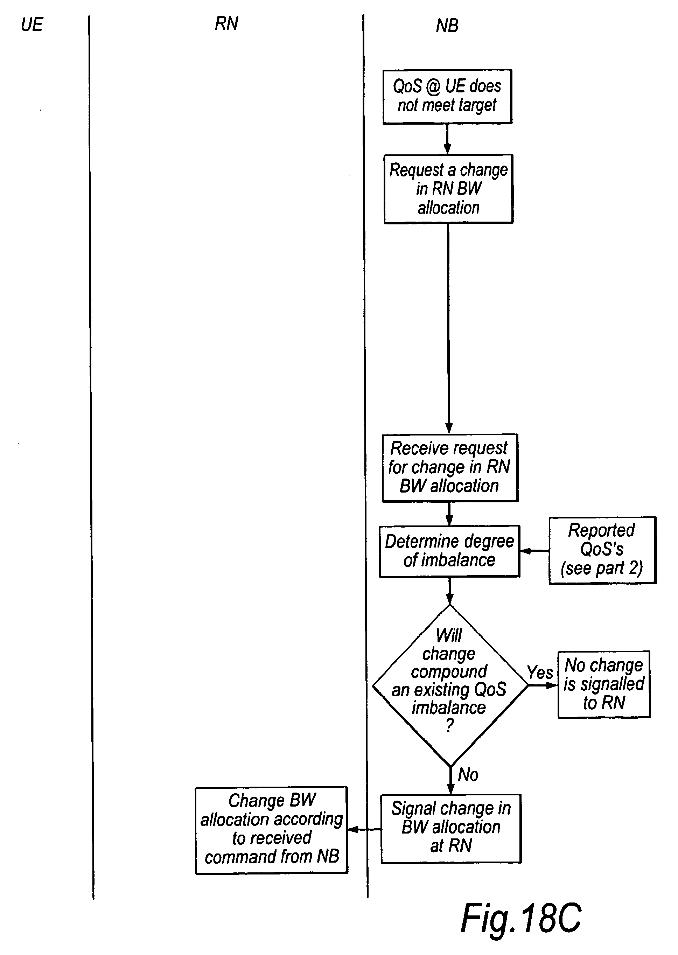

As a further alternative as shown in Figure 18C, the QoS indicator for the RN to UE link may be derived remotely at the NB. The details of the algorithm shown in Figure 18C may be summarised as follows:

**Downlink Algorithm 1C: Part 1 (Centralised with UE QoS derived at NB)**

**Trigger: NB generates a request for change in BW allocated by RN to the UE**

| Algorithm Input | Required by | Origin |
| --- | --- | --- |
| Request for change in BW allocation at RN | NB | Change derived in NB and signalled to NB |
| QoS/SINR at UE (see part 2) | NB | |
| QoS/SINR at RN (see part 2) | NB | |

| Algorithm Output | Derivation | Destination & Signalling Requirement |
| --- | --- | --- |
| Change in RN BW allocation | Relative change | Derived at NB, approved by NB and actioned by RN |

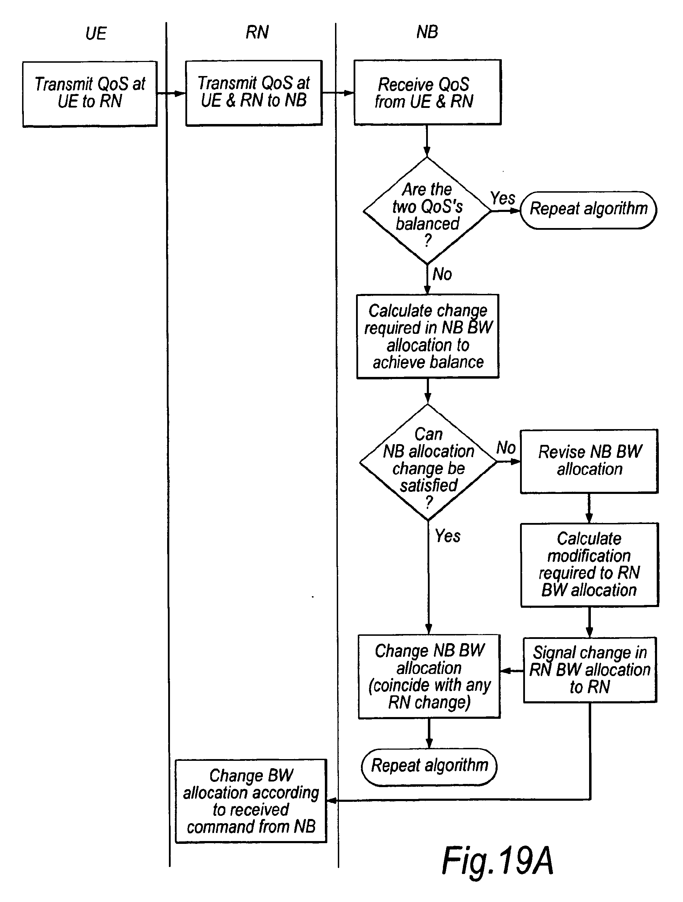

Any one of the algorithms described with reference to Figure 18A, 18B or 18C will manage the case of the propagation loss varying between the RN and UE and the case of the UE modifying its target QoS. In order to handle the case of the propagation loss varying between the NB and RN and the case that both the target in the UE and the propagation loss between the RN and UE varies, such that no request for change in RN bandwidth allocation is generated, an algorithm which implements a second embodiment of the present invention operates periodically, as discussed below, with reference to Figure 19A.

The details of the algorithm according to the second embodiment are summarised as follows:

**Downlink Algorithm 1A: Part 2 (Centralised with UE & RN QoS reported to NB)**

**Trigger: Periodically executed in NB**

| Algorithm Input | Required by | Origin |
| --- | --- | --- |
| QoS at UE | NB | Signalled from UE via RN |
| QoS at RN | NB | Signalled from RN |

| Algorithm Output | Derivation | Destination & Signalling Requirement |
| --- | --- | --- |
| Change in NB BW allocation | Relative change | Used by NB |
| Change in RN BW allocation | Relative change | Change signalled to RN |

According to a preferred embodiment, this algorithm is executed periodically in a multi-hop communication system in addition to either one of the algorithms discussed above with reference to Figures 18A, B and C. Alternatively, it is also possible for this algorithm, to be implemented separately in a wireless multi-hop communication system.

The algorithm shown in Figure 19A assumes that indicators of the QoS at the UE and RN are reported to the NB.

1. The NB monitors the indicators of the QoS derived for both the UE and the RN. If these are found to vary such that they are imbalanced, a control means of the NB determines the change in NB bandwidth allocation that is required to restore a balance in QoS.

2. The NB determines if it can carry out the required change in bandwidth that will restore balance.

2a. If it is determined that the NB cannot carry out the required change, the NB determines a revised change in NB bandwidth allocation. The control means issues i) a command to the NB commanding a change in the bandwidth allocated to the NB and ii) a command to the RN commanding a change in the bandwidth allocated to the RN; or

2b. If it is determined that the NB can carry out the required change, the NB control means issues a (local) command to the NB commanding a change in the bandwidth allocation of the NB.

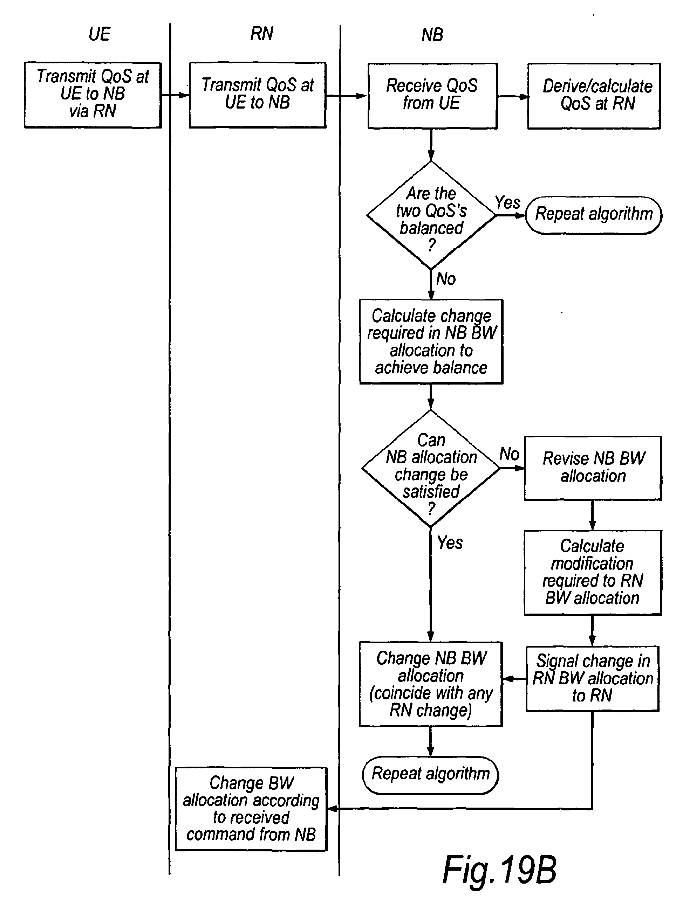

According to the algorithm shown in Figure 19A, the destination UE and the RN continually monitor the QoS and derive indicators of the QoS. Alternatively, as shown in Figure 19B, an algorithm may be implemented in which the QoS indicator for the NB to RN link is derived remotely at the NB whilst the QoS indicators for the RN to UE communication link are derived directly at the UE. Thus, the RN merely conveys the QoS indicator derived at the UE for the RN to UE communication link and does not derive any QoS indicators. The details for the algorithm shown in Figure 19B are summarised as follows:

**Downlink Algorithm 1A: Part 2 (Centralised with UE QoS reported to NB and RN QoS derived in NB)**

**Trigger: Periodically executed in NB**

| Algorithm Input | Required by | Origin |
|---|---|---|
| QoS at UE | NB | Signalled from UE via RN |
| QoS at RN | NB | Derived/calculated in NB |

| Algorithm Output | Derivation | Destination & Signalling Requirement |
|---|---|---|
| Change in NB BW allocation | Relative change | Used by NB |
| Change in RN BW allocation | Relative change | Change signalled to RN |

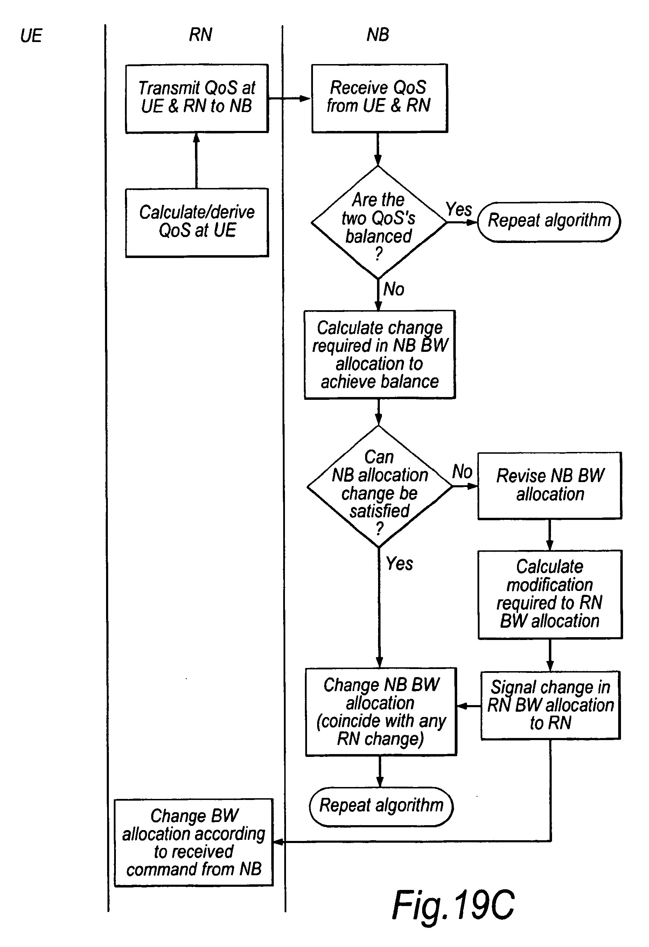

As a further alternative, the UE QoS indicator may be derived remotely at the RN. As shown in Figure 19C, the RN may be operable to derive QoS indicators for both the communication links terminating at the RN and the UE. The details for the algorithm shown in Figure 19C may be summarised as follows:

**Downlink Algorithm 1B: Part 2 (Centralised with UE QoS derived in RN)**

**Trigger: Periodically executed in NB**

| Algorithm Input | Required by | Origin |
|---|---|---|
| QoS at UE | NB | Derived/calculated at RN and signalled to NB |
| QoS at RN | NB | Signalled from RN |

| Algorithm Output | Derivation | Destination & Signalling Requirement |
|---|---|---|
| Change in NB BW allocation | Relative change | Used by NB |
| Change in RN BW allocation | Relative change | Change signalled to RN |

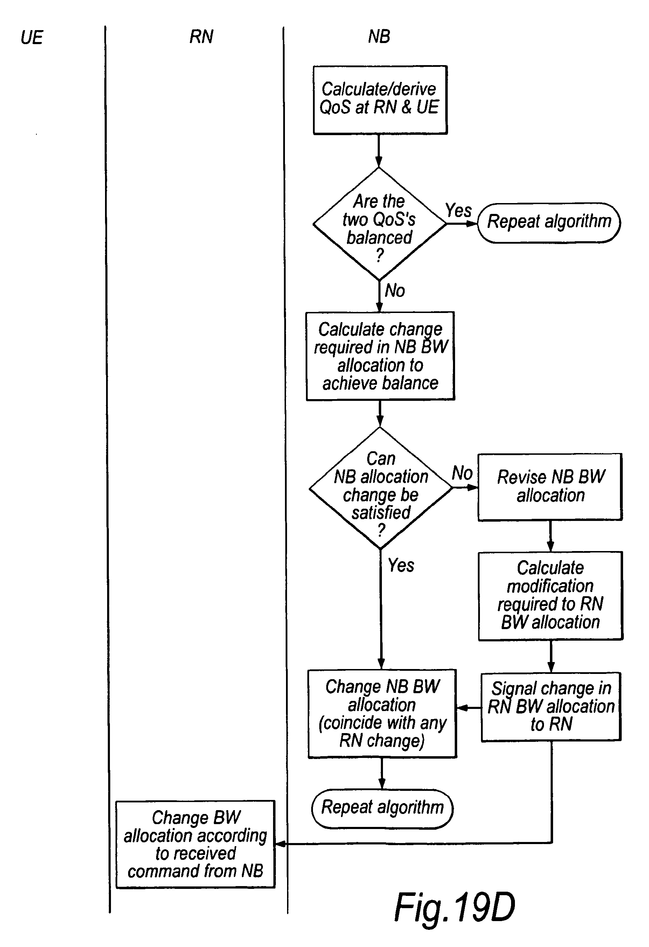

As a still further alternative, the UE and RN QoS indicators may be derived remotely at the NB. As shown in Figure 19D, the NB may be operable to derive QoS indicators for both the communication links terminating at the RN and the UE. The details for the algorithm shown in Figure 19D may be summarised as follows:

**Downlink Algorithm 1C: Part 2 (Centralised with UE & RN QoS derived at NB)**

**Trigger: Periodically executed in NB**

| Algorithm Input | Required by | Origin |
|---|---|---|
| QoS at UE | NB | Derived/calculated at NB |
| QoS at RN | NB | Derived/calculated at NB |

| Algorithm Output | Derivation | Destination & Signalling Requirement |
|---|---|---|
| Change in NB BW allocation | Relative change | Used by NB |
| Change in RN BW allocation | Relative change | Change signalled to RN |

It will be appreciated that any one of the algorithms illustrated by Figures 18A, 18B and 18C may be implemented in conjunction with any one of the algorithms illustrated by Figures 19A, 19B, 19C and 19D.

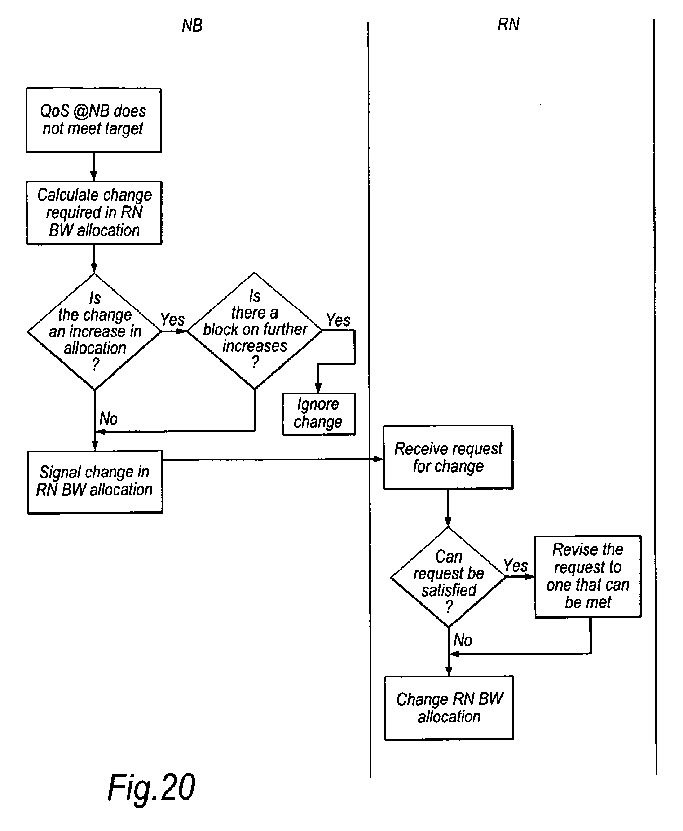

An example of an algorithm which implements a third embodiment of the present invention will now be described with reference to Figure 20, in which the source apparatus comprises a user equipment (UE), the intermediate apparatus comprises a relay node (RN) and the destination apparatus comprises a base station (NB). The present embodiment seeks to attain or maintain a balance between the QoS experienced on the UL communication links (UE - RN and RN - NB) by adjusting the bandwidth allocated to the RN - UE communication link.

The details of the algorithm are summarised as follows:

**Uplink Algorithm 1A&B: Part 1 (Centralised with QoS derived at NB)**

**Trigger: Periodically executed in NB**

| Algorithm Input | Required by | Origin |
|---|---|---|
| Request for change in BW allocation at RN | RN | Change derived in NB and processed by RN |
| Block in increase in BW allocation at RN | RN | Block is set/cleared in part 2 of the algorithm |

| Algorithm Output | Derivation | Destination & Signalling Requirement |
|---|---|---|
| Change in RN BW allocation | Relative change | Relative change derived at NB and made by RN |

The following sequence takes place following detection of a change in a QoS indicator derived for the base station from a desired value in order to determine a change in the bandwidth allocated to the intermediate apparatus which will tend bring the indicator derived for the destination apparatus back to said desired value.

1. The NB detects a change in an indicator of QoS or in an indicator of the variation from target QoS such that the QoS at the destination apparatus does not meet its target.

2. The NB calculates the required change in the bandwidth allocated to the intermediate apparatus (RN);

3. If the request is for a decrease in the RN bandwidth allocation, the NB issues a command to the RN for a decrease in the bandwidth allocated to the RN.

4. If the request is for an increase in the RN bandwidth allocation, the NB checks whether a prohibition, or block, is currently in place which prohibits increases in the RN bandwidth allocation. Then:

4a. If it is determined that a prohibition is in place, the NB ignores the request; or
4b. If it is determined that no prohibition is in place, the NB issues a command to the RN commanding an increase in the bandwidth allocated to the RN.

5. The RN receives a command from the control means of the NB and checks whether it can change its bandwidth in accordance with the command. Then:

6a: If the RN determines that it cannot change its bandwidth in accordance with the command, it determines a revised change in bandwidth and adjusts its bandwidth in accordance with the revised change; or
6b: If the RN determines that it can change its bandwidth in accordance with the command, the RN changes its bandwidth accordingly.

The algorithm described above will manage the case of the propagation loss varying between the RN and NB and the case of the NB modifying its target QoS. In order to handle the case of the propagation loss varying between the UE and RN and the case that both the target in the NB and the propagation loss between the RN and NB varies, such that no request for change in RN bandwidth allocation is generated, an algorithm which implements a fourth embodiment of the present invention operates periodically as discussed below with reference to Figure 21.

The details of the algorithm according to the fourth embodiment are summarised as follows:

**Uplink Algorithm 1A: Part 2 (Centralised with RN QoS derived at RN)**
**Trigger: Periodically executed in NB**

| Algorithm Input | Required by | Origin |
|---|---|---|
| QoS at NB | NB | Known at NB |
| QoS at RN | NB | Signalled from RN |

| Algorithm Output | Derivation | Destination & Signalling Requirement |
|---|---|---|
| Change in UE BW allocation | Relative change | Signalled to UE via RN |
| Block on RN BW allocation increase | True/false test | Part 1 of the algorithm |

This algorithm is executed periodically in addition to the algorithm discussed above with reference to Figure 20. Alternatively, it is also possible for this algorithm to be implemented separately in a wireless multi-hop communication system.

The algorithm assumes that indicators of the QoS at the NB and RN are reported to the NB.

1. The NB derives and monitors indicators of the QoS for the NB and also monitors indicators of the QoS derived for the RN. Then:

1 a. if these are found to vary such that they are imbalanced, a control means of the NB determines the change in the bandwidth allocated to the UE that is required to restore a balance in the indicators of QoS derived for each of the communication links; or
1b. If these are found to be balanced, a control means of the NB lifts any existing prohibition on an increase in the bandwidth allocated to the RN.

2. The control means issues a command to the UE, via the intermediate apparatus, commanding a change in the bandwidth allocation of the UE.

3. The UE receives the command from the NB and determines if it has the resource to carry out the required change in bandwidth. Then:

3a. If it is determined that the UE cannot carry out the required change, the UE determines a revised change in bandwidth allocation and changes its bandwidth in accordance with this revised change; or
3b. If it is determined that the UE can carry out the required change, the UE changes its bandwidth in accordance with the required change.

4. If the command issued by the control means was for a decrease in the bandwidth allocated to the UE, the control means lifts any existing prohibition on an increase in the bandwidth allocated to the RN.

5. If the command issued by the control means was for an increase in the bandwidth allocation, the control means monitors the QoS indicator derived for the intermediate apparatus to determine if the commanded change in bandwidth allocation of the UE has been effected. Then:

5a. if it is determined that the change was not effected by the UE, the control means places a prohibition on further increases in the bandwidth allocation of the RN; or
5b. If it is determined that the change was effected by the UE, the control means lifts any existing prohibition on an increase in the bandwidth allocation of the RN.

As an alternative, the RN QoS indicator may be derived remotely at the NB. As shown in Figure 21 B, the NB may be operable to derive QoS indicators for both the communication link terminating at the RN and the communication link terminating at the NB. The details for the algorithm shown in Figure 21 B may be summarised as follows:

**Uplink Algorithm 1B: Part 2 (Centralised with RN QoS derived at NB)**
**Trigger: Periodically executed in NB**

| Algorithm Input | Required by | Origin |
|---|---|---|
| QoS at NB | NB | Known at NB |
| QoS at RN | NB | Derived/calculated at NB |

| Algorithm Output | Derivation | Destination & Signalling Requirement |
|---|---|---|
| Change in UE BW allocation | Relative change | Signalled to UE via RN |
| Block on RN BW allocation increase | True/false test | Part 1 of the algorithm |

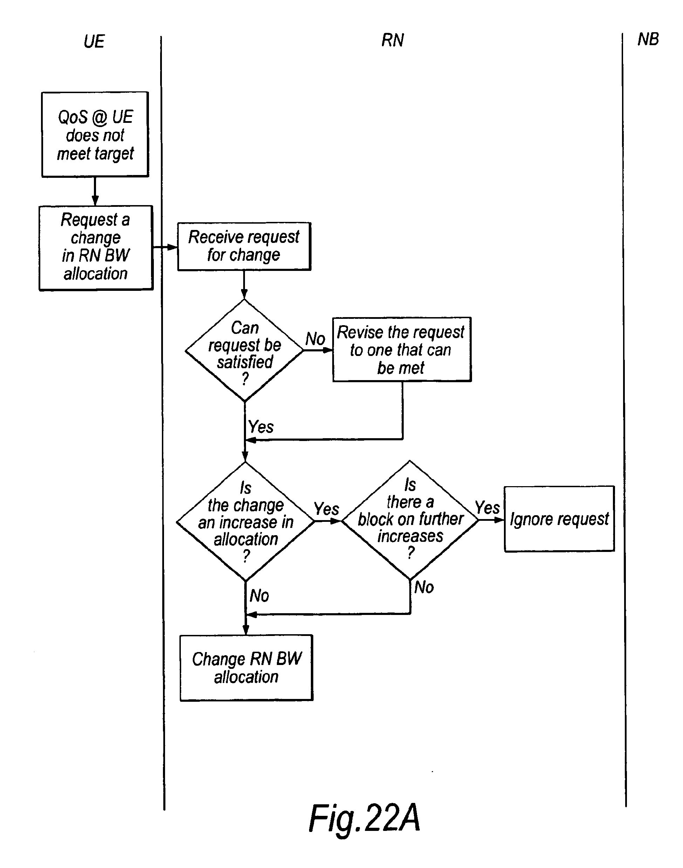

An example of a communication system according to a fifth embodiment of the present invention will now be described with reference to Figure 22A in which the source apparatus comprises a node-B (NB), the intermediate apparatus comprises a relay node (RN) and the destination apparatus comprises a user equipment (UE). Embodiments of the fifth embodiment of the present invention seek to attain or maintain a balance between the QoS experienced on each of the communication links of a multi-hop communication system by adjusting the bandwidth allocated to one or more of the transmitters. According to the fifth embodiment, the determination of the required bandwidth allocation or the change in the required bandwidth allocation is carried out in parts associated with the RN.

The present embodiment seeks to attain or maintain a balance between the QoS experienced on the DL communication links (NB - RN and RN - UE) by adjusting the bandwidth allocated to the RN - UE communication link.

The details of the algorithm are summarised as follows:

**Downlink Algorithm 2A: Part 1 (Distributed with UE QoS derived at UE)**
**Trigger: RN receives request for change in BW allocated at RN from UE**

| Algorithm Input | Required by | Origin |
| --- | --- | --- |
| Request for change in BW allocation at RN | RN | Change derived in UE and processed by RN |
| Block in increase in RN BW allocation | RN | Block is set/cleared in part 2 of the algorithm |

| Algorithm Output | Derivation | Destination & Signalling Requirement |
| --- | --- | --- |
| Change in RN BW allocation | Relative change | Relative change derived at UE and made by RN |

The following sequence takes place following detection of a change in a QoS indicator derived by the destination apparatus (UE) from a desired value which in this case is the target QoS. The destination apparatus (UE), following detection of a change, determines the change in the bandwidth allocation of the intermediate apparatus which will tend bring the indicator derived by the destination apparatus back to said desired value. Then:

1. The destination apparatus (UE) transmits a request for a change in the RN bandwidth allocation to the RN;

2. The RN checks whether the request can be satisfied. If the received request cannot be satisfied by the RN then it is modified to one that can be met.

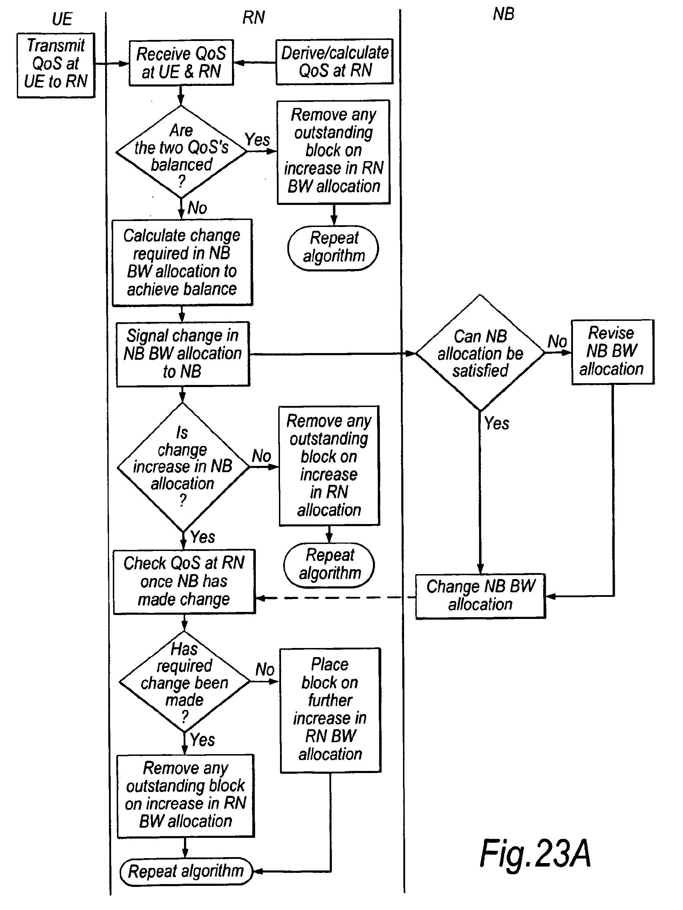

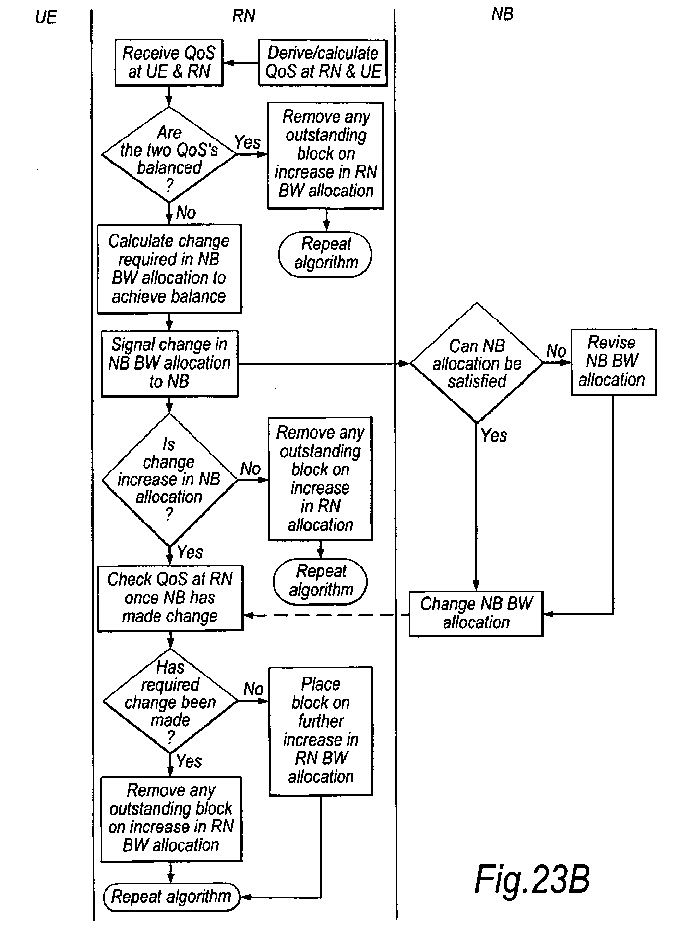

3. If the requested change in bandwidth allocation of the RN is an increase, then a check is made to determine whether a block, or prohibition, has been placed on further increases. In this embodiment, the block is placed by the algorithm illustrated by Figure 23A or 23B which implement a sixth embodiment of the present invention. If a block is in place then the request is ignored, otherwise the RN bandwidth allocation is changed accordingly.

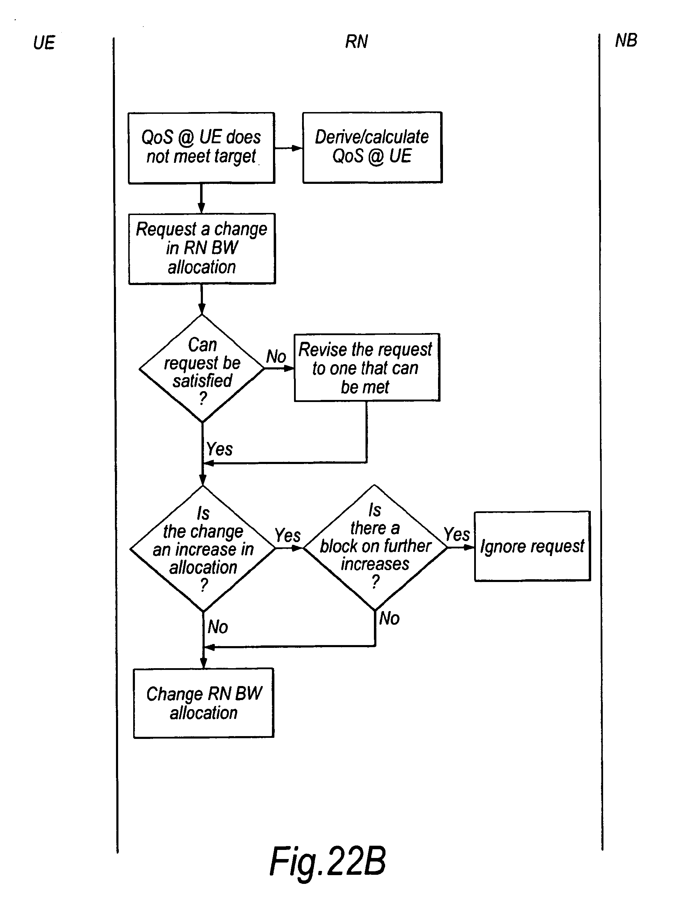

As an alternative, the US QoS indicator may be derived remotely at the RN. As shown in Figure 22B, the RN may be operable to derive QoS indicators for the communication link terminating at the UE. The details for the algorithm shown in Figure 22B may be summarised as follows:

**Downlink Algorithm 2B: Part 1 (Distributed with UE QoS derived at RN)**
**Trigger: RN generates a request for change in BW allocated at RN to the UE**

| Algorithm Input | Required by | Origin |
| --- | --- | --- |
| Request for change in BW allocation at RN | RN | Change derived in RN and processed by RN |
| Block in increase in RN BW allocation | RN | Block is set/cleared in part 2 of the algorithm |

| Algorithm Output | Derivation | Destination & Signalling Requirement |
| --- | --- | --- |
| Change in RN BW allocation | Relative change | Relative change derived at RN and made by RN |

The algorithms described above with reference to Figures 22A and 22B will manage the case of the propagation loss varying between the RN and UE and the case of the UE modifying its target QoS. In order to handle the case of the propagation loss varying between the NB and RN and the case that both the target in the UE and the propagation loss between the RN and UE varies, such that no request for change in RN bandwidth is generated, an algorithm such as that shown in Figure 23A operates periodically as discussed below.

Figure 23A shows an algorithm which implements a sixth embodiment of the present invention. In this embodiment, the following algorithm is executed in addition to the algorithm discussed above with reference to Figure 22A or 22B.

The details of the algorithm are summarised as follows:

**Downlink Algorithm 2A: Part 2 (Distributed with UE QoS derived at UE and signalled to RN)**

**Trigger: Periodically executed in RN**

| Algorithm Input | Required by | Origin |
|---|---|---|
| QoS at UE | RN | Signalled from UE |
| QoS at RN | RN | Known at RN |

| Algorithm Output | Derivation | Destination & Signalling Requirement |
|---|---|---|
| Change in NB BW allocation | Relative change | Signalled to NB |
| Block on RN allocation increase | True/false test | Part 1 of the algorithm |

1. The RN monitors the reported QoS indicators derived for both the UE and the RN. If an imbalance exists then the RN calculates the change in RN bandwidth allocation that is required to restore a balance in the QoS across the two communication links.

2. The RN then signals a command to the NB for a change in the bandwidth allocation of the NB according to the change determined in step 1.

3. The NB receives the request and checks that the request can be met. If it can not then it is revised. The NB then changes its bandwidth accordingly.

4. If the request from the RN was for an increase in NB bandwidth then the RN monitors the received SINR to check that the required change was made. If it is detected that the required change was not made then a block, or prohibition, is placed on further increases in RN bandwidth allocation. If this block was not placed then as the NB cannot increase its bandwidth, any increase in RN bandwidth will cause an imbalance that cannot be rectified, as this would require a further increase in the NB bandwidth, compounding any imbalance.

Note that the block on further RN bandwidth increase is removed if: it is detected that the QoS indicators are balanced; a decrease in NB bandwidth allocation is requested; or a requested change in NB bandwidth allocation is detected to have been made.

As an alternative, the UE QoS indicator may be derived remotely at the RN. As shown in Figure 23B, the RN may be operable to derive QoS indicators for both the RN and the UE. The details for the algorithm shown in Figure 23B may be summarised as follows:

**Downlink Algorithm 28: Part 2 (Distributed with UE QoS derived at RN)**
**Trigger: Periodically executed in RN**

| Algorithm Input | Required by | Origin |
|---|---|---|
| QoS at UE | RN | Derived/calculated at RN |
| QoS at RN | RN | Known at RN |

| Algorithm Output | Derivation | Destination & Signalling Requirement |
|---|---|---|
| Change in NB BW allocation | Relative change | Signalled to NB |
| Block on RN allocation increase | True/false test | Part 1 of the algorithm |

It will be appreciated that either of the algorithms illustrated by Figures 22A and 22B may be implemented in conjunction with either of the algorithms illustrated by Figures 23A and 23B.

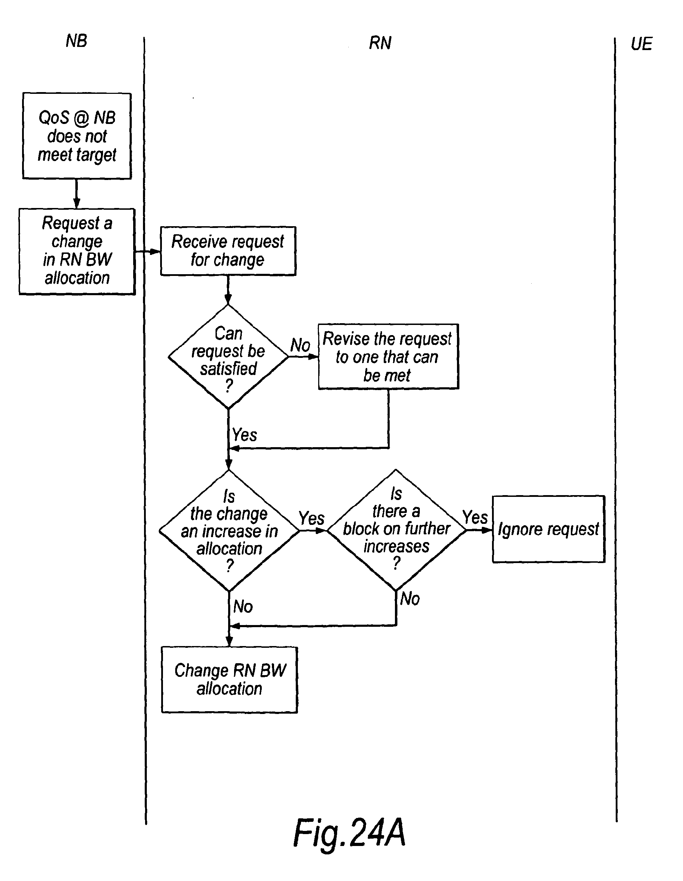

A seventh embodiment of the present invention will now be described with reference to Figure 24A in the case of uplink transmissions in which the source apparatus comprises a user equipment (UE), the intermediate apparatus comprises a relay node (RN), and the destination apparatus comprises a Node-B (NB). The NB continually monitors the QoS of the communication link terminating at the NB and derives indicators of the QoS and the variation from target QoS. The NB is provided with an indicator deviation detection means for detecting a change in one or both of these indicators. According to the seventh embodiment, the determination of the required bandwidth allocation or the change in the required bandwidth allocation is carried out in parts associated with the RN.

The details of the algorithm are summarised as follows:

**Uplink Algorithm 2A: Part 1 (Distributed with NB QoS derived at NB)**
**Trigger: RN receives request for change in RN BW allocation from NB**

| Algorithm Input | Required by | Origin |
|---|---|---|
| Request for change in bandwidth allocation at RN | RN | Change derived in NB and processed by RN |
| Block in increase in RN BW allocation | RN | Block is set/cleared in part 2 of the algorithm |

| Algorithm Output | Derivation | Destination & Signalling Requirement |
|---|---|---|
| Change in RN BW allocation | Relative change | Relative change derived at NB and made by RN |

The following sequence takes place following detection of a change in an indicator derived by for destination apparatus (NB) from a desired value:

1. The destination apparatus (NB) transmits a request for a change in the RN bandwidth allocation to the RN;

2. The RN checks whether the request can be satisfied. If the received request cannot be satisfied by the RN then it is modified to one that can be met.

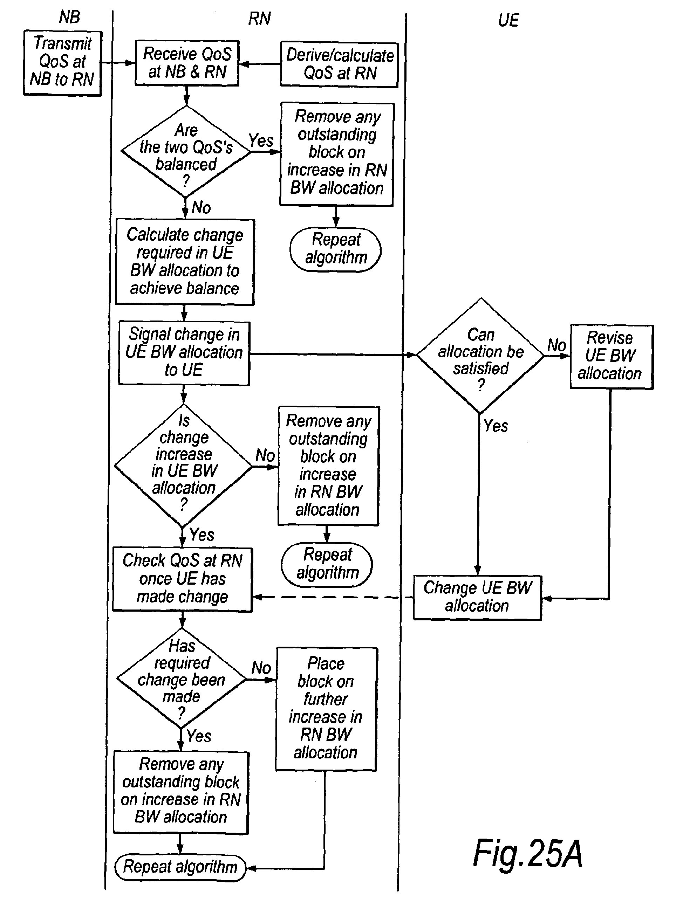

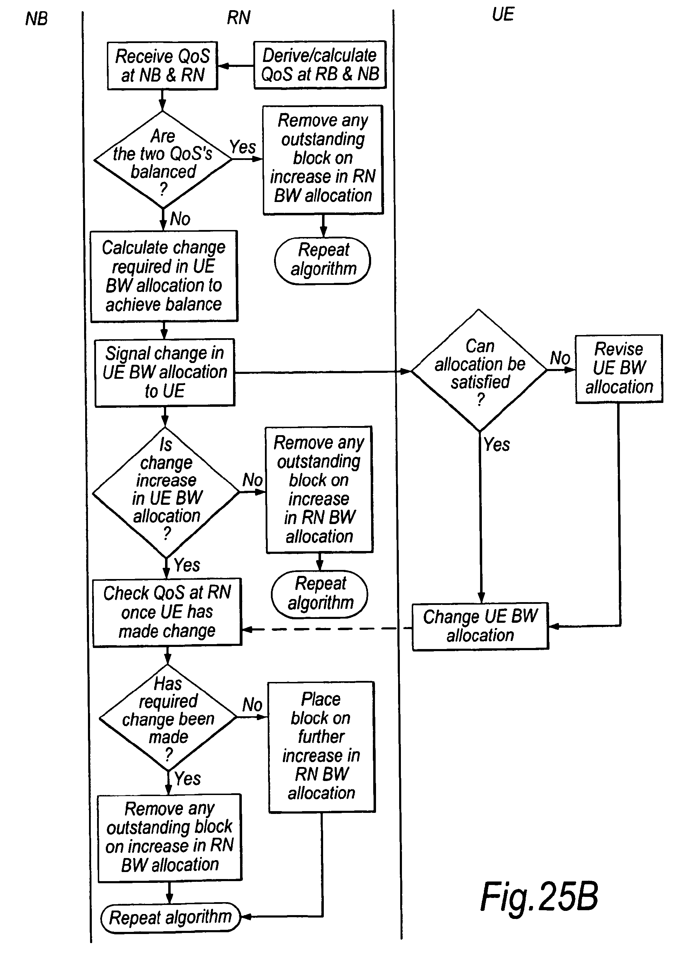

3. If the requested change in bandwidth allocation of the RN is an increase, then a check is made to determine whether a block, or prohibition, has been placed on further increases. In this embodiment, the block is placed by the algorithm illustrated by Figure 25A or 25B which embodies an eighth embodiment of the present invention. If a block is in place then the request is ignored, otherwise the RN bandwidth is changed accordingly.

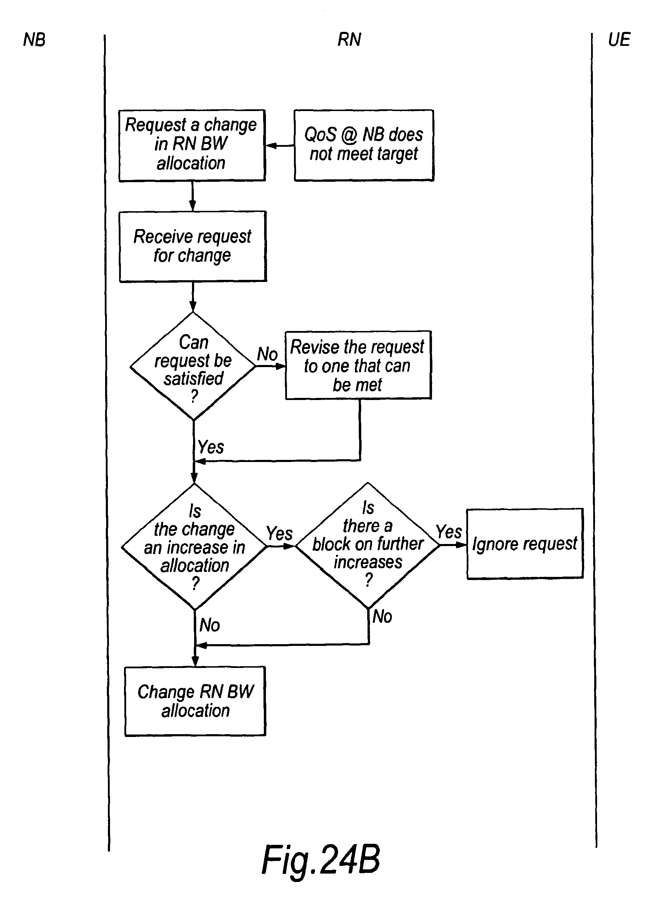

As an alternative, the UE QoS indicator may be derived remotely at the RN. As shown in Figure 24B, the RN may be operable to derive QoS indicators for the communication link terminating at the UE. The details for the algorithm shown in Figure 24B may be summarised as follows:

**Uplink Algorithm 2B: Part 1 (Distributed with NB QoS derived at RN)**
**Trigger: RN derives request for change in RN BW allocation**

| Algorithm Input | Required by | Origin |
|---|---|---|
| Request for change in bandwidth allocation at RN | RN | Change derived in RN and processed by RN |
| Block in increase in RN BW allocation | RN | Block is set/cleared in part 2 of the algorithm |

| Algorithm Output | Derivation | Destination & Signalling Requirement |
|---|---|---|
| Change in RN BW allocation | Relative change | Relative change derived at NB and made by RN |

The algorithms described above with reference to Figures 24A and 24B will manage the case of the propagation loss varying between the RN and NB and the case of the NB modifying its target QoS. In order to handle the case of the propagation loss varying between the UE and RN and the case that both the target in the NB and the propagation loss between the RN and NB varies, such that no request for change in RN bandwidth allocation is generated, an algorithm as shown in Figure 25A or 25B, which implement an eighth embodiment of the present invention, operates periodically as discussed below. Alternatively it is also possible for either of the algorithms described with reference to Figures 25A or 25B to be implemented separately in a wireless multi-hop communication system.

The details of the algorithm are summarised as follows:

**Uplink Algorithm 2A: Part 2 (Distributed with NB QoS derived at NB)**
**Trigger: Periodically executed in RN**

| Algorithm Input | Required by | Origin |
|---|---|---|
| QoS at NB | RN | Signalled from NB |
| QoS at RN | RN | Known at RN |

| Algorithm Output | Derivation | Destination & Signalling Requirement |
|---|---|---|
| Change in UE BW allocation | Relative change | Signalled to UE |
| Block on RN BW allocation increase | True/false test | Part 1 of the algorithm |

1. The RN monitors the QoS indicators derived for both the NB and the RN. If an imbalance exists then the RN calculates the change in UE bandwidth allocation that is required to restore a balance in the QoS across both of the communication links.

2. The RN then signals a command to the UE for a change in the bandwidth allocation at the UE according to the change determined in step 1.

3. The UE receives the request and checks that the request can be met. If it can not then it is revised. The UE then changes its bandwidth accordingly.

4. If the request from the RN was for an increase in UE bandwidth allocation then the RN monitors the QoS for th link which terminates at the RN to check that the required change was made. If it is detected that the required change was not made then a block, or prohibition, is placed on further increases in RN bandwidth allocation.

Note that the block on further RN bandwidth increase is removed if: it is detected that the QoS indicators are balanced; a decrease in UE bandwidth allocation is requested; or a commanded change in UE bandwidth allocation is detected to have been made.

As an alternative, the NB QoS indicator may be derived remotely at the RN. As shown in Figure 25B, the RN may be operable to derive QoS indicators for both the RN and the NB. The details for the algorithm shown in Figure 25B may be summarised as follows:

**Uplink Algorithm 2B: Part 2 (Distributed with NB QoS derived at RN)**
**Trigger: Periodically executed in RN**

| Algorithm Input | Required by | Origin |
|---|---|---|
| QoS at NB | RN | Derived/calculated at RN |
| QoS at RN | RN | Known at RN |

| Algorithm Output | Derivation | Destination & Signalling Requirement |
|---|---|---|
| Change in UE BW allocation | Relative change | Signalled to UE |
| Block on RN BW allocation increase | True/false test | Part 1 of the algorithm |

It will be appreciated that either of the algorithms illustrated by Figures 24A and 24B may be implemented in conjunction with either of the algorithms illustrated by Figures 25A and 25B.

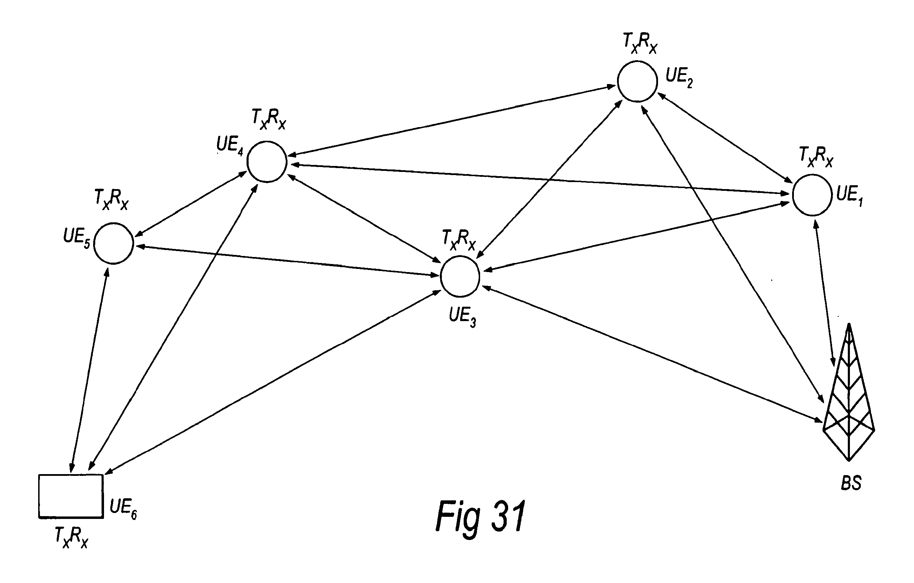

Figure 31 shows an ad-hoc network according to an embodiment of the present invention, comprising a base station BS and six user equipments $UE_1$ to $UE_6$. The Figure shows some of the possible communication paths that may exist between the base station and $UE_6$. For example, a downlink communication path between the base station and $UE_6$ may comprise the BS-$UE_3$ link followed by the $UE_3$ - $UE_5$ link followed by the $UE_5$ to $UE_6$ link.

Any of the user equipments or the base station may be provided with a determining means operable to determine the transmission resource of any one of the transmitters of the system that will maintain a balance between two or more of the receivers of the system. Considering as an example, the intermediate apparatus $UE_3$ shown in Figure 31. This apparatus comprises a transmitter and a receiver and is operable to receive UL or DL communication signals. In the case of a downlink communications between the base station and $UE_6$, $UE_3$ is operable to receive a communication signal from the base station (the source apparatus in the case of DL) or from a previous intermediate apparatus in a communication direction, and to transmit said communication signal or a signal derived therefrom, to $UE_6$ (the destination apparatus in the case of DL) or to a subsequent intermediate apparatus in a communication direction. According to this embodiment the intermediate apparatus comprises a determining means operable to determine a measure of, or a change in a measure of, the resource allocated to: said transmitter of the intermediate apparatus; and/or a transmitter of the base station; and/or a transmitter of a previous intermediate apparatus ($UE_2$ or $UE_1$); and/or a transmitter of a subsequent intermediate apparatus ($UE_4$ or $UE_5$), that will tend to substantially attain or maintain a balance between a measure of the quality of the communication signal received at least two of:

- a receiver of $UE_6$ (the destination apparatus);
- a receiver of $UE_5$ or $UE_4$ (a subsequent intermediate apparatus);
- the receiver of $UE_3$; and
- a receiver of a $UE_2$ or $UE_1$ (a previous intermediate apparatus)

According to this embodiment, $UE_3$ is provided with an indicator derivation means operable to derive indicators of the quality of service experienced by each of receivers operating to receive a communication signal in the multi-hop network. $UE_3$ is therefore provided with a means to monitor the effective throughput across each of the communication links. Accordingly, the monitor is operable to receive measurements taken at the receiver and/or transmitter of a particular link and then reported to said indicator (QoS) derivation means.

**Theoretical Analysis**

The following theoretical analysis derives possible solutions for calculating the optimal transmit power of the transmitting elements comprised in a multi-hop network for various deployment scenarios. Although not directly relevant to embodiments of the present invention, the following theoretical analysis, which derives possible solutions for explicitly calculating the optimal transmit power of the transmitting elements comprised in a multi-hop network for various deployment scenarios, is nonetheless useful for understanding the present invention. Furthermore, whilst the equations are developed solely for the case of the connections that form the downlink in a multi-hop network, it is straightforward to adapt the equations derived for the case of the uplink. Such an adaptation is achieved by adopting the same methodology used to develop the expressions for the received SINR at the receiving nodes, where the transmitting nodes are now the UE and the RN and the receiving nodes are now the NB and RN. Once expressions for the SINR received at the RN and NB are arrived at, the same methodology can be employed for each deployment scenario in order to determine the optimal transmit power setting of the UE and RN. For each deployment scenario, theoretical solutions are obtained assuming a single-cell model and a two-cell model. In the case of a two cell model, it is assumed that the deployment in both cells is identical and that the transmit powers on the base station (BS) and the intermediate apparatus (I) are the same. It is also assumed that where appropriate $P_{tx\_tot,\,RN} = G_p P_{tx,RN}$ and $P_{tx\_tot.NB} = G_p P_{tx,NB}$ and that for the case of TDD both RN's transmit at the same time. This in effect generates the worse case scenario for two cells.

Theoretical solutions may be evolved from a consideration of the signal-to-interference plus noise ratio (SINR) experienced by the receiving nodes in a multi-hop system (i.e. the or each intermediate apparatus (I) and the destination apparatus (D)). The SINR at a particular node is a measure of the quality of a communication signal received by that node and is a ratio of the received strength of the desired signal to the received signal strength of the undesired signals (noise and interference).

As previously discussed, the considerations required for noise and interference depend on the duplexing method used to separate signal received at an intermediate apparatus from those transmitted from an intermediate apparatus, the characteristics of the intermediate apparatus and also the level of inter-cell interference which is taken into account (i.e. interference from neighbouring cells).

The following equation represents the SINR of a communication signal sent from an intermediate apparatus to a destination apparatus for all scenarios, where different terms may be ignored depending upon the type of intermediate apparatus (e.g. non-regenerative or regenerative) and the duplexing method:

$$SINR_{RN-UE} = \frac{G_p P_{tx,RN}}{L_{RN-UE}\left( N + \dfrac{P_{tx,RN}}{L_{RN-UE}\,SINR_{NB-RN}} + \dfrac{P_{tx\_tot,NB}}{L_{NB-UE}} \right)}$$

For the case of FDD instead of TDD then the third term in the bracket is removed and for the case of regenerative instead of non-regenerative the second term in the bracket is removed.

In the case of a two-cell model as illustrated in Figure 1 B, this becomes:

$$SINR_{RN-UE} = \frac{G_p P_{tx,RN1}}{L_{RN1-UE}\left( N + \dfrac{P_{tx,RN1}}{L_{RN1-UE}\,SINR_{NB1-RN1}} + \dfrac{P_{tx\_tot,NB1}}{L_{NB1-UE}} + \dfrac{P_{tx\_tot,NB2}}{L_{NB2-UE}} + \dfrac{P_{tx\_tot,RN2}}{L_{RN2-UE}} \right)}$$

The first three terms in the bracket in (2) are the same as those in (1). The additional last two terms originate from the interference experienced from the neighbouring co-channel NB and RN respectively. Obviously if the neighbouring cell employs a different frequency or uses a different timeslot for relay transmission then the terms needed to model this interference will vary. It should be appreciated that these equations can be extended to a three-cell model or more for a higher level of accuracy.

Considering now the various possible deployment scenarios in turn, for the case of DL transmissions transmitted between a base-station or node-B (NB), via an intermediate relay node (RN) to a destination user equipment (UE).

1A. Regenerative relay with FDD - Single-cell model as illustrated in Figure 1A

In this case, the SINR at a destination UE which is connected to an intermediate RN is given by:

$$SINR_{RN-UE} = \frac{G_p P_{tx,RN}}{L_{RN-UE} N} \tag{1}$$

Where $G_p$ is the processing gain, $P_{tx,RN}$ is the transmit power on the channel of interest at the RN, $L_{RN-UE}$ is the propagation loss on the NB to RN link and $N$ is the noise. Note this assumes that no intra-cell interference exists.

The SINR at an intermediate RN which is operable to receive signals from the NB is given by:

$$SINR_{NB-RN} = \frac{G_p P_{tx,NB}}{L_{NB-RN} N} \tag{2}$$

Where $P_{tx,NB}$ is the transmit power on the channel of interest at the NB and $L_{NB-RN}$ is the propagation loss on the RN to UE link. Again, it is assumed that no intra-cell interference exists.

The overall throughput across the multi-hop link will be limited by the lower of the two SINR values as this will limit the rate at which data can be transmitted to that entity. Any increase in transmit power that causes an SINR imbalance will not improve the performance of the multi-hop system; it will simply result in wasted energy and an increase in interference to any co-channel users.

Thus, assuming that the receiver at the intermediate RN and the receiver at the destination UE perform the same, then it follows that the transmit power at the NB and RN should be set such that the SINR at the RN and UE is the same. Using this criterion for setting the ratio of the transmit powers, it follows that the ratio is given by:

$$\frac{P_{tx,NB}}{P_{tx,RN}} = \frac{L_{NB-RN}}{L_{RN-UE}} = \frac{b_1 s_1^{n_1}}{b_2 s_2^{n_2}} \tag{3}$$

Where $b_1$ and $n_1$ are the pathloss parameters for the NB to RN link which is $s_1$ in length and $b_2$, $n_2$ and $s_2$ are associated with the RN to UE link. Thus using equation (3) it is possible to find either transmit power given the other.

1 B. Regenerative relay with FDD - two cell model as shown in Figure 1 B

In this case, transmit power equations may be derived taking into account interference caused by transmissions arising in the other cell.

In this case the SINR at a destination UE that is operable to receive signals from an intermediate RN is now :

$$SINR_{RN-UE} = \frac{G_p P_{tx,RN}}{L_{RN-UE}\left(N + \dfrac{G_p P_{tx,RN}}{L_{RN-UE}}\right)} \tag{4}$$

The optimal NB transmit power can be found by setting (4) and (2) to be equal. Therefore:

$$P_{tx,NB} = \frac{L_{NB-RN} N P_{tx,RN}}{L_{RN-UE}\left(N + \dfrac{G_p P_{tx,RN}}{L_{RN-UE}}\right)} = \frac{L_{NB-RN} P_{tx,RN}}{\left(L_{RN-UE} + \dfrac{G_p P_{tx,RN}}{N}\right)} \tag{5}$$

(5) can be rearranged to find the intermediate RN transmit power given the source NB transmit power:

$$P_{tx,RN} = \frac{L_{RN-UE}}{\left(\dfrac{L_{NB-RN}}{P_{tx,NB}} - \dfrac{G_p}{N}\right)} \tag{6}$$

2A. Regenerative relay with TDD: single cell model - Figure 1 A

It is assumed that the two links (source to intermediate, intermediate to destination) operate on the same frequency with TDD being used to separate the receive and transmit operation of the RN (i.e. it is no longer full duplex). If it is assumed that the timeslot in which the RN transmits is not used by the NB then the equations described above for the case of a regenerative relay with an FDD duplexing scheme can be used. However, if the source NB uses the same timeslot as the intermediate RN to communicate with apparatuses or nodes other than the RN, interference will result to the transmission made by the RN. In this case the SINR at a destination UE that is operable to receive communication signals from an intermediate RN is given by:

$$SINR_{RN-UE} = \frac{G_p P_{tx,RN}}{L_{RN-UE}(N + I)} = \frac{G_p P_{tx,RN}}{L_{RN-UE}\left(N + \dfrac{P_{tx\_tot,NB}}{L_{NB-UE}}\right)} \tag{7}$$

Where $P_{tx\_tot,NB}$ is the total transmission power from the NB and $L_{NB-UE}$ is the propagation loss on the NB to UE link. In this case the transmit power at the RN that ensures equal SINR is given by:

$$P_{tx,RN} = P_{tx,NB} \left( \frac{L_{RN-UE}}{L_{NB-RN}} \right) \left( 1 + \frac{P_{tx\_tot,NB}}{NL_{NB-UE}} \right) \qquad (8)$$

Comparing equation (3) and equation (8) it is apparent that a simple ratio no longer yields the ideal balance. Assuming that $P_{tx\_tot,NB} = G_p P_{tx,NB}$ it is possible to write equation (8) as:

$$\begin{aligned} P_{tx,RN} &= P_{tx,NB} \left( \frac{L_{RN-UE}}{L_{NB-RN}} \right) \left( 1 + \frac{G_p P_{tx,NB}}{NL_{NB-UE}} \right) \\ &= \left( \frac{L_{RN-UE}}{L_{NB-RN}} \right) \left( P_{tx,NB} + \frac{G_p P_{tx,NB}^2}{NL_{NB-UE}} \right) \end{aligned} \qquad (9)$$

From (9) it is possible to determine the ideal RN transmit power given the NB transmit power. It is worth noting that if the set-up of the system is arranged such that the second term in the second bracket is negligible (i.e. $P_{tx\_tot.NB}/NL_{NB-UE}$ <<1) then the criterion described above for the case of a regenerative relay with an FDD duplex scheme can be used.

It follows that the ideal NB transmit power given a certain RN transmit power can be found from the roots of (9). Expressing (9) in the following simplified form:

$$\frac{L_{RN-UE}}{L_{NB-RN}} P_{tx,NB} + \frac{L_{RN-UE}}{L_{NB-RN}} \frac{G_p}{NL_{NB-UE}} P_{tx,NB}^2 - P_{tx,RN} = 0 \qquad (10)$$

$$ax^2 + bx + c = 0$$

Where $x = P_{tx,NB}$, $a = \dfrac{G_p L_{RN-UE}}{NL_{NB-RN} L_{NB-UE}}$, $b = \dfrac{L_{RN-UE}}{L_{NB-RN}}$ and $c = -P_{tx,RN}$ it follows that the roots of (10) are given by:

$$x = \frac{-b \pm \sqrt{b^2 - 4ac}}{2a} \qquad (11)$$

As the constains a, b and the transmit power are always a positive number, only one root is defined, it therefore follows that the optimal transmit power at the NB that ensures equal SINR at the RN and UE is given by:

$$x = P_{tx,NB} = \frac{-b + \sqrt{b^2 + 4aP_{tx,RN}}}{2a} \qquad (12)$$

Finally, it is possible to use the definitions above to rewrite (9), which gives the optimal RN transmit power, in a similar simplified form:

$$P_{tx,RN} = bP_{tx,NB} + aP_{tx,NB}^2 \qquad (13)$$

2A. Regenerative relay with TDD: two-cell model as shown in Figure 1 B

In addition to assuming that the deployment in both is identical and that the transmit powers on the NB and RN are the same, it is also assumed that where appropriate $P_{tx\_tot,\ RN} = G_p P_{tx,RN}$ and $P_{tx\_tot,NB} = G_p P_{tx,NB}$ and that for the case of TDD both RN's transmit at the same time. This in effect generates the worse case scenario for two cells.

In this case the SINR at the destination UE that is operable to receive signals from an intermediate RN is now:

$$ SINR_{RN-UE} = \frac{G_p P_{tx,RN}}{L_{RN-UE}\left( N + \dfrac{2G_p P_{tx,NB}}{L_{NB-UE}} + \dfrac{G_p P_{tx,RN}}{L_{RN-UE}} \right)} \tag{14} $$

The optimal NB transmit power can be found by setting (14) and (2) to be equal:

$$ \frac{G_p P_{tx,NB}}{NL_{NB-RN}} = \frac{G_p P_{tx,RN}}{L_{RN-UE}\left( N + \dfrac{2G_p P_{tx,NB}}{L_{NB-UE}} + \dfrac{G_p P_{tx,RN}}{L_{RN-UE}} \right)} $$

$$ P_{tx,RN} = P_{tx,NB}\left( \frac{L_{RN-UE}}{L_{NB-RN}} \right)\left( 1 + \frac{2P_{tx\_tot,NB}}{NL_{NB-UE}} + \frac{P_{tx\_tot,RN}}{NL_{RN-UE}} \right) \tag{15} $$

$$ \left( \frac{L_{RN-UE}}{L_{NB-RN}} \right)\left( \frac{2G_p}{NL_{NB-UE}} \right)P_{tx,NB}^2 + \left( \frac{L_{RN-UE}}{L_{NB-RN}} \right)\left( 1 + \frac{G_p P_{tx,RN}}{NL_{RN-UE}} \right)P_{tx,NB} - P_{tx,RN} $$

The optimal NB transmit power is found from the positive root of:

$$ \left( \frac{L_{RN-UE}}{L_{NB-RN}} \right)\left( \frac{2G_p}{NL_{NB-UE}} \right)P_{tx,NB}^2 + \left( \frac{L_{RN-UE}}{L_{NB-RN}} \right)\left( 1 + \frac{G_p P_{tx,RN}}{NL_{RN-UE}} \right)P_{tx,NB} - P_{tx,RN} = 0 \tag{16} $$

Which is given by:

$$ x = P_{tx,NB} = \frac{-b + \sqrt{b^2 - 4ac}}{2a} \tag{17} $$

Where in this case $a = \dfrac{2G_p L_{RN-UE}}{NL_{NB-RN}L_{NB-UE}}$ , $b = \dfrac{L_{RN-UE}}{L_{NB-RN}}\left( 1 + \dfrac{G_p P_{tx,RN}}{NL_{RN-UE}} \right)$ and $c = -P_{tx,RN}$, and both $b$ and c are a function of the RN transmit power.

Given the NB transmit power it is possible to rearrange (15) to find the RN transmit. It follows that the optimal RN transmit power is given by:

$$P_{tx,RN} = \frac{\left(\dfrac{2G_p}{NL_{NB-UE}}\dfrac{L_{RN-UE}}{L_{NB-RN}}\right)P_{tx,NB}^2 + \left(\dfrac{L_{RN-UE}}{L_{NB-RN}}\right)P_{tx,NB}}{1 - \left(\dfrac{G_p}{NL_{RN-UE}}\dfrac{L_{RN-UE}}{L_{NB-RN}}\right)P_{tx,NB}} \qquad (18)$$

3A. Non-regenerative relay node (RN) with FDD - single cell model as shown in Figure 1A

The difference between this case and that of a regenerative relay node being used in conjunction with a FDD duplexing scheme is that the SINR at the UE *is a function of* the SINR at the RN, where the SINR at the destination UE which is connected to the RN is given by:

$$SINR_{RN-UE} = \frac{G_p P_{tx,RN}}{L_{RN-UE}\left(N + \dfrac{P_{tx,RN}}{L_{RN-UE}\,SINR_{NB-RN}}\right)} \qquad (19)$$

The result is that the ideal balance is no longer derived from setting the SINR at the UE equal to that at the RN. According to (19), the SINR at the RN needs to be set so that it does not prevent this target SINR at the UE from being obtained. However, the NB power must be controlled to limit the SINR at the RN rising beyond that practically required else excess interference and wasted transmit power will result.

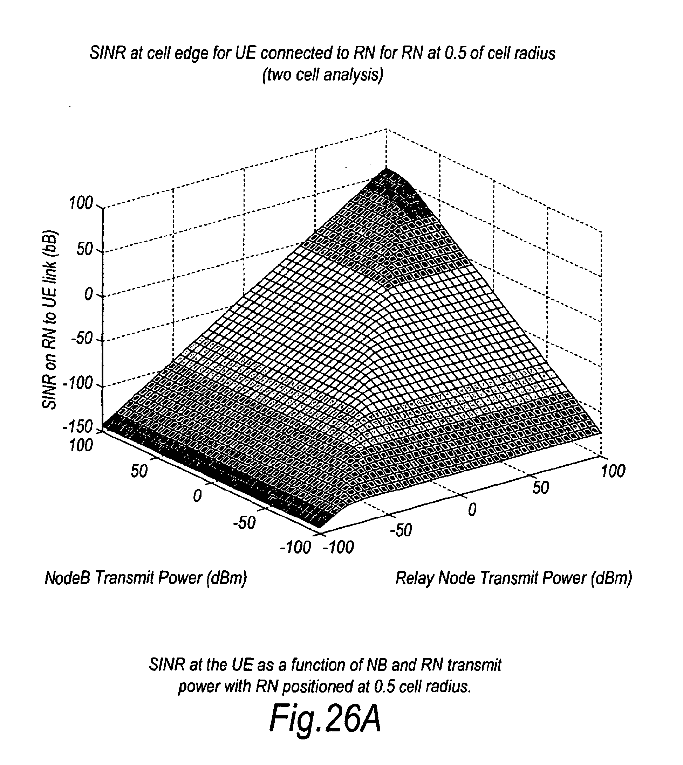

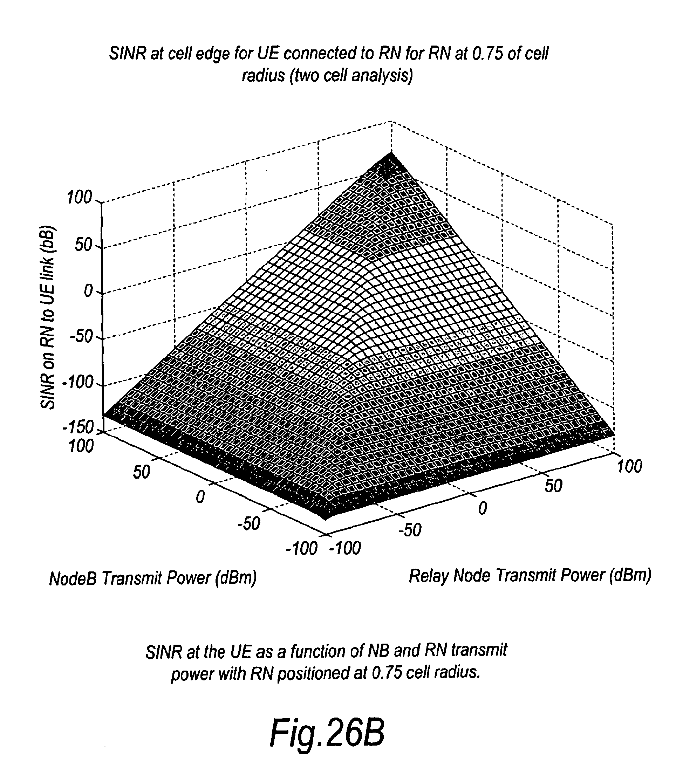

Figures 26A and 26B illustrates how the setting of NB and RN transmit power affects the SINR at the UE connected to the RN for a two different deployment scenarios.

Thus, it can be seen that the optimal solution is to select the transmit power of the NB and RN such that the system effectively operates on the diagonal fold in the surface shown in Figure 26A or 26B. It is possible to realise such a solution by taking the first derivative of (19) and finding the point at which increasing either the NB or RN transmit power results in minimal increase to SINR at UE.

In order to determine the first derivative of (19), it is rewritten as:

$$SINR_{RN-UE} = \frac{G_p P_{tx,RN}}{L_{RN-UE}\left(N + \dfrac{P_{tx,RN}}{L_{RN-UE}\dfrac{G_p P_{tx,NB}}{NL_{NB-RN}}}\right)}$$
$$= \frac{1}{\left(\dfrac{NL_{RN-UE}}{G_p P_{tx,RN}}\right) + \left(\dfrac{NL_{NB-RN}}{G_p^2 P_{tx,NB}}\right)} \qquad (20)$$

Defining $y = SINR_{RN-UE}$, $k_1 = \dfrac{NL_{RN-UE}}{G_p}$ and $k_2 = \dfrac{NL_{NB-RN}}{G_p^2}$ it is possible to simplify (20) to be:

$$y = \frac{1}{\dfrac{k_1}{P_{tx,RN}} + \dfrac{k_2}{P_{tx,NB}}} = \frac{P_{tx,NB}}{\dfrac{k_1 P_{tx,NB}}{P_{tx,RN}} + k_2} \tag{21}$$

In order to find the rate of change of SINR with $P_{tx,NB}$ the quotient rule for differentiation is used:

$$\frac{dy}{d\left(P_{tx,NB}\right)} = \frac{k_2}{\left(\dfrac{k_1}{P_{tx,RN}} P_{tx,NB} + k_2\right)^2} = \nabla_{NB} \tag{22}$$

By solving (22) for $P_{tx,NB}$, given the required gradient and $P_{tx,RN}$ it is possible to find the optimal NB transmit power:

$$P_{tx,NB} = \frac{P_{tc,RN}\left(\sqrt{\dfrac{k_2}{\nabla_{NB}}} - k_2\right)}{k_1} \tag{23}$$

In order to find the optimal RN transmit power given that of the NB, the differentiation of (21) is now performed with respect to $P_{tx,RN}$. In this case the first order derivative is given by:

$$\frac{dy}{d\left(P_{tx,RN}\right)} = \frac{k_1}{\left(\dfrac{k_2}{P_{tx,NB}} P_{tx,RN} + k_1\right)^2} = \nabla_{RN} \tag{24}$$

And the optimal RN transmit power given that of the NB is:

$$P_{tx,RN} = \frac{P_{tc,NB}\left(\sqrt{\dfrac{k_1}{\nabla_{RN}}} - k_1\right)}{k_2} \tag{25}$$

3B. Non-regenerative relay node (RN) with FDD - two cell model as shown in Figure 1B

In a two cell model the SINR for the worse case of a destination UE at the cell edge is given by:

$$SINR_{RN-UE} = \cfrac{G_p P_{tx,RN}}{L_{RN-UE}\left(N + \cfrac{P_{tx,RN}}{L_{RN-UE}\,SINR_{NB-RN}} + \cfrac{G_p P_{tx,RN}}{L_{RN-UE}}\right)}$$

$$= \cfrac{1}{\left(\cfrac{NL_{RN-UE}}{G_p P_{tx,RN}}\right) + \left(\cfrac{NL_{NB-RN}}{G_p^2 P_{tx,NB}}\right) + 1}$$

(26)

Assuming that the transmit power of the two RN's is equal, the deployment is identical across the two cells and that $P_{tx\_tot,RN} = G_p P_{tx,RN}$, then the simplified form of (26) is given by:

$$SINR_{RN-UE} = \cfrac{1}{\cfrac{k_1}{P_{tx,RN}} + \cfrac{k_2}{P_{tx,NB}} + 1}$$

$$= \cfrac{P_{tx,NB}}{\left(\cfrac{k_1}{P_{tx,RN}} + 1\right)P_{tx,NB} + k_2}$$

(27)

The first derivative is now:

$$\frac{dy}{d(P_{tx,NB})} = \cfrac{k_2}{\left(\left(\cfrac{k_1}{P_{tx,RN}} + 1\right)P_{tx,NB} + k_2\right)^2}$$

(28)

Thus the optimal NB transmit power can be found by:

$$P_{tx,NB} = \cfrac{P_{tx,RN}\sqrt{\cfrac{k_2}{\nabla}} - k_2}{k_1 + P_{tx,RN}}$$

(29)

The optimal RN transmit power is found by taking the derivative of (27) with respect to $P_{tx,RN}$:

$$\frac{dy}{d(P_{tx,RN})} = \cfrac{k_1}{\left(\left(\cfrac{k_2}{P_{tx,NB}} + 1\right)P_{tx,RN} + k_1\right)^2}$$

(30)

Thus the optimal RN transmit power can be found by:

42

$$P_{tx,RN} = \frac{P_{tx,NB}\sqrt{\frac{k_1}{\nabla}} - k_1}{k_2 + P_{tx,NB}} \tag{31}$$

4A - Non-regenerative relay with TDD - single cell model as shown in Figure 1A

This case is similar to that described above for a non-regenerative except for the fact that now interference from the NB must be taken into account due to the fact that it transmits on the same frequency and at the same time as the RN. In this case the SINR at the UE which is receiving communication signals transmitted by the RN is given by:

$$SINR_{RN-UE} = \frac{G_p P_{tx,RN}}{L_{RN-UE}\left(N + \frac{P_{tx,RN}}{L_{RN-UE}SINR_{NB-RN}} + \frac{P_{tx\_tot,NB}}{L_{NB-UE}}\right)} \tag{32}$$

If the $P_{tx,NB}/P_{tx,RN}$ is too large then the SINR at the UE is limited due to insufficient RN transmit power and it is likely the area in which the link performance of a connection to a RN outperforms that for a connection to the NB is reduced. Conversely, if it is too small then the SINR at the UE is limited by the low SINR at the RN.

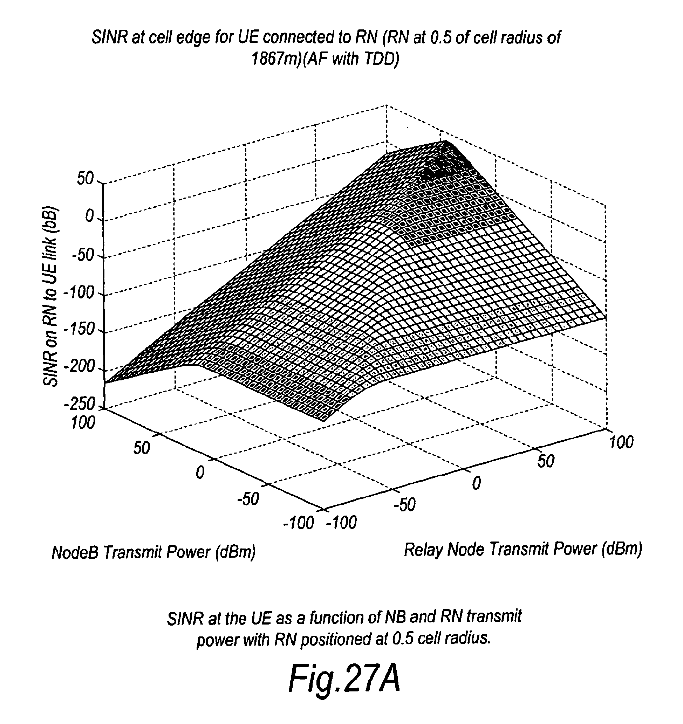

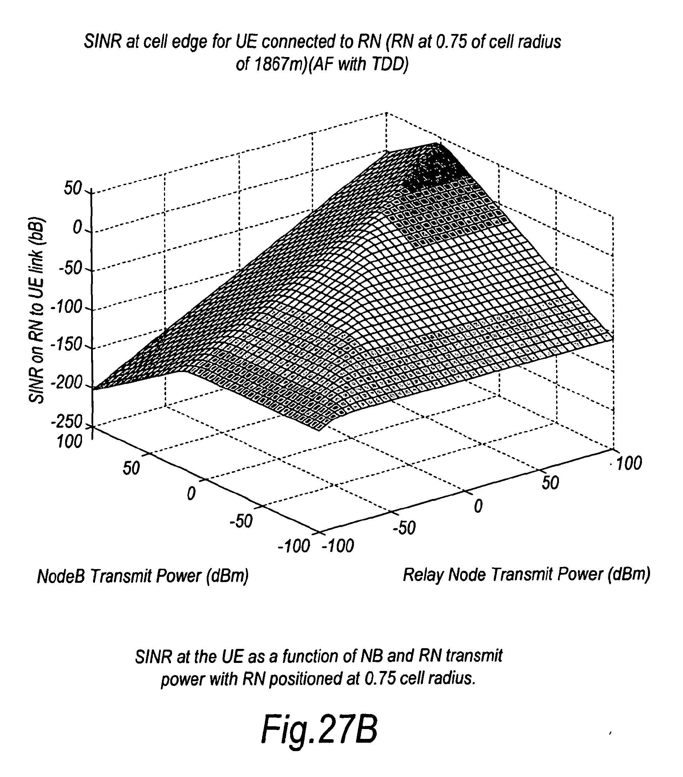

In this case, the balance is even finer than of that described in the case of a non-regenerative relay node employed in conjunction with an FDD duplexing scheme, as illustrated by Figure 27. The optimal operating point is given by finding the point at which the first derivative of (32) is equal to zero. In order to find this optimal point, (32) is first rearranged in the following form:

$$SINR_{RN-UE} = \frac{G_p P_{tx,RN}}{L_{RN-UE}\left(N + \frac{P_{tx,RN}}{L_{RN-UE}\left(\frac{G_p P_{tx,NB}}{NL_{NB-RN}}\right)} + \frac{P_{tx\_tot,NB}}{L_{NB-UE}}\right)}$$
$$= \frac{1}{\left(\frac{NL_{RN-UE}}{G_p P_{tx,RN}}\right) + \left(\frac{NL_{NB-RN}}{G_p^2 P_{tx,NB}}\right) + \left(\frac{L_{RN-UE}P_{tx,NB}}{L_{NB-UE}P_{tx,RN}}\right)} \tag{33}$$

Defining $y = SINR_{RN-UE}$, $k_1 = \frac{NL_{RN-UE}}{G_p}$ and $k_2 = \frac{NL_{NB-RN}}{G_p^2}$

Using the definitions from the description in 3A above and $k_3 = \left(\frac{L_{RN-UE}}{L_{NB-UE}}\right)$ it is possible to simplify (33) to:

$$y = \frac{1}{\left(\frac{k_1}{P_{tx,RN}}\right) + \left(\frac{k_2}{P_{tx,NB}}\right) + \left(\frac{k_3 P_{tx,NB}}{P_{tx,RN}}\right)} = \frac{P_{tx,NB}}{\left(\frac{k_1}{P_{tx,RN}}\right)P_{tx,NB} + k_2 + \left(\frac{k_3}{P_{tx,RN}}\right)P_{tx,NB}^2} \tag{34}$$

The next step is to find the single maxima of the parabolic function in (34) by solving:

$$\frac{dy}{dx} = 0 \qquad (35)$$

Using the quotient rule to find the first derivative of (34):

$$\frac{dy}{d(P_{tx,NB})} = \frac{\dfrac{k_1}{P_{tx,RN}}P_{tx,NB} + k_2 + \dfrac{k_3}{P_{tx,RN}}P_{tx,NB}^2 - P_{tx,NB}\left(\dfrac{k_1}{P_{tx,RN}} + \dfrac{2k_3}{P_{tx,RN}}P_{tx,NB}\right)}{\left(\dfrac{k_1}{P_{tx,RN}}P_{tx,NB} + k_2 + \dfrac{k_3}{P_{tx,RN}}P_{tx,NB}^2\right)^2} \qquad (36)$$

The maxima of $y$ is found by setting (36) equal to zero and solving for $P_{tx,NB}$. It follows that the maximum SINR at the UE is obtained by setting:

$$\frac{k_1}{P_{tx,RN}}P_{tx,NB} + k_2 + \frac{k_3}{P_{tx,RN}}P_{tx,NB}^2 = P_{tx,NB}^2\left(\frac{k_1}{P_{tx,RN}} + \frac{2k_3}{P_{tx,RN}}P_{tx,NB}^2\right)$$

$$P_{tx,NB} = \sqrt{\frac{P_{tx,RN}k_2}{2k_3}} \qquad (37)$$

Therefore, given the transmit power of the RN it is possible to use (37) to find the corresponding NB transmit power that ensures maximum SINR at the UE that is connected to the RN.
For the case of finding the optimal RN transmit power given the NB transmit power a similar approach to that described in above in the case of a non-regenerative relay node employed in conjunction with an FDD duplexing scheme, can be used as the SINR at the UE is not a parabolic function of RN transmit power. In order to find the optimal RN transmit power, (34) is rearranged to the following:

$$y = \frac{1}{\left(\dfrac{k_1}{P_{tx,RN}}\right) + \left(\dfrac{k_2}{P_{tx,NB}}\right) + \left(\dfrac{k_3 P_{tx,NB}}{P_{tx,RN}}\right)} = \frac{P_{tx,RN}}{\left(\dfrac{P_{tx,RN}k_2}{P_{tx,NB}}\right) + k_3 P_{tx,NB} + k_1} \qquad (38)$$

The first derivative is now:

$$\frac{dy}{d(P_{tx,RN})} = \frac{k_3 P_{tx,NB} + k_1}{\left(\left(\dfrac{P_{tx,RN}k_2}{P_{tx,NB}}\right) + k_3 P_{tx,NB} + k_1\right)^2} = \nabla \qquad (39)$$

Solving (39) for $P_{tx,RN}$ gives the optimal RN transmit power given the NB transmit power:

$$P_{tx,RN} = \frac{P_{tx,NB}\left(\sqrt{\dfrac{k_3 P_{tx,NB}+k_1}{\nabla}}-\left(k_3 P_{tx,NB}+k_1\right)\right)}{k_2} \qquad (40)$$

By observing the surface in Figure 27 and from the form of (34) and the result in (40) it is apparent that if the NB transmit power is small then the rate of change of SINR with RN transmit power will decrease with increasing RN transmit power. However, for the case of large NB transmit power, the SINR at the UE approximates to a linear function of RN transmit power. The result is that in this case the solution to the problem, as summarised in (40) will be infinite.

4B - Non-regenerative relay with TDD - two cell model as shown in Figure 1 B

The worse case, from the perspective of a UE at the cell edge, is when the neighbouring cell employs a TDD scheme with the same timeslot used for RN transmission. If it is assumed that the cells are equal in size with the same deployment and transmit power settings and that $P_{tx\_tot,RN/NB} = G_p P_{tx,RN/NB}$ then:

$$SINR_{RN-UE} = \frac{G_p P_{tx,RN}}{L_{RN-UE}\left(N + \dfrac{P_{tx,RN}}{L_{RN-UE}SINR_{NB-R1}} + \dfrac{2G_p P_{tx,NB}}{L_{NB-UE}} + \dfrac{G_p P_{tx,RN}}{L_{RN-UE}}\right)}$$
$$= \frac{1}{\left(\dfrac{NL_{RN-UE}}{G_p P_{tx,RN}}\right)+\left(\dfrac{NL_{NB-RN}}{G_p^2 P_{tx,NB}}\right)+\left(\dfrac{2L_{RN-UE}P_{tx,NB}}{L_{NB-UE}P_{tx,RN}}\right)+1} \qquad (41)$$

In this case the simplified form of (4) is:

$$SINR_{RN-UE} = \frac{1}{\dfrac{k_1}{P_{tx,RN}}+\dfrac{k_2}{P_{tx,NB}}+\dfrac{2k_3}{P_{tx,RN}}P_{tx,NB}+1}$$
$$= \frac{P_{tx,NB}}{\left(\dfrac{k_1}{P_{tx,RN}}+1\right)P_{tx,NB}+k_2+\dfrac{2k_3}{P_{tx,RN}}P_{tx,NB}^2} \qquad (42)$$

And the first derivative is:

$$\frac{dy}{d\left(P_{tx,NB}\right)} = \frac{\left(\dfrac{k_1}{P_{tx,RN}}+1\right)P_{tx,NB}+k_2+\dfrac{2k_3}{P_{tx,RN}}P_{tx,NB}^2 - P_{tx,NB}\left(\dfrac{k_1}{P_{tx,RN}}+1+\dfrac{4k_3}{P_{tx,RN}}P_{tx,NB}\right)}{\left(\left(\dfrac{k_1}{P_{tx,RN}}+1\right)P_{tx,NB}+k_2+\dfrac{2k_3}{P_{tx,RN}}P_{tx,NB}^2\right)^2} \qquad (43)$$

Finally, the maxima is given by setting (43) equal to zero and solving for $P_{tx,NB}$:

$$\left(\frac{k_1}{P_{tx,RN}}+1\right)P_{tx,NB}+k_2+\frac{2k_3}{P_{tx,RN}}P_{tx,NB}^2=P_{tx,NB}\left(\frac{k_1}{P_{tx,RN}}+1+\frac{4k_3}{P_{tx,RN}}P_{tx,NB}\right)$$

$$k_2+\frac{2k_3}{P_{tx,RN}}P_{tx,NB}^2=\frac{4k_3}{P_{tx,RN}}P_{tx,NB}^2 \qquad (44)$$

$$P_{tx,NB}=\sqrt{\frac{P_{tx,RN}k_2}{2k_3}}$$

In order to find the optimal RN transmit power given the NB transmit power (42) is rearranged to:

$$y=\frac{1}{\dfrac{k_1}{P_{tx,RN}}+\dfrac{k_2}{P_{tx,NB}}+\dfrac{2k_3}{P_{tx,RN}}P_{tx,NB}+1}$$

$$=\frac{P_{tx,RN}}{k_1+\dfrac{k_2 P_{tx,RN}}{P_{tx,NB}}+2k_3 P_{tx,NB}+P_{tx,RN}} \qquad (45)$$

The first derivative is now:

$$\frac{dy}{d\left(P_{tx,RN}\right)}=\frac{k_1+2k_3 P_{tx,NB}}{\left(k_1+2k_3 P_{tx,NB}+P_{tx,RN}\left(1+\dfrac{k_2}{P_{tx,NB}}\right)\right)^2}=\nabla \qquad (46)$$

Solving (46) for $P_{tx,RN}$ gives the optimal RN transmit power given the NB transmit power:

$$P_{tx,RN}=\frac{P_{tx,NB}\sqrt{\dfrac{k_1+2k_3 P_{tx,NB}}{\nabla}}-\left(k_1+2k_3 P_{tx,NB}\right)}{\left(P_{tx,NB}+k_2\right)} \qquad (47)$$

Again, in the case of large NB transmit power, the SINR at the UE approximates to a linear function of RN transmit power. The result is that the solution to (47) will be infinite.

The optimal transmit power balance will now be determined based on the solutions developed above for the different relay and duplexing schemes and for two separate deployment scenarios. These deployment scenarios are summarised in Table III and the propagation parameters of the pathloss equation in (48) are in Table IV.

$$L=b+10n\log d \qquad (48)$$

Where $L$ is the pathloss in dB, $b$ is in dB and is given in Table along with $n$, and $d$ is the transmitter-receiver separation in metres.

Table III. Deployment scenarios

| Parameter | Scenario 1 | Scenario 2 |
|---|---|---|
| Cell Radius | 1867m | |
| Relay Position | 933m | 1400m |

The transmitter receiver separation is the same as the cell radius (i.e. the UE is located at the cell radius). The RN position quoted is relative to the centre of the cell which is where theNB is located. The RN positions are therefore the distance from the NB to the RN. The RN-UE is then the difference of the cell radius and the NB-RN separation.

Table IV. Propagation parameters.

| Parameter | Link | | |
|---|---|---|---|
| | NB-UE | NB-RN | RN-UE |
| b (dB) | 15.3 | 15.5 | 28 |
| n | 3.76 | 3.68 | 4 |

Regenerative relay

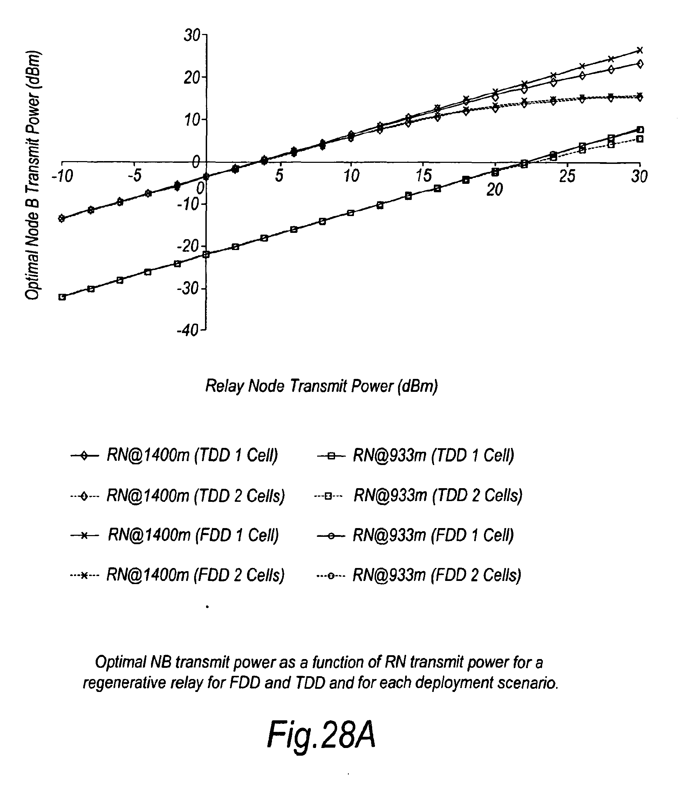

Substituting the values given in Table III and Table IV into equations (3) and (5) for FDD and (12) and (17) for TDD it is possible to find the optimal NB transmit power given the RN transmit power. Figure 28A shows the optimal NB transmit power as a function of RN transmit power for both FDD and TDD for the two deployment scenarios.

Non-Regenerative relay with FDD

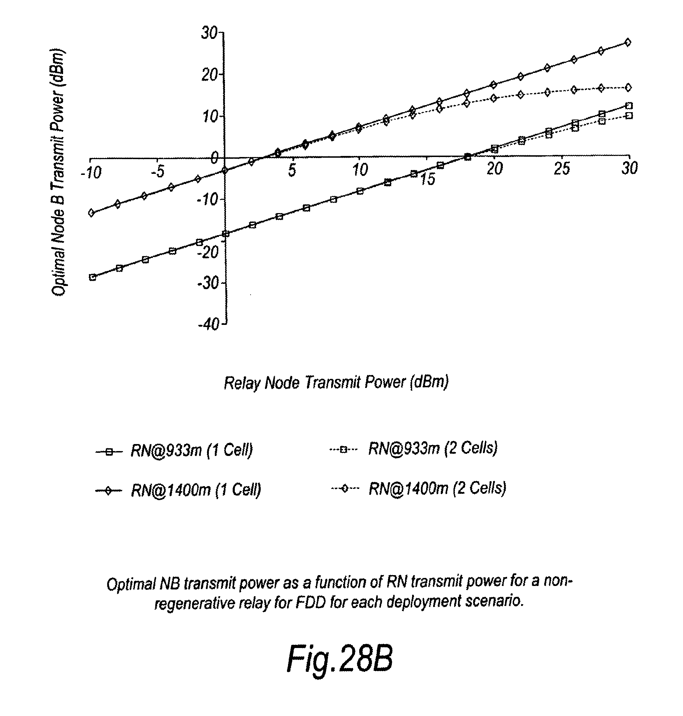

Substituting the parameters into (23) and (24) it is possible to find the optimal NB transmit power for the two deployment scenarios, as shown in Figure 28B.

Non-Regenerative relay with TDD

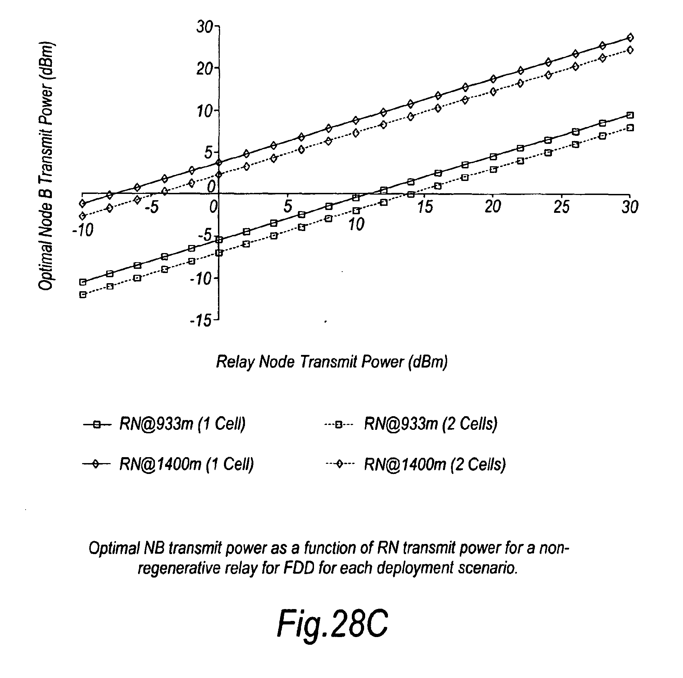

Substituting the parameters into (37) and (44) it is possible to find the optimal NB transmit power for the two deployment scenarios, as shown in Figure 28C.

System level simulation results

System simulation of a multi-hop HSDPA network employing non-regenerative relays with TDD duplexing with relays transmitting in every third transmission time interval have been conducted in order to validate the predicted optimal transmit power setting based on results of Figure 28C, with the average packet call throughput gain being determined as the transmit powers of the RN and NB are varied around the optimal point.

Results of a system level simulation for the two deployment scenarios detailed above in Table III will now be presented. The simulation parameters are listed below in Table V and Table VI.

Table V. Deployment parameters

| Parameter | | Value |
|---|---|---|
| Base Station | Inter-cell Separation | 2.8 km |
| | Sectors/cell | 3 |
| | Antenna Height | 15 m |
| | Antenna Gain | 17 dBi |
| Relay Station | RN antenna | 120° |
| | Position | ½ and ¾ cell radius |
| | Num/cell | 9 |
| | Antenna Height | 5 m |
| | Antenna Gain | 17 dBi |
| User Equipment | Number per sector | 50 |
| | Initial Distribution | Random |
| | Velocity | 3 km/h |
| | Direction | Semi-directed |

(continued)

| Parameter | Value |
|---|---|
| Update | 20 m |
| Traffic Models | WWW |

Table VI. Simulation parameters

| Parameters | | Value |
|---|---|---|
| Base Station/ | HS-DSCH power | Variable |
| | CPICH power | 20% of total |
| | HARQ scheme | Chase |
| | HS-DSCH/frame | 15 |
| Relay Node | Relay buffer size | 1.78 Mbits |
| | Ack/NAck Detection | Error free |
| | NB Scheduler | Round Robin |
| | Relay type | Amplify & Forward |
| | | 10 |
| User | Thermal Noise Density | -174 dBm/Hz |
| Equipment | Noise Figure | 5dBm |
| | Detector | MMSE |

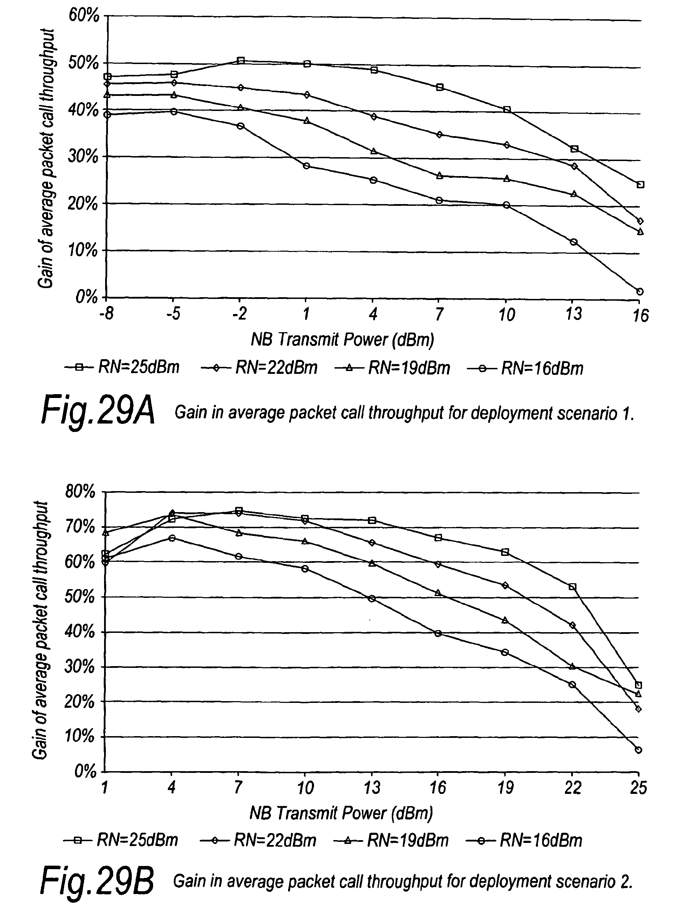

For both deployment scenarios the gain in the average packet call throughput experienced by the users on that observed for the case of a single hop system with NB transmission power of 30dBm is plotted as a function of NB transmit power for four different RN transmit powers. Figure 29A shows the gain for deployment scenario 1 and Figure 29B shows the gain for scenario 2.

Note that the channel gain for the NB to UE link was 3dB higher than for the NB to RN and RN to UE link. This means that the interference experienced by a UE connected to a RN from another NB is double that used in the link analysis discussed above with reference to Figures 28A, 28B and 28C.

The channel gain is due to the fact that a number of replicas of the transmitted signal are received, when the power on all these is added it is found that for the case of the NB to UE channel the total power is double that on the NB to RN or RN to UE channel. This accounts for the 3dB gain, as 3dB equates to double. As a result of the channel gain being higher for the NB to UE channel, this means that the received signal power will be 3dB (or double) higher than that used in the analysis up to that point where no channel gain through multi-path was considered.

Comparison of link based prediction and system simulation

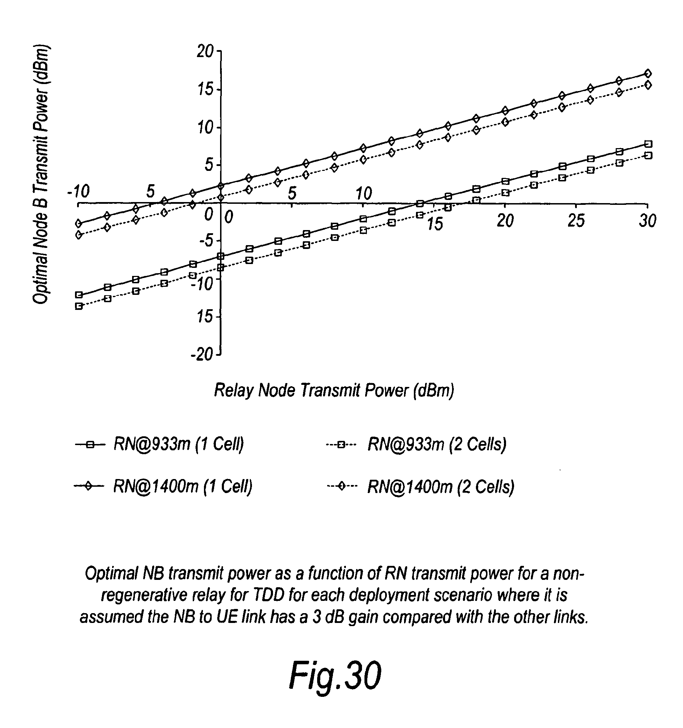

Figure 30 shows the optimal NB transmit power as a function of RN transmit power for a non-regenerative relay for TDD for each deployment scenario where it is assumed the NB to UE link has a 3dB gain compared with the other links. In this case, the predicted transmit power at the NB for the RN transmit power used in the simulation are listed in Table VII along with the throughput gain that would be experienced if these settings were used and the maximum achievable.

Table VII. Predicted optimal NB transmit power and resulting simulated throughput gain that would have been achieved from this setting compared with the maximum gain observed.

| RN Transmit Power (dBm) | NB Transmit Power (dBm) & User Packet Throughput Gain | | | | | |
|---|---|---|---|---|---|---|
| | Scenario 1 | | | Scenario 2 | | |
| | Predicted | Throughput Gain | Max Gain | Predicted | Throughput Gain | Max Gain |
| 16 | -0.5 | 33% | 40% | 8.8 | 60% | 67% |
| 19 | 1 | 38% | 43% | 10.3 | 65% | 74% |

(continued)

| RN Transmit Power (dBm) | NB Transmit Power (dBm) & User Packet Throughput Gain | | | | | |
| | Scenario 1 | | | Scenario 2 | | |
| | Predicted | Throughput Gain | Max Gain | Predicted | Throughput Gain | Max Gain |
|---|---|---|---|---|---|---|
| 22 | 2.5 | 41% | 46% | 11.8 | 68% | 74% |
| 25 | 4 | 49% | 51% | 13.3 | 72% | 75% |

Table VII, Figure 28A and Figure 29B suggest that if power balancing is performed according to a preferred embodiment of the present invention using a technique based on the equations developed above then the selected power balance will in general be in the region of the optimal point. In particular, for the transmit powers used the gain was shown to always be within 10% of the achievable maximum, with the difference being due to shortcomings of using of a two-cell model to model a multi-cell system.

The necessity of transmit power balancing is apparent in the results presented in both Figure 29A and Figure 29B where it is shown that if the NB transmit is increased beyond the optimal point then a significant degradation in gain will be experienced despite the emission of more signal energy. It also shows that if the NB transmit power is selected carefully then the sensitivity of the gain to RN transmit power is reduced.

**Claims**

1. A communication system comprising a source apparatus, a destination apparatus and at least one intermediate apparatus (12), wherein the source apparatus and the or each intermediate apparatus (12) each comprise a transmitter, operable to transmit a communication signal or a signal derived therefrom, in a communication direction towards said destination apparatus, and wherein the destination apparatus and the, or each, intermediate apparatus (12) each comprise a receiver, operable to receive said communication signal, or a signal derived therefrom, **characterised in that** said communication system comprises an indicator derivation means (1) operable to derive an indicator of the quality of service (QoS) experienced by one or more of said receivers, and a determining means (3) operable to determine a measure of, or a change in a measure of, the bandwidth allocated to one or more of said transmitters that will tend to attain or maintain a balance between a measure of the QoS experienced at the destination apparatus and a measure of the QoS experienced at the, at least one of the, intermediate apparatus(es).

2. A communication system as claimed in claim 1, further comprising: an indicator deviation detection means (2) operable to detect a deviation in an indicator derived for the destination apparatus and/or in an indicator derived for the, or one of the, intermediate apparatus(es) from a desired value, wherein said determining means (3) is operable, following the detection of such a deviation, to determine a measure of, or a change in a measure of, a bandwidth allocated to one or more of the transmitters that will tend to bring the indicator derived for said destination apparatus and/or for the intermediate apparatus (12), to said desired value.

3. A communication system as claimed in claim 2, wherein the determining means (3) is operable, following the detection of a change in one said indicator derived for the destination apparatus, to i) determine a measure of, or a change in a measure of, a bandwidth allocated to the transmitter of the intermediate apparatus from which said destination apparatus is operable to receive the communication signal, or ii) determine a measure of, or a change in a measure of, a bandwidth allocated to the transmitter of the, or each, intermediate apparatus and the source apparatus that will tend to bring said indicator to said desired value.

4. A communication system as claimed in claim 2 or 3, wherein said determining means (4) comprises a first calculation means (4) operable, following detection of a deviation from said desired value, to calculate a new bandwidth allocation for the transmitter of the intermediate apparatus or for at least one of the intermediate apparatuses, that will tend to tend to bring the said indicator to said desired value.

5. A communication system as claimed in claim 2, 3 or 4, further comprising i) imbalance detection means (10) operable to detect an imbalance between one said indicator derived for each of at least two of: the destination apparatus and the, or each, intermediate apparatus; wherein said determining means is operable, following the detection of such an imbalance, to determine a measure of, or a change in a measure of, a bandwidth allocated to the transmitter of the source apparatus and/or to the transmitter of the, or at least one of the, intermediate apparatus(es) that will tend to reduce said imbalance.

6. A communication system as claimed in claim 5, wherein said determining means comprises a second calculation means (5) operable, following the detection of such an imbalance, to calculate a new bandwidth allocation for the source apparatus and/or a new bandwidth allocation for at least one of the intermediate apparatuses that will tend to reduce said imbalance.

7. A communication system as claimed in claim 1, the system further comprising:

   imbalance detection means (10) operable to detect an imbalance between one said indicator derived for each of at least two of: the destination apparatus and the, or each, intermediate apparatus, wherein said determining means is operable, following the detection of such an imbalance, to determine a measure of, or a change in a measure of, a bandwidth allocated to the transmitter of said source apparatus and/or to the transmitter of at least one of the intermediate, apparatuses, that will tend to reduce said imbalance.

8. A communication system as claimed in any claim 7, wherein said determining means comprises a calculation means (5) operable, following the detection of such an imbalance, to calculate a new bandwidth allocation for the source apparatus and/or for at least one of the intermediate apparatuses that will tend to reduce said imbalance.

9. A communication system as claimed in any preceding claim wherein the indicator derivation means comprises a first indicator derivation means operable to derive an indicator of the quality of a communication signal received at the destination apparatus and/or a second indicator derivation means operable to derive an indicator of the quality of a communication signal received at the, or at least one of the, intermediate apparatuses.

10. A communication system as claimed in claim 9, wherein the first indicator derivation means is provided in one of said destination apparatus, said intermediate apparatus(es) or said source apparatus.

11. A communication system as claimed in claim 9 or 10, wherein the second indicator derivation means is provided in one of said destination apparatus, said intermediate apparatus(es) or said source apparatus.

12. A communication system as claimed in any preceding claim, wherein the source apparatus is part of a base station (11), the base station being operable to transmit a communication signal, via the or each intermediate apparatus, to the destination apparatus.

13. A communication system as claimed in any one of claims 1 to 11, wherein the destination apparatus is part of a base station (11), the source apparatus being operable to transmit a communication signal, via the or each intermediate apparatus, to the base station.

14. A communication system as claimed in any preceding claim further comprising a control means (7) operable, following the determination of a measure of or a change in the measure of the bandwidth allocated to one or more of the transmitters, to issue a command to said source apparatus and/or to said intermediate apparatus(es), as the case may be, commanding a change in the bandwidth allocated to the transmitter thereof.

15. A communication system as claimed in claim 14, wherein said control means (7) is provided in the base station (11).

16. A communication system as claimed in claim 14, wherein said control means (7) is provided in the, or at least one of the, intermediate apparatus(es) (12).

17. A method of transmitting a communication signal from a source apparatus to a destination apparatus, via one or more intermediate apparatus, wherein the source apparatus and the or each intermediate apparatus each comprise a transmitter, operable to transmit a communication signal in a communication direction towards said destination apparatus, and wherein the destination apparatus and the, or each, intermediate apparatus each comprise a receiver, operable to receive said communication signal, or a signal derived therefrom, the method being characaterised by the steps of:

   i) deriving one or more indicators of the quality of service (QoS) experienced at one or more of said receivers;
   ii) detecting a deviation in the, or one of the, said indicators from a desired value;

iii) determining, following the detection of such a deviation, a measure of, or the change in the measure of, a bandwidth allocated to the source apparatus and/or to the, or at least one of the, intermediate apparatuses, that will tend to bring the said indicator to said desired value.

18. A method of transmitting a communication signal from a source apparatus to a destination apparatus, via one or more intermediate apparatus, wherein the source apparatus and the or each intermediate apparatus each comprise a transmitter, operable to transmit a communication signal in a communication direction towards said destination apparatus, and wherein the destination apparatus and the, or each, intermediate apparatus each comprise a receiver, operable to receive said communication signal, or a signal derived therefrom, the method being **characterised by** the steps of:

 i) deriving one or more indicators of the quality of service experienced by one or more of said receivers;
 ii) detecting an imbalance between one said indicator derived for each of at least two of: the destination apparatus and the, or each, intermediate apparatus; and
 iii) determining means operable, following the detection of such an imbalance, to determine a measure of, or a change in a measure of, a bandwidth allocated to the source apparatus and/or to determine a measure of, or a change in a measure of, a bandwidth allocated to the transmitter of at least one of the intermediate apparatuses, that will tend to reduce said imbalance.

19. A method as claimed in claim 17 or 18, wherein said step of deriving an indicator of the quality of service experienced by said destination apparatus is carried out in parts associated with the, or one of the, intermediate apparatus(es) or in parts associated with the base station.

20. A method as claimed in claim 17, 18 or 19, wherein said step of deriving an indicator of the quality of service experienced by the, or one of the, intermediate apparatus(es) is carried out in parts associated with the base station or in parts associated with the intermediate apparatus.

21. A base station (11) comprising a transmitter operable to transmit a communication signal to a destination apparatus, via at least one intermediate apparatus, **characterised in that** the base station comprises a determining means (3) operable to determine a measure of, or a change in a measure of, the bandwidth allocated to said base station or to the, or one of the, intermediate apparatuses, that will tend to attain or maintain a balance between:

 i) a measure of the quality of service (QoS) experienced at the destination apparatus; and
 ii) a measure of the quality of service (QoS) experienced at the, or at least one of the, intermediate apparatus(es).

22. A base station (11) as claimed in claim 21, further comprising indicator receiving means (9), operable to receive indicators of the quality of service experienced at said destination apparatus and/or the, or at least one of the, intermediate apparatus(es), and indicator deviation detection means (2), operable to detect a deviation in one said indicator from a desired value, wherein said determining means (3) is operable, following detection of a deviation in one said indicator from said desired value, to determine a measure of, or a change in a measure of, the bandwidth allocated to said base station or to the, or one of the, intermediate apparatuses that will tend to bring said indicator to said desired value.

23. A base station as claimed in claim 22, further comprising request receiving means (6), operable to receive a request for a new bandwidth allocation for the, or one of the, intermediate apparatus(es).

24. A base station as claimed in 22, further comprising indicator derivation means (1), operable to derive an indicator of the quality of service (QoS) experienced at said destination apparatus and/or at the, or at least one of one of the, intermediate apparatus(es).

25. A base station as claimed in claim 24, further comprising indicator deviation detection means (2), operable to detect a deviation in one said indicator derived by said indicator derivation means, from a desired value, wherein said determining means (3) is operable, following detection of a deviation in one said indicator from a desired value, to determine a measure of, or a change in a measure of, the bandwidth allocated to said base station or to the, or one of the, intermediate apparatuses that will tend to bring said indicator to said desired value.

26. A base station as claimed in any one of claims 22 to 25, further comprising imbalance detection means (10), operable to detect an imbalance between an indicator derived for each of at least two of: the destination apparatus and the,

or each, intermediate apparatus; wherein said determining means (3) is operable, following the detection of such an imbalance, to determine a measure of, or a change in a measure of, a bandwidth allocated to the transmitters of the base station and/or at least one of the intermediate apparatuses that will tend to reduce said imbalance.

27. A base station as claimed in claim 22 or 25, wherein said determining means (3) comprises a first calculation means (4) operable, following detection of a deviation in one said indicator from a desired value, to calculate the bandwidth to be allocated to said base station or to the, or one of the, intermediate apparatuses that will tend to bring said indicator to said desired value.

28. A base station as claimed in claim 26 or 27, wherein said determining means (3) comprises a second calculation means (5) operable, following detection of an imbalance by said imbalance detection means, to calculate a measure of, or a change in a measure of, a bandwidth allocated to the transmitters of: the base station and/or at least one of the intermediate apparatuses, that will tend to reduce said imbalance.

29. A base station (11) operable to receive, via at least one intermediate apparatus, a communication signal transmitted by a source apparatus, **characterised in that** the base station comprises a determining means operable to determine a measure of, or a change in a measure of, the bandwidth allocated to said source apparatus or to the, or one of the, intermediate apparatus(es), that will tend to attain or maintain a balance between:

    i) a measure of the quality of service (QoS) experienced at the base station; and
    ii) a measure of the quality of service (QoS) experienced at the, or at least one of the, intermediate apparatus(es).

30. A base station as claimed in claim 29, further comprising indicator receiving means (9), operable to receive indicators of the quality of the communication signal received at the, or at least one of the, intermediate apparatus(es).

31. A base station as claimed in claim 29, further comprising indicator derivation means (1), operable to derive an indicator of the quality of service (QoS) experienced at said base station and/or at the, or at least one of one of the, intermediate apparatus(es).

32. A base station a claimed in claim 30 or 31, further comprising indicator deviation detection means (2), operable to detect a deviation in one said indicator derived by said indicator derivation means, from a desired value, wherein said determining means is operable, following detection of a deviation in one said indicator from a desired value, to determine a measure of, or a change in a measure of, the bandwidth allocated to said source apparatus or to the, or one of the, intermediate apparatuses that will tend to bring said indicator to said desired value.

33. A base station as claimed in any one of claims 29 to 32, further comprising imbalance detection means (10), operable to detect an imbalance between an indicator derived for each of at least two of: the base station and the, or each, intermediate apparatus; wherein said determining means is operable, following the detection of such an imbalance, to determine a measure of, or a change in a measure of, a bandwidth allocated to the transmitters of the source apparatus and/or at least one of the intermediate apparatuses that will tend to reduce said imbalance.

34. A base station as claimed in claim 32, wherein said determining means comprises a first calculation means (4) operable, following detection of a deviation in one said indicator from a desired value, to calculate the bandwidth to be allocated to said source apparatus or to the, or one of the, intermediate apparatuses that will tend to bring said indicator to said desired value.

35. A base station as claimed in claim 33, wherein said determining means comprises a second calculation means (5) operable, following detection of an imbalance by said imbalance detection means, to calculate a measure of, or a change in a measure of, a bandwidth allocated to the transmitters of: the source apparatus and/or at least one of the intermediate apparatuses, that will tend to reduce said imbalance.

36. An intermediate apparatus (12) for use in a multi-hop communication system, said intermediate apparatus comprising a transmitter an a receiver and being operable to receive a communication signal from a source apparatus or from a previous intermediate apparatus in a communication direction, and to transmit said communication signal or a signal derived therefrom, to a destination apparatus or a subsequent intermediate apparatus in a communication direction, **characterised in that** said intermediate apparatus further comprises:

    a determining means (3) operable to determine a measure of, or a change in a measure of, the bandwidth allocated to: said transmitter of the intermediate apparatus;
and/or a transmitter of said source apparatus; and/or a transmitter of said previous intermediate apparatus, and/or a transmitter of a subsequent intermediate apparatus, that will tend to attain or maintain a balance between a measure of the quality of service (QoS) experienced at, at least two of:

> a receiver of the destination apparatus;
> the receiver of the intermediate apparatus;
> a receiver of a previous intermediate apparatus; and
> a receiver of a subsequent intermediate apparatus.

37. An intermediate apparatus as claimed in claim 36, further comprising indicator derivation means, operable to derive an indicator of the quality of service (QoS) experienced at any one of said receivers.

38. A computer program which, when loaded into a computer, causes the computer to become the base station of the communication system as claimed in any one of claims 1 to 16 or to become the base station as claimed in any one of claims 21 to 35.

39. A computer program which, when loaded onto a computer, causes the computer to become the intermediate apparatus of the communication system as claimed in any one of claims 1 to 16 or to become the intermediate apparatus as claimed in claim 36 or 37.

40. A computer program which, when loaded into a computer, causes the computer to become a destination apparatus of the communication system as claimed in any one of claims 1 to 16.

41. A computer program as clamed in claim 38, 39 or 40, carried by a carrier medium.

42. A computer program as claimed in claim 41, wherein said carrier medium is a recording medium.

43. A computer program as claimed in claim 41, wherein said carrier medium is a transmission medium.

**Patentansprüche**

1. Kommunikationssystem mit einer Ausgangs-Vorrichtung, einer Ziel-Vorrichtung und zumindest einer dazwischen liegenden Vorrichtung (12), wobei die Ausgangs-Vorrichtung und die oder jede dazwischen liegende Vorrichtung (12) jeweils einen Transmitter umfassen, der ausgelegt ist zum Übertragen eines Kommunikationssignals oder eines Signals, das daraus abgeleitet ist, in einer Kommunikationsrichtung zu der Ziel-Vorrichtung, und wobei die Ziel-Vorrichtung und die, oder jede dazwischen liegende Vorrichtung (12) jeweils einen Empfänger umfassen, der ausgelegt ist zum Empfangen des Kommunikationssignals, oder des daraus abgeleiteten Signals, **dadurch gekennzeichnet, dass** das Kommunikationssystem ein Indikationsableitmittel (1) umfasst, das ausgelegt ist zum Ableiten eines Indikators der Dienstgüte (QoS) die durch einen oder mehrere der Empfänger erfahren wird, und ein Bestimmungsmittel (3), das ausgelegt ist zum Bestimmen eines Maßes, oder einer Änderung in einem Maß der Bandbreite, die einem oder mehreren der Transmitter zugewiesen ist, womit ein Ausgleich zwischen einem QoS-Maß, das an der Ziel-Vorrichtung erfahren wird, und einem QoS-Maß, das an dem zumindest einen der dazwischen liegenden Vorrichtungen erfahren wird, erreicht oder aufrecht erhalten wird.

2. Kommunikationssystem nach Anspruch 1, ferner mit:

> einem Indikatorabweichungs-Erfassungsmittel (2), das ausgelegt ist zum Erfassen einer Abweichung in einem Indikator, der für die Ziel-Vorrichtung abgeleitet ist, und/oder in einem Indikator, der für die, oder eine der, dazwischen liegenden Vorrichtungen abgeleitet ist, von einem gewünschten Wert, wobei das Bestimmungsmittel (3) ausgelegt ist, der Erfassung einer solchen Abweichung folgend, zum Bestimmen eines Maßes einer, oder einer Änderung in einem Maß einer Bandbreite, die einem oder mehreren der Transmitter zugewiesen ist, das den Indikator, der für die Ziel-Vorrichtung und/oder für die dazwischen liegende Vorrichtung (12) abgeleitet ist, auf den gewünschten Wert bringen wird.

3. Kommunikationssystem nach Anspruch 2, wobei das Bestimmungsmittel (2) ausgelegt ist, der Erfassung einer Änderung in dem Indikator folgend, der für die Ziel-Vorrichtung abgeleitet ist, zum i) Bestimmen eines Maßes, oder einer Änderung in einem Maß einer Bandbreite, die dem Transmitter der dazwischen liegenden Vorrichtung zugewiesen ist, aus dem die Ziel-Vorrichtung ausgelegt ist, das Kommunikationssignal zu empfangen, oder ii) zum Bestimmen eines Maßes, oder einer Änderung in einem Maß einer Bandbreite, das dem Transmitter des, oder jeder der dazwischen liegenden Vorrichtung und der Ausgangs-Vorrichtung zugewiesen ist, das den Indikator auf den gewünschten Wert bringen wird.

4.  Kommunikationssystem nach Anspruch 2 oder 3, wobei das Bestimmungsmittel (4) ein erstes Rechenmittel (4) umfasst, das ausgebildet ist, einer Erfassung einer Abweichung von dem gewünschten Wert folgend, zum Berechnen einer neuen Bandbreitenzuweisung für den Transmitter der dazwischen liegenden Vorrichtung oder für zumindest eine der dazwischen liegenden Vorrichtungen, was dazu führt, dass der Indikator den gewünschten Wert annehmen wird.

5.  Kommunikationssystem nach Anspruch 2, 3 oder 4, ferner umfassend i) ein Ungleichgewichterfassungsmittel (10), das ausgelegt ist zum Erfassen eines Ungleichgewichts zwischen einem der Indikatoren, die abgeleitet werden für jede von zumindest zweien:

    der Ziel-Vorrichtung und der, oder jeder dazwischen liegenden Vorrichtung; wobei das Bestimmungsmittel ausgelegt ist, der Erfassung eines solchen Ungleichgewichts folgend, zum Bestimmen eines Maßes, oder einer Änderung im Maß einer Bandbreite, die dem Transmitter der Ausgangs-Vorrichtung zugewiesen wird, und/oder dem Transmitter der, oder zumindest einer der dazwischen liegenden Vorrichtungen, was zu einer Reduzierung des Ungleichgewichts führt.

6.  Kommunikationssystem nach Anspruch 5, wobei das Bestimmungsmittel ein zweites Rechenmittel (5) umfasst, das ausgelegt ist, der Erfassung eines solchen Ungleichgewichts folgend, zum Berechnen einer neuen Bandbreitenzuweisung für die Ausgangs-Vorrichtung und/oder einer neuen Bandbreitenzuweisung für zumindest eine der dazwischen liegenden Vorrichtungen, das zu einer Reduzierung des Ungleichgewichts führt.

7.  Kommunikationssystem nach Anspruch 1, wobei das System ferner umfasst:

    ein Ungleichgewichterfassungsmittel (10), das ausgelegt ist zum Erfassen eines Ungleichgewichts zwischen einem der Indikatoren, die abgeleitet werden für jede von zumindest zweien:

    der Ziel-Vorrichtung und der, oder jeder dazwischen liegenden Vorrichtung, wobei das Bestimmungsmittel ausgelegt ist, der Erfassung eines solchen Ungleichgewichts folgend, zum Bestimmen eines Maßes, oder einer Änderung in einem Maß einer Bandbreite, die dem Transmitter der Ausgangs-Vorrichtung zugewiesen ist, und/oder dem Transmitter von zumindest einem der dazwischen liegenden Vorrichtungen, was zu einer Reduzierung des Ungleichgewichts führt.

8.  Kommunikationssystem nach Anspruch 7, wobei das Bestimmungsmittel ein Rechenmittel (5) umfasst, das ausgelegt ist, der Erfassung eines solchen Ungleichgewichts folgend, zum Berechnen einer neuen Bandbreitenzuweisung für die Ausgangs-Vorrichtung und/oder für zumindest eine der dazwischen liegenden Vorrichtungen, was zu einer Reduzierung des Ungleichgewichts führt.

9.  Kommunikationssystem nach irgendeinem der vorhergehenden Ansprüche, wobei das Indikatorableitmittel ein erstes Indikatorableitmittel umfasst, das ausgelegt ist zum Ableiten eines Indikators der Qualität eines Kommunikationssignals, das an der Ziel-Vorrichtung empfangen wird, und/oder ein zweites Indikatorableitmittel, das ausgelegt ist zum Ableiten eines Indikators der Qualität eines Kommunikationssignals, das an dem oder zumindest einem der dazwischen liegenden Vorrichtungen empfangen wird.

10. Kommunikationssystem nach Anspruch 9, wobei das erste Indikatorableitmittel in der Ziel-Vorrichtung und/oder der bzw. den dazwischen liegenden Vorrichtungen und/oder der Ausgangs-Vorrichtung bereitgestellt ist.

11. Kommunikationssystem nach Anspruch 9 oder 10, wobei das zweite Indikatorableitmittel in der Ziel-Vorrichtung und/oder der bzw. den dazwischen liegenden Vorrichtungen und/oder der Ausgangs-Vorrichtung bereitgestellt ist.

12. Kommunikationssystem nach irgendeinem der vorhergehenden Ansprüche, wobei die Ausgangs-Vorrichtung ein Teil einer Basisstation (11) ist, wobei die Basisstation ausgelegt ist zum Übertragen eines Kommunikationssignals, über die oder alle dazwischen liegenden Vorrichtungen, an die Ziel-Vorrichtung.

13. Kommunikationssystem nach irgendeinem der Ansprüche 1 - 11, wobei die Ziel-Vorrichtung ein Teil einer Basisstation (11) ist, wobei die Ausgangs-Vorrichtung ausgelegt ist zum Übertragen eines Kommunikationssignals, über die oder jede der dazwischen liegenden Vorrichtungen, an die Basisstation.

14. Kommunikationssystem nach irgendeinem vorhergehenden Ansprüche, ferner mit einem Steuermittel (7), das ausgelegt ist, der Bestimmung eines Maßes folgend, oder einer Änderung in dem Maß der Bandbreite, die einem oder mehreren der Transmitter zugewiesen wird, zum Ausgeben einer Anweisung an die Ausgangs-Vorrichtung und/ oder an den bzw. die dazwischen liegenden Vorrichtungen, je nach Fall, die einer Änderung der Bandbreite anweist, die dem dazugehörigen Transmitter zugewiesen wird.,

15. Kommunikationssystem nach Anspruch 14, wobei das Steuermittel (7) in der Basisstation (11) bereitgestellt ist.

16. Kommunikationssystem nach Anspruch 14, wobei das Steuermittel (7) in der oder zumindest einer der dazwischen liegenden Vorrichtungen (12) bereitgestellt ist.

17. Verfahren zum Übertragen eines Kommunikationssignals von einer Ausgangs-Vorrichtung an eine Ziel-Vorrichtung, über eine oder mehrere dazwischen liegende Vorrichtungen, wobei die Ausgangs-Vorrichtung und die oder jede der dazwischen liegenden Vorrichtungen jeweils einen Transmitter umfassen, ausgelegt zum Übertragen eines Kommunikationssignals in eine Kommunikationsrichtung zu der Ziel-Vorrichtung, und wobei die Ziel-Vorrichtung und die oder jede dazwischen liegende Vorrichtung jeweils einen Empfänger umfasst, ausgelegt zum Empfangen des Kommunikationssignals, oder eines Signals, das davon abgeleitet ist, wobei das Verfahren **gekennzeichnet ist durch** die Schritte zum:

    i) Ableiten eines oder mehrerer Indikatoren der Dienstqualität (QoS), die an einem oder mehreren der Empfänger erfahren wird;
    ii) Erfassen einer Abweichung in dem oder in einem der Indikatoren von einem gewünschten Wert;
    iii) Bestimmen, der Erfassung einer solchen Abweichung folgend, eines Maßes, oder der Änderung in dem Maß einer Bandbreite, die der Ausgangs-Vorrichtung zugewiesen ist, und/oder der oder zumindest einer der dazwischen liegenden Vorrichtungen, was den Indikator zu dem gewünschten Wert bringen wird.

18. Verfahren zum Übertragen eines Kommunikationssignals von einer Ausgangs-Vorrichtung zu einer Ziel-Vorrichtung, über eine oder mehrere dazwischen liegende Vorrichtungen, wobei die Ausgangs-Vorrichtung und die oder alle dazwischen liegenden Vorrichtungen jeweils einen Transmitter umfassen, ausgelegt zum Übertragen eines Kommunikationssignals in eine Kommunikationsrichtung zu der Ziel-Vorrichtung, und wobei die Ziel-Vorrichtung und die oder jede dazwischen liegende Vorrichtung jeweils einen Empfänger umfasst, ausgelegt zum Empfangen des Kommunikationssignals, oder eines Signals, das davon abgeleitet ist, wobei das Verfahren **gekennzeichnet ist durch** die Schritte zum:

    i) Ableiten eines oder mehrere Indikatoren der Dienstqualität, die **durch** einen oder mehrere der Empfänger erfahren wird;
    ii) Erfassen eines Ungleichgewichts zwischen einem der Indikatoren, die abgeleitet werden für jede von zumindest zweien der: Ziel-Vorrichtung und der oder jeder der dazwischen liegenden Vorrichtungen; und
    iii) Bestimmen, der Erfassung eines solchen Ungleichgewichts folgend, eines Maßes, oder einer Änderung im Maß einer Bandbreite, die der Ausgangs-Vorrichtung zugewiesen ist, und/oder Bestimmen eines Maßes, oder einer Änderung in einem Maß einer Bandbreite, die dem Transmitter von zumindest einer der dazwischen liegenden Vorrichtungen zugewiesen wird, um das Ungleichgewicht zu reduzieren.

19. Verfahren nach Anspruch 17 oder 18, wobei der Schritt zum Ableiten eines Indikators der Dienstqualität, die durch die Ziel-Vorrichtung erfahren wird, ausgeführt wird in Teilen, die assoziiert sind mit der oder einer der dazwischen liegenden Vorrichtungen, oder in Teilen, die mit der Basisstation assoziiert sind.

20. Verfahren nach Anspruch 17, 18 oder 19, wobei der Schritt zum Ableiten eines Indikators der Dienstqualität, die erfahren wird durch die, oder eine der dazwischen liegenden Vorrichtungen, in Teilen, die mit der Basisstation assoziiert sind, oder in Teilen, die mit der dazwischen liegenden Vorrichtung assoziiert sind, ausgeführt wird.

21. Basisstation (11) mit einem Transmitter, der ausgelegt ist zum Übertragen eines Kommunikationssignals an eine Ziel-Vorrichtung, über zumindest eine dazwischen liegende Vorrichtung, **dadurch gekennzeichnet, dass** die Basisstation ein Bestimmungsmittel (3) umfasst, das ausgelegt ist zum Bestimmen eines Maßes, oder einer Änderung in einem Maß der Bandbreite, die der Basisstation zugewiesen ist, oder der oder einer der dazwischen liegenden Vorrichtungen, was zum Erreichen oder Aufrechterhalten eines Gleichgewichts führt, zwischen:

i) einem Maß der Dienstqualität (QoS), die an der Ziel-Vorrichtung erfahren wird; und

ii) einem Maß der Dienstqualität (QoS), die an der oder zumindest einer der dazwischen liegenden Vorrichtungen erfahren wird.

22. Basisstation (11) nach Anspruch 21, ferner mit einem Indikatorempfangsmittel (9), das ausgelegt ist zum Empfangen von Indikatoren der Dienstqualität, die an der Ziel-Vorrichtung erfahren wird und/oder der oder zumindest einer der dazwischen liegenden Vorrichtungen, und einem Indikatorabweichungs-Erfassungsmittel (2), das ausgelegt ist zum Erfassen einer Abweichung in einem der Indikatoren von einem gewünschten Wert, wobei das Bestimmungsmittel (3) ausgelegt ist, einer Erfassung einer Abweichung in einem der Indikatoren von dem gewünschten Wert folgend, zum Bestimmen eines Maßes, oder einer Änderung in einem Maß der Bandbreite, die der Basisstation zugewiesen ist, oder der oder einer der dazwischen liegenden Vorrichtungen, was dazu führt, dass der Indikator zu dem gewünschten Wert gebracht wird.

23. Basisstation nach Anspruch 22, ferner mit einem Anforderungsempfangsmittel (6), das ausgelegt ist zum Empfangen einer Anforderung für eine neue Bandbreitenzuweisung für die oder eine der dazwischen liegenden Vorrichtungen.

24. Basisstation nach Anspruch 22, ferner mit einem Indikatorableitmittel (1), das ausgelegt ist zum Ableiten eines Indikators der Dienstqualität (QoS), die an der Ziel-Vorrichtung erfahren wird, und/oder an der oder zumindest einer der dazwischen liegenden Vorrichtungen.

25. Basisstation nach Anspruch 24, ferner mit einem Indikatorabweichungs-Erfassungsmittel (2), das ausgelegt ist zum Erfassen einer Abweichung in einem der Indikatoren, die durch das Indikatorableitmittel abgeleitet werden, von einem gewünschten Wert, wobei das Bestimmungsmittel (3) ausgelegt ist, der Erfassung einer Abweichung in einem der Indikatoren von einem gewünschten Wert folgend, zum Bestimmen eines Maßes, oder einer Änderung in einem Maß der Bandbreite, die der Basisstation zugewiesen ist, oder der oder einer der dazwischen liegenden Vorrichtungen, was dazu führt, dass der Indikator zu dem gewünschten Wert gebracht wird.

26. Basisstation nach irgendeinem der Ansprüche 22 - 25, ferner mit einem Ungleichgewichtserfassungsmittel (10), das ausgelegt ist zum Erfassen eines Ungleichgewichts zwischen einem Indikator, der abgeleitet ist für jede von zumindest zweien:

der Ziel-Vorrichtung und der, oder jeder dazwischen liegenden Vorrichtungen; wobei das Bestimmungsmittel (3) ausgelegt ist, der Erfassung eines solchen Ungleichgewichts folgend, zum Bestimmen eines Maßes, oder einer Änderung in einem Maß einer Bandbreite, die den Transmittern der Basisstation zugewiesen ist, und/oder zumindest einer der dazwischen liegenden Vorrichtungen, was zu einer Reduzierung des Ungleichgewichts führt.

27. Basisstation nach Anspruch 22 oder 25, wobei das Bestimmungsmittel (3) ein erstes Berechnungsmittel (4) umfasst, das ausgelegt ist, einer Erfassung einer Abweichung in einem der Indikatoren von einem gewünschten Wert folgend, zum Berechnen der Bandbreite, die der Basisstation zugewiesen wird, oder der oder einer der dazwischen liegenden Vorrichtungen, was dazu führt, dass der Indikator zu dem gewünschten Wert gebracht wird.

28. Basisstation nach Anspruch 26 oder 27, wobei das Bestimmungsmittel (3) ein zweites Rechenmittel (5) umfasst, das ausgelegt ist, einer Erfassung eines Ungleichgewichts durch das Ungleichgewichtserfassungsmittel folgend, zum Berechnen eines Maßes, oder einer Änderung in einem Maß einer Bandbreite, die zugewiesen wird der Basisstation und/oder zumindest einer der dazwischen liegenden Vorrichtungen, was zu einer Reduzierung des Ungleichgewichts führt.

29. Basisstation (11), die ausgelegt ist zum Empfangen, über zumindest eine dazwischen liegende Vorrichtung, eines Kommunikationssignals, das durch eine Ausgangs-Vorrichtung übertragen wird, **dadurch gekennzeichnet, dass** die Basisstation umfasst:

ein Bestimmungsmittel, das ausgelegt ist zum Bestimmen eines Maßes, oder einer Änderung in einem Maß der Bandbreite, die der Ausgangs-Vorrichtung zugewiesen ist, oder der oder einem der dazwischen liegenden Vorrichtungen, was zum Erreichen oder Aufrechterhalten eines Gleichgewichts führt, zwischen:

i) einem Maß der Dienstqualität (QoS), die an der Basisstation erfahren wird; und

ii) einem Maß der Dienstqualität (QoS), die erfahren wird an der oder zumindest einer der dazwischen liegenden Vorrichtungen.

30. Basisstation nach Anspruch 29, ferner mit einem Indikatorempfangsmittel (9), das ausgelegt ist zum Empfangen von Indikatoren der Qualität des Kommunikationssignals, das empfangen wird an der oder zumindest einer der dazwischen liegenden Vorrichtungen.

31. Basisstation nach Anspruch 29, ferner mit einem Indikatorableitmittel (1), das ausgelegt ist zum Ableiten eines Indikators der Dienstqualität (QoS), die an der Basisstation erfahren wird, und/oder der oder zumindest einer der dazwischen liegenden Vorrichtungen.

32. Basisstation nach Anspruch 30 oder 31, ferner mit einem Indikatorabweichungs-Erfassungsmittel (2), das ausgelegt ist zum Erfassen einer Abweichung in einem der Indikatoren, die durch das Indikatorableitmittel abgeleitet werden, von einem gewünschten Wert, wobei das Bestimmungsmittel ausgelegt ist, einer Erfassung einer Abweichung in einem der Indikatoren von einem gewünschten Wert folgend, zum Bestimmen eines Maßes, oder einer Änderung in einem Maß der Bandbreite, die der Ausgangs-Vorrichtung zugewiesen ist, oder der oder einer der dazwischen liegenden Vorrichtungen, das dazu führt, dass der Indikator zu dem gewünschten Wert gebracht wird.

33. Basisstation nach irgendeinem der Ansprüche 29 - 32, ferner mit einem Ungleichgewichts-Erfassungsmittel (10), das ausgelegt ist zum Erfassen eines Ungleichgewichts zwischen einem Indikator, der abgeleitet wird für jede von zumindest zweien:

der Basisstation und der oder jeder dazwischen liegenden Vorrichtung; wobei das Bestimmungsmittel ausgelegt ist, der Erfassung eines solchen Ungleichgewichts folgend, zum Bestimmen eines Maßes, oder einer Änderung in einem Maß einer Bandbreite, die dem Transmitter der Ausgangs-Vorrichtung und/oder zumindest einer der dazwischen liegenden Vorrichtungen zugewiesen ist, was zu einer Reduzierung des Ungleichgewichts führt.

34. Basisstation nach Anspruch 32, wobei das Bestimmungsmittel ein erstes Berechnungsmittel (4) umfasst, das ausgelegt ist, einer Erfassung einer Abweichung in einem der Indikatoren von einem gewünschten Wert folgend, zum Berechnen der Bandbreite, die der Ausgangs-Vorrichtung zugewiesen wird, oder der oder einer der dazwischen liegenden Vorrichtungen, das dazu führt, dass der Indikator zu dem gewünschten Wert gebracht wird.

35. Basisstation nach Anspruch 33, wobei das Bestimmungsmittel ein zweites Berechnungsmittel (5) umfasst, das ausgelegt ist, einer Erfassung eines Ungleichgewichts durch das Ungleichgewichtserfassungsmittel folgend, zum Berechnen eines Maßes, oder einer Änderung in einem Maß einer Bandbreite, die den Transmittern der Ausgangs-Vorrichtung und/oder zumindest einem der dazwischen liegenden Vorrichtungen zugewiesen ist, das zu einer Reduzierung des Ungleichgewichts führt.

36. Eine dazwischen liegende Vorrichtung (12) zur Verwendung in einem Multi-Hop-Kommunikationssystem, wobei die dazwischen liegende Vorrichtung einen Transmitter und einen Empfänger umfasst, und ausgelegt ist zum Empfangen eins Kommunikationssignals von einer Ausgangs-Vorrichtung oder von einer vorhergehenden dazwischen liegenden Vorrichtung in einer Kommunikationsrichtung, und zum Übertragen des Kommunikationssignals oder eines Signals, das davon abgeleitet ist, an eine Ziel-Vorrichtung oder eine anschließende dazwischen liegende Vorrichtung in einer Kommunikationsrichtung, **dadurch gekennzeichnet, dass** die dazwischen liegende Vorrichtung ferner umfasst:

ein Bestimmungsmittel (3), das ausgelegt ist zum Bestimmen eines Maßes, oder einer Änderung in einem Maß der Bandbreite, die dem Transmitter der dazwischen liegenden Vorrichtung zugewiesen ist; und/oder einem Transmitter der Ausgangs-Vorrichtung, und/oder einem Transmitter der vorhergehenden dazwischen liegenden Vorrichtung, und/oder einem Transmitter einer nachfolgenden dazwischen liegenden Vorrichtung, was zu einem Erreichen oder Aufrechterhalten eines Gleichgewichts führen wird, zwischen einem Maß der Dienstqualität (QoS), die erfahren wird an zumindest zweien von:

einem Empfänger der Ziel-Vorrichtung;
dem Empfänger der dazwischen liegenden Vorrichtung;
einem Empfänger einer vorhergehenden dazwischen liegenden Vorrichtung; und
einem Empfänger einer anschließenden dazwischen liegenden Vorrichtung.

**37.** Eine dazwischen liegende Vorrichtung nach Anspruch 36, ferner mit einem Indikatorableitmittel, das ausgelegt ist zum Ableiten eines Indikators der Dienstqualität (QoS), die an irgendeinem der Empfänger erfahren wird.

**38.** Computerprogramm, das beim Laden in einen Computer bewirkt, dass der Computer zu der Basisstation des Kommunikationssystems nach irgendeinem der Ansprüche 1-16 wird, oder die Basisstation nach irgendeinem der Ansprüche 21 - 35.

**39.** Computerprogramm, das beim Laden in einen Computer, bewirkt, dass der Computer eine dazwischen liegende Vorrichtung des Kommunikationssystems nach irgendeinem der Ansprüche 1 - 16 wird, oder die dazwischen liegende Vorrichtung nach Anspruch 36 oder 37.

**40.** Computerprogramm, das beim Laden in einen Computer, bewirkt, dass der Computer eine Ziel-Vorrichtung des Kommunikationssystems nach irgendeinem der Ansprüche 1 - 16 wird.

**41.** Computerprogramm nach Anspruch 38, 39 oder 40, das durch ein Träger-Medium aufgenommen wird.

**42.** Computerprogramm nach Anspruch 41, wobei das Träger-Medium ein Aufzeichnungsmedium ist.

**43.** Computerprogramm nach Anspruch 41, wobei das Träger-Medium ein Übertragungsmedium ist.

**Revendications**

**1.** Système de communication comprenant un appareil de source, un appareil de destination et au moins un appareil intermédiaire (12), dans lequel l'appareil de source et le ou chaque appareil intermédiaire (12) comprennent chacun un émetteur, pouvant être utilisé pour émettre un signal de communication ou un signal déduit de celui-ci, dans une direction de communication vers ledit appareil de destination, et dans lequel l'appareil de destination et le ou chaque appareil intermédiaire (12) comprennent chacun un récepteur, pouvant être utilisé pour recevoir ledit signal de communication, ou un signal déduit de celui-ci, **caractérisé en ce que** ledit système de communication comprend des moyens de déduction d'indicateur (1) pouvant être utilisés pour déduire un indicateur de la qualité de service (QoS) subie par un ou plusieurs desdits récepteurs, et des moyens de détermination (3) pouvant être utilisés pour déterminer une mesure ou une variation d'une mesure de la bande passante attribuée à un ou plusieurs desdits émetteurs qui aura tendance à atteindre ou maintenir un équilibre entre une mesure de la QoS subie au niveau de l'appareil de destination et une mesure de la QoS subie au niveau du, au moins un des, appareil(s) intermédiaire(s).

**2.** Système de communication selon la revendication 1, comprenant en outre : des moyens de détection d'écart d'indicateur (2) pouvant être utilisés pour détecter un écart d'un indicateur déduit pour l'appareil de destination et/ou d'un indicateur déduit pour le, ou un des, appareil(s) intermédiaire(s) par rapport à une valeur souhaitée, dans lequel lesdits moyens de détermination (3) peuvent être mis en oeuvre à la suite de la détection d'un tel écart, pour déterminer une mesure ou une variation d'une mesure d'une bande passante attribuée à un ou plusieurs des émetteurs qui aura tendance à amener l'indicateur déduit pour ledit appareil de destination et/ou pour l'appareil intermédiaire (12) à ladite valeur souhaitée.

**3.** Système de communication selon la revendication 2, dans lequel les moyens de détermination (3) peuvent être mis en oeuvre, à la suite de la détection d'une variation dudit indicateur déduit pour l'appareil de destination, pour i) déterminer une mesure ou une variation d'une mesure d'une bande passante attribuée à l'émetteur de l'appareil intermédiaire à partir de laquelle ledit appareil de destination peut être utilisé pour recevoir le signal de communication, ou ii) déterminer une mesure ou une variation d'une mesure d'une bande passante attribuée à l'émetteur du, ou de chaque, appareil intermédiaire et de l'appareil de source qui aura tendance à amener ledit indicateur à ladite valeur souhaitée.

**4.** Système de communication selon la revendication 2 ou 3, dans lequel lesdits moyens de détermination (4) comprennent des premiers moyens de calcul (4) pouvant être utilisés, à la suite d'une détection d'un écart par rapport à ladite valeur souhaitée, pour calculer une nouvelle attribution de bande passante pour l'émetteur de l'appareil intermédiaire ou pour au moins l'un des appareils intermédiaires, qui aura tendance à amener ledit indicateur à ladite valeur souhaitée.

**5.** Système de communication selon la revendication 2, 3 ou 4, comprenant en outre i) des moyens de détection de déséquilibre (10) pouvant être utilisés pour détecter un déséquilibre entre un dit indicateur déduit pour chacun d'au moins deux : de l'appareil de destination et du, ou de chaque, appareil intermédiaire ; dans lequel lesdits moyens de détermination peuvent être mis en oeuvre à la suite de la détection d'un tel déséquilibre, pour déterminer une mesure ou une variation d'une mesure d'une bande passante attribuée à l'émetteur de l'appareil de source et/ou à l'émetteur du, ou d'au moins un des, appareil(s) intermédiaire(s) qui aura tendance à réduire ledit déséquilibre.

6.  Système de communication selon la revendication 5, dans lequel lesdits moyens de détermination comprennent des deuxièmes moyens de calcul (5) pouvant être utilisés, à la suite de la détection d'un tel déséquilibre, pour calculer une nouvelle attribution de bande passante pour l'appareil de source et/ou une nouvelle attribution de bande passante pour au moins l'un des appareils intermédiaires qui aura tendance à réduire ledit déséquilibre.

7.  Système de communication selon la revendication 1, le système comprenant en outre : des moyens de détection de déséquilibre (10) pouvant être utilisés pour détecter un déséquilibre entre un dit indicateur déduit pour chacun d'au moins deux : de l'appareil de destination et du, ou de chaque, appareil intermédiaire, dans lequel lesdits moyens de détermination peuvent être mis en oeuvre, à la suite de la détection d'un tel déséquilibre, pour déterminer une mesure ou une variation d'une mesure d'une bande passante attribuée à l'émetteur dudit appareil de source et/ou à l'émetteur d'au moins l'un des appareils intermédiaires, qui aura tendance à réduire ledit déséquilibre.

8.  Système de communication selon la revendication 7, dans lequel lesdits moyens de détermination comprennent des moyens de calcul (5) pouvant être utilisés, à la suite de la détection d'un tel déséquilibre, pour calculer une nouvelle attribution de bande passante pour l'appareil de source et/ou pour au moins l'un des appareils intermédiaires qui aura tendance à réduire ledit déséquilibre.

9.  Système de communication selon l'une quelconque des revendications précédentes, dans lequel les moyens de déduction d'indicateur comprennent des premiers moyens de déduction d'indicateur pouvant être utilisés pour déduire un indicateur de la qualité d'un signal de communication reçu au niveau de l'appareil de destination et/ou des deuxièmes moyens de déduction d'indicateur pouvant être utilisés pour déduire un indicateur de la qualité d'un signal de communication reçu au niveau du, ou d'au moins l'un des, appareil(s) intermédiaire(s).

10. Système de communication selon la revendication 9, dans lequel les premiers moyens de déduction d'indicateur sont prévus dans l'un dudit appareil de destination, dudit ou desdits appareils intermédiaires ou dudit appareil de source.

11. Système de communication selon la revendication 9 ou 10, dans lequel les deuxièmes moyens de déduction d'indicateur sont prévus dans l'un dudit appareil de destination, dudit ou desdits appareils intermédiaires ou dudit appareil de source.

12. Système de communication selon l'une quelconque des revendications précédentes, dans lequel l'appareil de source fait partie d'une station de base (11), la station de base pouvant être utilisée pour émettre un signal de communication, par l'intermédiaire du, ou de chaque, appareil intermédiaire, vers l'appareil de destination.

13. Système de communication selon l'une quelconque des revendications 1 à 11, dans lequel l'appareil de destination fait partie d'une station de base (11), l'appareil de source pouvant être utilisé pour émettre un signal de communication, par l'intermédiaire du, ou de chaque, appareil intermédiaire, vers la station de base.

14. Système de communication selon l'une quelconque des revendications précédentes, comprenant en outre des moyens de commande (7) pouvant être utilisés, à la suite de la détermination d'une mesure ou d'une variation de la mesure de la bande passante attribuée à un ou plusieurs des émetteurs, pour émettre une commande vers ledit appareil de source et/ou vers ledit ou lesdits appareils intermédiaires, selon le cas, en commandant une variation de la bande passante attribuée à l'émetteur de ceux-ci.

15. Système de communication selon la revendication 14, dans lequel lesdits moyens de commande (7) sont prévus dans la station de base (11).

16. Système de communication selon la revendication 14, dans lequel lesdits moyens de commande (7) sont prévus dans le, ou au moins un des, appareil(s) intermédiaire(s) (12).

17. Procédé d'émission d'un signal de communication d'un appareil de source vers un appareil de destination, par l'intermédiaire d'un ou de plusieurs appareils intermédiaires, dans lequel l'appareil de source et le ou chaque appareil intermédiaire comprennent chacun un émetteur, pouvant être utilisé pour émettre un signal de communication dans une direction de communication vers ledit appareil de destination, et dans lequel l'appareil de destination et le ou chaque appareil intermédiaire comprennent chacun un récepteur, pouvant être utilisé pour recevoir ledit signal de communication, ou un signal déduit de celui-ci, le procédé étant **caractérisé par** les étapes consistant à :

> i) déduire un ou plusieurs indicateurs de la qualité de service (QoS) subie au niveau d'un ou de plusieurs desdits récepteurs ;
> ii) détecter un écart du ou de l'un desdits indicateurs par rapport à une valeur souhaitée ;
> iii) déterminer, à la suite de la détection d'un tel écart, une mesure ou la variation de la mesure d'une bande passante attribuée à l'appareil de source et/ou au, ou au moins à un des, appareil(s) intermédiaire(s), qui aura tendance à amener ledit indicateur à ladite valeur souhaitée.

**18.** Procédé d'émission d'un signal de communication d'un appareil de source vers un appareil de destination, par l'intermédiaire d'un ou de plusieurs appareils intermédiaires, dans lequel l'appareil de source et le ou chaque appareil intermédiaire comprennent chacun un émetteur, pouvant être utilisé pour émettre un signal de communication dans une direction de communication vers ledit appareil de destination, et dans lequel l'appareil de destination et le ou chaque appareil intermédiaire comprennent chacun un récepteur, pouvant être utilisé pour recevoir ledit signal de communication, ou un signal déduit de celui-ci, le procédé étant **caractérisé par** les étapes consistant à :

> i) déduire un ou plusieurs indicateurs de la qualité de service subie par un ou plusieurs desdits récepteurs ;
> ii) détecter un déséquilibre entre un dit indicateur déduit pour chacun d'au moins deux : de l'appareil de destination et du, ou de chaque, appareil intermédiaire ; et
> iii) des moyens de détermination pouvant être utilisés, à la suite de la détection d'un tel déséquilibre, pour déterminer une mesure ou une variation d'une mesure d'une bande passante attribuée à l'appareil de source et/ou pour déterminer une mesure ou une variation d'une mesure d'une bande passante attribuée à l'émetteur d'au moins l'un des appareils intermédiaires, qui aura tendance à réduire ledit déséquilibre.

**19.** Procédé selon la revendication 17 ou 18, dans lequel ladite étape de déduction d'un indicateur de la qualité de service subie par ledit appareil de destination est effectuée dans des parties associées au, ou à un des, appareil (s) intermédiaire(s) ou dans des parties associées à station de base.

**20.** Procédé selon la revendication 17, 18 ou 19, dans lequel ladite étape de déduction d'un indicateur de la qualité de service subie par le, ou un des, appareil(s) intermédiaire(s) est effectuée dans des parties associées à la station de base ou dans des parties associées à l'appareil intermédiaire.

**21.** Station de base (11) comprenant un émetteur pouvant être utilisé pour émettre un signal de communication vers un appareil de destination, par l'intermédiaire d'au moins un appareil intermédiaire, **caractérisée en ce que** la station de base comprend des moyens de détermination (3) pouvant être utilisés pour déterminer une mesure ou une variation d'une mesure de la bande passante attribuée à ladite station de base ou au ou à un des, appareil(s) intermédiaire(s), qui aura tendance à atteindre ou maintenir un équilibre entre ;

> i) une mesure de la qualité de service (QoS) subie au niveau de l'appareil de destination ; et
> ii) une mesure de la qualité de service (QoS) subie au niveau du, ou d'au moins l'un des, appareil(s) intermédiaire (s).

**22.** Station de base (11) selon la revendication 21, comprenant en outre des moyens de réception d'indicateur (9), pouvant être utilisés pour recevoir des indicateurs de la qualité de service subie au niveau dudit appareil de destination et/ou du, ou d'au moins l'un des, appareil(s) intermédiaire(s), et des moyens de détection d'écart d'indicateur (2), pouvant être utilisés pour détecter un écart d'un dit indicateur par rapport à une valeur souhaitée, dans laquelle lesdits moyens de détermination (3) peuvent être utilisés, à la suite d'une détection d'un écart d'un dit indicateur par rapport à ladite valeur souhaitée, pour déterminer une mesure ou une variation d'une mesure de la bande passante attribuée à ladite station de base ou au, ou à un des, appareil(s) intermédiaire(s) qui aura tendance à amener ledit indicateur à ladite valeur souhaitée.

**23.** Station de base selon la revendication 22, comprenant en outre des moyens de réception de demande (6), pouvant être utilisés pour recevoir une demande pour une nouvelle attribution de bande passante pour le, ou l'un des, appareil (s) intermédiaire(s).

**24.** Station de base selon la revendication 22 comprenant en outre des moyens de déduction d'indicateur (1), pouvant être utilisés pour déduire un indicateur de la qualité de service (QoS) subie au niveau dudit appareil de destination et/ou du, ou d'au moins l'un des, appareil(s) intermédiaire(s).

**25.** Station de base selon la revendication 24, comprenant en outre des moyens de détection d'écart d'indicateur (2), pouvant être utilisés pour détecter un écart d'un dit indicateur déduit par lesdits moyens de déduction d'indicateur, par rapport à une valeur souhaitée, dans laquelle lesdits moyens de détermination (3) peuvent être utilisés, à la suite d'une détection d'un écart d'un dit indicateur par rapport à une valeur souhaitée, pour déterminer une mesure ou une variation d'une mesure de la bande passante attribuée à ladite station de base ou au, ou à l'un des, appareil(s) intermédiaire(s) qui aura tendance à amener ledit indicateur à ladite valeur souhaitée.

**26.** Station de base selon l'une quelconque des revendications 22 à 25, comprenant en outre des moyens de détection de déséquilibre (10), pouvant être utilisés pour détecter un déséquilibre entre un indicateur déduit pour chacun d'au moins deux : de l'appareil de destination et du, ou de chaque, appareil intermédiaire ; dans laquelle lesdits moyens de détermination (3) peuvent être utilisés, à la suite de la détection d'un tel déséquilibre, pour déterminer une mesure ou une variation d'une mesure d'une bande passante attribuée aux émetteurs de la station de base et/ou d'au moins l'un des appareils intermédiaires qui aura tendance à réduire ledit déséquilibre.

**27.** Station de base selon la revendication 22 ou 25, dans laquelle lesdits moyens de détermination (3) comprennent des premiers moyens de calcul (4) pouvant être utilisés, à la suite d'une détection d'un écart d'un dit indicateur par rapport à une valeur souhaitée, pour calculer la bande passante à attribuer à ladite station de base ou au, ou à l'un des, appareil(s) intermédiaire(s) qui aura tendance à amener ledit indicateur à ladite valeur souhaitée.

**28.** Station de base selon la revendication 26 ou 27, dans laquelle lesdits moyens de détermination (3) comprennent des deuxièmes moyens de calcul (5) pouvant être utilisés, à la suite d'une détection d'un déséquilibre par lesdits moyens de détection de déséquilibre, pour calculer une mesure ou une variation d'une mesure d'une bande passante attribuée aux émetteurs : de la station de base et/ou d'au moins l'un des appareils intermédiaires, qui aura tendance à réduire ledit déséquilibre.

**29.** Station de base (11) pouvant être utilisée pour recevoir, par l'intermédiaire d'au moins un appareil intermédiaire, un signal de communication émis par un appareil de source, **caractérisée en ce que** la station de base comprend des moyens de détermination pouvant être utilisés pour déterminer une mesure ou une variation d'une mesure de la bande passante attribuée au dit appareil de source ou au, ou à l'un des, appareil(s) intermédiaire(s), qui aura tendance à atteindre ou maintenir un équilibre entre :

i) une mesure de la qualité de service (QoS) subie au niveau de la station de base ; et
ii) une mesure de la qualité de service (QoS) subie au niveau du, ou d'au moins l'un des, appareil(s) intermédiaire (s).

**30.** Station de base selon la revendication 29, comprenant en outre des moyens de réception d'indicateur (9), pouvant être utilisés pour recevoir des indicateurs de la qualité du signal de communication reçu au niveau du, ou d'au moins l'un des, appareil(s) intermédiaire(s).

**31.** Station de base selon la revendication 29, comprenant en outre des moyens de déduction d'indicateur (1), pouvant être utilisés pour déduire un indicateur de la qualité de service (QoS) subie au niveau de ladite station de base et/ou du, ou d'au moins l'un des, appareil(s) intermédiaire(s).

**32.** Station de base selon la revendication 30 ou 31, comprenant en outre des moyens de détection d'écart d'indicateur (2), pouvant être utilisés pour détecter un écart d'un dit indicateur déduit par lesdits moyens de déduction d'indicateur, par rapport à une valeur souhaitée, dans laquelle lesdits moyens de détermination peuvent être utilisés, à la suite d'une détection d'un écart, d'un dit indicateur par rapport à une valeur souhaitée, pour déterminer une mesure ou une variation d'une mesure de la bande passante attribuée au dit appareil de source ou au, ou à l'un des, appareil(s) intermédiaire(s) qui aura tendance à amener ledit indicateur à ladite valeur souhaitée.

**33.** Station de base selon l'une quelconque des revendications 29 à 32, comprenant en outre des moyens de détection de déséquilibre (10), pouvant être utilisés pour détecter un déséquilibre entre un indicateur déduit pour chacun d'au moins deux : de la station de base et du, ou de chaque, appareil intermédiaire ; dans laquelle lesdits moyens de détermination peuvent être utilisés, à la suite de la détection d'un tel déséquilibre, pour déterminer une mesure ou une variation d'une mesure d'une bande passante attribuée aux émetteurs de l'appareil de source et/ou d'au moins l'un des appareils intermédiaires qui aura tendance à réduire ledit déséquilibre.

34. Station de base selon la revendication 32, dans laquelle lesdits moyens de détermination comprennent des premiers moyens de calcul (4) pouvant être utilisés, à la suite d'une détection d'un écart d'un dit indicateur par rapport à une valeur souhaitée, pour calculer la bande passante à attribuer au dit appareil de source ou au, ou à l'un des, appareil (s) intermédiaire(s) qui aura tendance à amener ledit indicateur à ladite valeur souhaitée.

35. Station de base selon la revendication 33, dans laquelle lesdits moyens de détermination comprennent des deuxièmes moyens de calcul (5) pouvant être utilisés, à la suite d'une détection d'un déséquilibre par lesdits moyens de détection de déséquilibre, pour calculer une mesure ou une variation d'une mesure d'une bande passante attribuée aux émetteurs : de l'appareil de source et/ou d'au moins l'un des appareils intermédiaires, qui aura tendance à réduire ledit déséquilibre.

36. Appareil intermédiaire (12) pour une utilisation dans un système de communication à sauts multiples, ledit appareil intermédiaire comprenant un émetteur et un récepteur et pouvant être utilisé pour recevoir un signal de communication d'un appareil de source ou d'un appareil intermédiaire précédent dans une direction de communication, et pour émettre ledit signal de communication, ou un signal déduit de celui-ci, vers un appareil de destination ou un appareil intermédiaire suivant dans une direction de communication, **caractérisé en ce que** ledit appareil intermédiaire comprend en outre :

des moyens de détermination (3) pouvant être utilisés pour déterminer une mesure ou une variation d'une mesure de la bande passante attribuée : au dit émetteur de l'appareil intermédiaire ; et/ou à un émetteur dudit appareil de source ; et/ou à un émetteur dudit appareil intermédiaire précédent, et/ou à un émetteur d'un appareil intermédiaire suivant, qui aura tendance à atteindre ou maintenir un équilibre entre une mesure de la qualité de service (QoS) subie au niveau d'au moins deux :
d'un récepteur de l'appareil de destination ;
du récepteur de l'appareil intermédiaire ;
d'un récepteur d'un appareil intermédiaire précédent ; et
d'un récepteur d'un appareil intermédiaire suivant.

37. Appareil intermédiaire selon la revendication 36, comprenant en outre des moyens de déduction d'indicateur, pouvant être utilisés pour déduire un indicateur de la qualité de service (QoS) subie au niveau de l'un quelconque desdits récepteurs.

38. Programme d'ordinateur qui, lorsqu'il est chargé dans un ordinateur, amène l'ordinateur à devenir la station de base du système de communication selon l'une quelconque des revendications 1 à 16 ou à devenir la station de base selon l'une quelconque des revendications 21 à 35.

39. Programme d'ordinateur qui, lorsqu'il est chargé sur un ordinateur, amène l'ordinateur à devenir l'appareil intermédiaire du système de communication selon l'une quelconque des revendications 1 à 16 ou à devenir l'appareil intermédiaire selon la revendication 36 ou 37.

40. Programme d'ordinateur qui, lorsqu'il est chargé dans un ordinateur, amène l'ordinateur à devenir un appareil de destination du système de communication selon l'une quelconque des revendications 1 à 16.

41. Programme d'ordinateur selon la revendication 38, 39 ou 40, supporté par un moyen de support.

42. Programme d'ordinateur selon la revendication 41, dans lequel ledit moyen de support est un moyen d'enregistrement.

43. Programme d'ordinateur selon la revendication 41, dans lequel ledit moyen de support est un moyen de transmission.

*Fig.1A*

*Fig.1B*

Fig.2A

Fig.2B

Fig.3

UE | RN | NB

Transmit RSS at UE to RN → Transmit RSS at UE & RN to NB → Receive RSS from UE & RN

Update the propagation loss for the RN-UE and NB-RN links ← Current NB & RN transmit power

Any change in NB-RN loss ? — No → Any change in RN-UE loss undetected by part 1 ? — No → Repeat algorithm

Yes / Yes ↓

Calculate new NB transmit power using appropriate equation ← Current RN Transmit power

Can NB power be satisfied — No → Revise NB transmit power

↓ Calculate modification required to RN transmit power

Yes ↓

Change NB transmit power (coincide with any RN change) ← Signal change in RN transmit power to RN

Change transmit power according to received command from NB

Repeat algorithm

*Fig.4*

UE (D)                               RN                                NB (S)

Indicator deviation detection means

2

Request relay

8

Request receiving means

6

Control means: First calc. means

7,4

calc.

## Fig.5A

UE (D)                                                 NB (S)

Indicator

Indicator receiving means

9

Indicator change detection means

2

Control means: First calc means

7,4

Command

## Fig.5B

NB | RN | UE

RSS @NB from RN does not meet target

↓

Calculate new RN transmit power (taking Into account limits)

↓

Change in target value ?

Yes → Calculate UE transmit power using appropriate equation

No

↓

Can UE power be satisfied ?

No → Revise UE transmit power and recalculate RN transmit power

Yes

↓

Signal change in RN power (and UE power) to RN

→ Change transmit power according to command (& forward UE command)

→ (Change transmit power according to command)

## Fig.6

EP 1 734 669 B1

Fig.7

Fig.8

UE | RN | NB

Transmit SINR at UE to RN → Transmit SINR at UE & RN to NB → Receive SINR from UE & RN

Are the two SINR's balanced ? —Yes→ Repeat algorithm

No

Calculate change required in NB transmit power to achieve balance

Can NB power be satisfied ? —No→ Revise NB transmit power

Yes

Calculate modification required to RN transmit power

Change NB transmit power (coincide with any RN change) ← Signal change in RN transmit power to RN

Repeat algorithm

Change transmit power according to received command from NB

*Fig.9*

71

Fig.10A

Fig.10B

Fig.10C

Fig.11

NB | RN

SINR @NB from
RN does not meet
target

↓

Calculate change
required in RN
transmit power

↓

Is
the change
an increase
in power
?
— Yes → 
Is
there a
block on further
increases
?
— Yes →
Ignore
change

No ↓

Signal change in
RN transmit
power
————————→ Receive request
for change

↓

Can
request be
satisfied
?
— Yes →
Revise the
request to
one that can
be met

No ↓

Change RN
transmit power

# Fig.12

UE            RN

Transmit SINR at
RN to NB

Receive request for
change in UE
transmit power

Forward change in
UE transmit power
to UE

Revise UE
transmit power

No

Can
UE power
be satisfied
?

Yes

Change UE
transmit power

Fig.13A

75

NB

```
┌─────────────────┐              ┌─────────────────┐
│  Receive SINR at│◄─────────────│  Monitor SINR   │
│     RN & NB     │              │      at NB      │
└─────────────────┘              └─────────────────┘
         │
         ▼
      ╱─────╲
     ╱  Are  ╲
    ╱ the two ╲         Yes      ┌─────────────────┐
   ╱  SINR's   ╲────────────────►│  Remove any     │
   ╲  balanced ╱                 │ outstanding block│
    ╲         ╱                  │ on increase in RN│
     ╲───────╱                   │  transmit power │
         │ No                    └─────────────────┘
         ▼                                │
┌─────────────────┐                       ▼
│ Calculate change│              ( Repeat algorithm )
│  required in UE │
│ transmit power to│
│  achieve balance│
└─────────────────┘
         │
         ▼
┌─────────────────┐
│ Signal change In│
│   UE transmit   │
│   power to UE   │
└─────────────────┘
         │
         ▼
      ╱─────╲
     ╱   Is  ╲
    ╱  change ╲        No       ┌─────────────────┐
   ╱ increase in╲───────────────►│  Remove any     │
   ╲ UE transmit╱                │ outstanding block│
    ╲  power   ╱                 │ on increase in RN│
     ╲   ?    ╱                  │  transmit power │
      ╲─────╱                    └─────────────────┘
         │                                │
         ▼                                ▼
┌─────────────────┐              ( Repeat algorithm )
│ Check SINR at RN│
│   once UE has   │
│   made change   │
└─────────────────┘
         │
         ▼
      ╱─────╲
     ╱  Has  ╲
    ╱ required ╲       No        ┌─────────────────┐
   ╱ change been╲──────────────► │  Place block on │
   ╲    made    ╱                │ further increase in│
    ╲    ?     ╱                 │ RN transmit power│
     ╲───────╱                   └─────────────────┘
         │ Yes
         ▼
┌─────────────────┐
│  Remove any     │
│ outstanding block│
│ or increase in RN│
│  transmit power │
└─────────────────┘
         │
         ▼
( Repeat algorithm )
```

# Fig.13B

**Fig.14**

UE

RN

NB

SINR @ UE
from RN does
not meet
target

Request a
change in
RN transmit
power

Receive request
for change

Can
request be
satisfied
?

No → Revise the request
to one that can
be met

Yes

Is
the change
an increase
in power
?

Yes → Is
there a
block on further
increases
?

Yes → Ignore request

No

No

Change RN
transmit power

*Fig.15A*

UE

RN

NB

Transmit
SINR at
UE to RN

Receive SINR
at UE & RN

Monitor SINR
at RN

Are
the two SINR's
balanced
?

Yes → Remove any
outstanding
block or
increase in RN
transmit power

↓ No

Repeat
algorithm

Calculate change
required in NB
transmit power
to achieve balance

Signal change in
NB transmit
power to NB

Can
NB power be
satisfied

No → Revise NB
transmit
power

↓ Yes

Is
change
increase
in NB transmit
power
?

No → Remove any
outstanding
block on
increase
in RN
transmit
power

↓ Yes

Repeat
algorithm

Check SINR at RN
once NB has
made change

Change NB
transmit power

Has
required
change been
made
?

No → Place
block on
further
increase in
RN transmit
power

↓ Yes

Remove any
outstanding block
on increase in RN
transmit power

Repeat algorithm

*Fig.15B*

NB             RN             UE

SINR @NB from RN does not meet target

↓

Request a change in RN transmit power → Receive request for change

↓

Can request be satisfied ? —No→ Revise the request to one that can be met

Yes ↓

Is the change an increase in power ? —Yes→ Is there a block on further increases ? —Yes→ Ignore request

No ↓      No ↓

Change RN transmit power

## Fig.16A

NB | RN | UE

Transmit SINR at NB to RN → Receive SINR at NB & RN ← Monitor SINR at RN

Are the two SINR's balanced? — Yes → Remove any outstanding block or increase in RN transmit power → Repeat algorithm

No ↓

Calculate change required in UE transmit power to achieve balance

Signal change in UE transmit power to UE → Can UE power be satisfied — No → Revise UE transmit power

Is change increase in UE transmit power? — No → Remove any outstanding block on increase in RN transmit power → Repeat algorithm

Yes (from Can UE power be satisfied) → Change UE transmit power

Yes ↓

Check SINR at RN once UE has made change ← Change UE transmit power

Has required change been made? — No → Place block on further increase in RN transmit power

Yes ↓

Remove any outstanding block on increase in RN transmit power

Repeat algorithm

*Fig.16B*

81

D

I

1 → Indicator derivation means

*Request*

2 → Indicator deviation detection means

Request receiving means ← 6

Determining means ← 3

*Request*

Control means ← 7

*Fig.17A*

D

I

1 → Indicator derivation means

2 → Indicator deviation detection means

3 → Determining means

*Request*

Control means ← 7

*Fig.17B*

*Fig.17C*

*Fig.18A*

UE | RN | NB

QoS @ UE does not meet target

↓

Request a change in RN BW allocation

↓

Can request be satisfied ?

— No → Revise the request to one that can be met

↓ Yes

Forward the request to the NB ← 

→ Receive request for change in RN BW allocation

↓

Determine degree of imbalance ← Reported QoS's (see part 2)

↓

Will change compound an existing QoS imbalance ?

— Yes → No change is signalled to RN

↓ No

Change BW allocation according to received command from NB ← Signal change in BW allocation at RN

*Fig. 18B*

| UE | RN | NB |
|----|----|----|

*Fig.18C*

| UE | RN | NB |
|---|---|---|
| Transmit QoS at UE to RN | Transmit QoS at UE & RN to NB | Receive QoS from UE & RN |

Are the two QoS's balanced ? — Yes — Repeat algorithm

No

Calculate change required in NB BW allocation to achieve balance

Can NB allocation change be satisfied ? — No — Revise NB BW allocation

Yes

Calculate modification required to RN BW allocation

Change NB BW allocation (coincide with any RN change)

Signal change in RN BW allocation to RN

Repeat algorithm

Change BW allocation according to received command from NB

## Fig.19A

| UE | RN | NB | |
|----|----|----|---|

Transmit QoS at UE to NB via RN → Transmit QoS at UE to NB → Receive QoS from UE → Derive/calculate QoS at RN

Are the two QoS's balanced ? — Yes → Repeat algorithm

No

Calculate change required in NB BW allocation to achieve balance

Can NB allocation change be satisfied ? — No → Revise NB BW allocation

Yes

Calculate modification required to RN BW allocation

Change NB BW allocation (coincide with any RN change) ← Signal change in RN BW allocation to RN

Repeat algorithm

Change BW allocation according to received command from NB

*Fig.19B*

```
UE          RN                    NB

      ┌──────────────┐      ┌──────────────┐
      │ Transmit QoS │ ───▶ │ Receive QoS  │
      │ at UE & RN   │      │ from UE & RN │
      │ to NB        │      │              │
      └──────────────┘      └──────────────┘
             ▲                     │
             │                     ▼
      ┌──────────────┐        ╱─────────╲          ┌─────────────────┐
      │Calculate/    │       ╱  Are the  ╲   Yes   │ Repeat algorithm│
      │derive QoS    │      ⟨ two QoS's   ⟩ ──────▶│                 │
      │at UE         │       ╲ balanced  ╱          └─────────────────┘
      └──────────────┘        ╲    ?   ╱
                               ╲─────╱
                                  │ No
                                  ▼
                          ┌──────────────┐
                          │Calculate     │
                          │change        │
                          │required in   │
                          │NB BW         │
                          │allocation to │
                          │achieve       │
                          │balance       │
                          └──────────────┘
                                  │
                                  ▼
                             ╱─────────╲
                            ╱   Can     ╲  No    ┌──────────────┐
                           ⟨ NB allocation⟩ ───▶ │ Revise NB BW │
                           ⟨ change be    ⟩      │ allocation   │
                            ╲ satisfied  ╱        └──────────────┘
                             ╲    ?    ╱                 │
                              ╲─────╱                    ▼
                                 │ Yes          ┌──────────────┐
                                 │              │ Calculate    │
                                 │              │ modification │
                                 │              │ required to  │
                                 │              │ RN BW        │
                                 │              │ allocation   │
                                 │              └──────────────┘
                                 │                     │
                                 ▼                     ▼
                          ┌──────────────┐    ┌────────────────┐
                          │ Change NB BW │    │ Signal change  │
                          │ allocation   │ ◀──│ in RN BW       │
                          │ (coincide    │    │ allocation to  │
                          │ with any RN  │    │ RN             │
                          │ change)      │    └────────────────┘
                          └──────────────┘
                                 │
                                 ▼
                          ┌──────────────┐
                          │Repeat        │
                          │algorithm     │
                          └──────────────┘

   ┌──────────────────┐
   │ Change BW        │ ◀────────────────────────
   │ allocation       │
   │ according to     │
   │ received command │
   │ from NB          │
   └──────────────────┘
```

*Fig.19C*

UE | RN | NB

```
          ┌─────────────────┐
          │ Calculate/derive│
          │ QoS at RN & UE  │
          └────────┬────────┘
                   │
                   ▼
              ╱─────────╲          Yes   ╭──────────────────╮
             ╱  Are the  ╲──────────────▶│ Repeat algorithm │
             ╲ two QoS's ╱               ╰──────────────────╯
              ╲balanced ╱
               ╲   ?   ╱
                ╲─────╱
                   │ No
                   ▼
          ┌─────────────────┐
          │ Calculate change│
          │ required in NB BW│
          │ allocation to   │
          │ achieve balance │
          └────────┬────────┘
                   │
                   ▼
              ╱─────────╲
             ╱    Can    ╲   No   ┌──────────────┐
            ╱NB allocation╲──────▶│ Revise NB BW │
            ╲ change be   ╱       │ allocation   │
             ╲ satisfied ╱        └──────┬───────┘
              ╲    ?    ╱                │
               ╲──────╱                  ▼
                   │           ┌──────────────┐
                   │ Yes       │  Calculate   │
                   │           │ modification │
                   │           │ required to RN│
                   │           │ BW allocation│
                   │           └──────┬───────┘
                   │                  │
                   ▼                  ▼
        ┌─────────────────┐  ┌──────────────┐
        │ Change NB BW    │  │Signal change in│
        │ allocation      │◀─│RN BW allocation│
        │(coincide with any│  │   to RN      │
        │ RN change)      │  └──────┬───────┘
        └────────┬────────┘         │
                 │                  │
                 ▼                  │
        ╭──────────────────╮        │
        │ Repeat algorithm │        │
        ╰──────────────────╯        │
```

┌─────────────────────┐
│   Change BW         │
│ allocation according│◀──────────────
│  to received        │
│ command from NB     │
└─────────────────────┘

*Fig.19D*

NB                                                                RN

QoS @NB does
not meet target

↓

Calculate change
required in RN
BW allocation

↓

Is
the change      Yes        Is
an increase in  ——→   there a          Yes
allocation           block on further   ——→
?                    increases
?

No                   ↓

Ignore
change

Signal change in    ————————————→   Receive request
RN BW allocation                      for change

↓

Can              Yes     Revise the
request be      ——→     request to
satisfied                one that can
?                          be met

No

↓                          ↓

Change RN BW
allocation

*Fig.20*

UE | RN | NB

Transmit QoS at RN to NB

Derive/ calculate QoS at NB

Receive QoS at RN & NB

Are the two QoS's balanced ?

Yes → Remove any outstanding block on increase in RN BW allocation → Repeat algorithm

No

Calculate change required in UE BW allocation to achieve balance

Signal change in UE BW allocation to UE

Forward change in UE BW allocation to UE

Receive request for change in UE BW allocation

Can UE change be satisfied

No → Revise UE BW allocation

Yes

Change UE BW allocation

Is change increase in UE BW allocation ?

No → Remove any outstanding block on increase in RN BW allocation → Repeat algorithm

Yes

Check QoS at RN once UE has made change

Has required change been made ?

No → Place block on further increase in RN BW allocation

Yes

Remove any outstanding block on increase in RN BW allocation

Repeat algorithm

# Fig.21A

UE     RN     NB

Fig.21B

UE                                          RN                                          NB

```
┌─────────────┐
│  QoS @ UE   │
│  does not   │
│ meet target │
└─────────────┘
       │
       ▼
┌─────────────┐      ┌─────────────────┐
│  Request a  │      │ Receive request │
│   change    │─────▶│   for change    │
│  in RN BW   │      └─────────────────┘
│ allocation  │              │
└─────────────┘              ▼
                          ◇ Can ◇       No   ┌──────────────────┐
                        ◇ request be ◇──────▶│ Revise the request│
                        ◇ satisfied  ◇       │ to one that can   │
                          ◇   ?   ◇          │     be met        │
                             │               └──────────────────┘
                           Yes                        │
                             ▼                         │
                          ◇  Is  ◇         ◇   Is   ◇
                        ◇ the change◇ Yes ◇ there a ◇ Yes  ┌──────────────┐
                        ◇an increase in◇──▶◇block on further◇──▶│Ignore request│
                        ◇ allocation ◇    ◇ increases ◇    └──────────────┘
                          ◇  ?  ◇          ◇   ?  ◇
                             │                 │
                           No                 No
                             ▼                 
                      ┌─────────────┐
                      │ Change RN BW│
                      │  allocation │
                      └─────────────┘
```

# Fig.22A

UE                                    RN                                    NB

```
┌─────────────────┐      ┌─────────────────┐
│  QoS @ UE does  │─────▶│ Derive/calculate│
│  not meet target│      │    QoS @ UE     │
└─────────────────┘      └─────────────────┘
         │
         ▼
┌─────────────────┐
│ Request a change│
│    in RN BW     │
│   allocation    │
└─────────────────┘
         │
         ▼
      ╱╲
     ╱  ╲              ┌─────────────────┐
    ╱ Can ╲     No     │Revise the request│
   ╱request be╲───────▶│ to one that can  │
   ╲satisfied ╱        │     be met       │
    ╲   ?   ╱          └─────────────────┘
     ╲    ╱                     │
      ╲  ╱                      │
       ╲╱                       │
        │Yes                    │
        ◀──────────────────────┘
        ▼
      ╱╲                    ╱╲
     ╱  ╲                  ╱  ╲
    ╱ Is ╲                ╱ Is ╲              ┌─────────────────┐
   ╱the change╲   Yes    ╱there a ╲    Yes    │                 │
  ╱an increase in╲──────▶╱block on further╲──▶│  Ignore request │
   ╲ allocation ╱        ╲ increases ╱        │                 │
    ╲    ?    ╱           ╲    ?   ╱          └─────────────────┘
     ╲     ╱               ╲     ╱
      ╲   ╱                 ╲   ╱
       ╲ ╱                   ╲ ╱
        │No                   │No
        ◀────────────────────┘
        ▼
┌─────────────────┐
│  Change RN BW   │
│   allocation    │
└─────────────────┘
```

# Fig.22B

UE · RN · NB

```
┌──────────┐      ┌──────────┐        ┌──────────────┐
│ Transmit │      │Receive QoS│       │Derive/calculate│
│  QoS at  │─────▶│ at UE & RN│◀──────│  QoS at RN   │
│ UE to RN │      └──────────┘        └──────────────┘
└──────────┘            │
                        ▼
                   ╱Are      ╲        ┌──────────────┐
                  ╱ the two   ╲  Yes  │ Remove any   │
                 ╱  QoS's      ╲─────▶│ outstanding  │
                 ╲ balanced   ╱       │  block on    │
                  ╲   ?      ╱        │ increase in RN│
                   ╲       ╱          │ BW allocation │
                      │No             └──────────────┘
                      ▼                      │
              ┌──────────────┐               ▼
              │Calculate change│        ╭──────────╮
              │ required in NB │        │  Repeat  │
              │BW allocation to│        │ algorithm │
              │ achieve balance│        ╰──────────╯
              └──────────────┘
                      │
                      ▼
              ┌──────────────┐                    ╱Can NB   ╲      ┌────────┐
              │ Signal change in│                ╱ allocation╲ No  │ Revise │
              │ NB BW allocation│───────────────╲ be satisfied╱───▶│ NB BW  │
              │    to NB      │                  ╲          ╱      │allocation│
              └──────────────┘                    ╲  ?    ╱        └────────┘
                      │                               │                 │
                      ▼                              Yes                │
                   ╱Is      ╲      ┌──────────┐       │                 │
                  ╱ change   ╲  No │Remove any│       │                 │
                 ╱increase in ╲───▶│outstanding│      │                 │
                 ╲NB allocation╱    │ block on │      │                 │
                  ╲   ?      ╱      │ increase │       │                 │
                   ╲       ╱        │  in RN   │       │                 │
                      │             │allocation│       │                 │
                     Yes            └──────────┘       │                 │
                      │                   │            │                 │
              ┌──────────────┐       ╭──────────╮      ▼                 │
              │ Check QoS at RN│      │  Repeat  │ ┌──────────────┐      │
              │  once NB has   │◀- - -│ algorithm │ │ Change NB BW │◀─────┘
              │  made change   │      ╰──────────╯  │  allocation  │
              └──────────────┘                      └──────────────┘
                      │
                      ▼
                   ╱Has      ╲       ┌──────────┐
                  ╱ required  ╲  No  │  Place   │
                 ╱ change been ╲────▶│ block on │
                 ╲   made     ╱      │ further  │
                  ╲   ?      ╱       │increase in│
                   ╲       ╱         │  RN BW   │
                      │              │allocation│
                     Yes             └──────────┘
                      ▼                    │
              ┌──────────────┐             │
              │  Remove any  │             │
              │outstanding block│          │
              │on increase in RN│          │
              │ BW allocation  │           │
              └──────────────┘             │
                      │                    │
                      ▼                    │
               ╭──────────────╮            │
               │Repeat algorithm│◀─────────┘
               ╰──────────────╯
```

*Fig.23A*

96

UE | RN | NB

```
Receive QoS        Derive/calculate
at UE & RN    ◄──  QoS at RN & UE
```

Are the two QoS's balanced ? ──Yes──► Remove any outstanding block on increase in RN BW allocation ──► Repeat algorithm

│No

Calculate change required in NB BW allocation to achieve balance

│

Signal change in NB BW allocation to NB ──────────────► Can NB allocation be satisfied ──No──► Revise NB BW allocation

│ Yes

Is change increase in NB allocation ? ──No──► Remove any outstanding block on increase in RN allocation ──► Repeat algorithm

│Yes

Check QoS at RN once NB has made change ◄──────── Change NB BW allocation

│

Has required change been made ? ──No──► Place block on further increase in RN BW allocation

│Yes

Remove any outstanding block on increase in RN BW allocation

│

Repeat algorithm ◄───────

*Fig.23B*

NB                                    RN                                    UE

QoS @ NB
does not
meet target

Request a
change
in RN BW
allocation

Receive request
for change

Can
request be
satisfied
?

No → Revise the request
to one that can
be met

Yes

Is
the change
an increase in
allocation
?

Yes →

Is
there a
block on further
increases
?

Yes → Ignore request

No

No

Change RN BW
allocation

*Fig.24A*

NB                                    RN                                    UE

Request a change
in RN BW
allocation ◄─── QoS @ NB does
not meet target

Receive request
for change

Can
request be
satisfied
? ──No──► Revise the request
to one that can
be met

Yes

Is
the change
an increase in
allocation
? ──Yes──► Is
there a
block on further
increases
? ──Yes──► Ignore request

No                        No

Change RN BW
allocation

*Fig.24B*

**NB** | **RN** | **UE**

Transmit QoS at NB to RN → Receive QoS at NB & RN ← Derive/calculate QoS at RN

Are the two QoS's balanced? — Yes → Remove any outstanding block on increase in RN BW allocation → Repeat algorithm

No ↓

Calculate change required in UE BW allocation to achieve balance

Signal change in UE BW allocation to UE → Can allocation be satisfied? — No → Revise UE BW allocation

Yes ↓

Is change increase in UE BW allocation? — No → Remove any outstanding block on increase in RN BW allocation → Repeat algorithm

Yes ↓

Check QoS at RN once UE has made change ← – – – Change UE BW allocation

Has required change been made? — No → Place block on further increase in RN BW allocation

Yes ↓

Remove any outstanding block on increase in RN BW allocation

Repeat algorithm

*Fig.25A*

100

NB | RN | UE

```
Receive QoS        ◄──  Derive/calculate
at NB & RN              QoS at RB & NB
     │
     ▼
  ╱Are╲              Remove any
 ╱the two QoS's╲ Yes  outstanding
╱  balanced  ╲──────► block on
╲     ?     ╱        increase in RN
 ╲   ╱                BW allocation
  No                     │
  │                      ▼
  ▼                 ╭──────────╮
Calculate change   │  Repeat   │
required in UE      │ algorithm │
BW allocation to    ╰──────────╯
achieve balance
     │
     ▼
Signal change in                    ╱Can╲          Revise
UE BW allocation ──────────────────► allocation be ─No─► UE BW
to UE                               ╲satisfied╱         allocation
     │                               ╲   ?  ╱
     ▼                                 Yes
  ╱Is╲              Remove any          │
 ╱change╲           outstanding
╱increase╲    No    block on
╲in UE BW╱─────────► increase
 ╲allocation        in RN BW
  ╲  ?  ╱            allocation
     │                  │
   Yes                  ▼
     │             ╭──────────╮
Check QoS at RN    │  Repeat   │
once UE has        │ algorithm │
made change   ◄╌╌╌╌╰──────────╯    Change UE BW ◄────
     │                              allocation
     ▼
  ╱Has╲
 ╱required╲   No    Place
╱change been╲──────► block on
╲  made   ╱          further
 ╲  ?  ╱             increase in
     │               RN BW
   Yes               allocation
     │                  │
Remove any              │
outstanding block       │
on increase in RN       │
BW allocation           │
     │                  │
     ▼                  │
╭──────────────╮        │
│Repeat algorithm│◄──────
╰──────────────╯
```

*Fig.25B*

SINR at cell edge for UE connected to RN for RN at 0.5 of cell radius
(two cell analysis)

SINR at the UE as a function of NB and RN transmit
power with RN positioned at 0.5 cell radius.

## Fig.26A

SINR at cell edge for UE connected to RN for RN at 0.75 of cell
radius (two cell analysis)

SINR at the UE as a function of NB and RN transmit
power with RN positioned at 0.75 cell radius.

## Fig.26B

SINR at cell edge for UE connected to RN (RN at 0.5 of cell radius of
1867m)(AF with TDD)

NodeB Transmit Power (dBm)                    Relay Node Transmit Power (dBm)

SINR at the UE as a function of NB and RN transmit
power with RN positioned at 0.5 cell radius.

# Fig.27A

SINR at cell edge for UE connected to RN (RN at 0.75 of cell radius
of 1867m)(AF with TDD)

NodeB Transmit Power (dBm)

Relay Node Transmit Power (dBm)

SINR at the UE as a function of NB and RN transmit
power with RN positioned at 0.75 cell radius.

*Fig.27B*

Optimal NB transmit power as a function of RN transmit power for a
regenerative relay for FDD and TDD and for each deployment scenario.

# Fig.28A

Optimal NB transmit power as a function of RN transmit power for a non-
regenerative relay for FDD for each deployment scenario.

Fig.28B

Optimal NB transmit power as a function of RN transmit power for a non-regenerative relay for FDD for each deployment scenario.

*Fig.28C*

*Fig.29A*    Gain in average packet call throughput for deployment scenario 1.

*Fig.29B*    Gain in average packet call throughput for deployment scenario 2.

Optimal NB transmit power as a function of RN transmit power for a non-regenerative relay for TDD for each deployment scenario where it is assumed the NB to UE link has a 3 dB gain compared with the other links.

*Fig.30*

Fig 31

**EP 1 734 669 B1**

**Patent documents cited in the description**

- US 20050063356 A
- WO 2004107693 A